(19) Europäisches Patentamt
European Patent Office
Office européen des brevets

(11) **EP 2 306 746 A2**

(12) **EUROPEAN PATENT APPLICATION**

(43) Date of publication:
**06.04.2011 Bulletin 2011/14**

(51) Int Cl.:
**H04N 13/00** *(2006.01)*

(21) Application number: **10183147.7**

(22) Date of filing: **30.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **30.09.2009 JP 2009226538**

(71) Applicants:
• **Sony Corporation**
  **Tokyo (JP)**

• **Sony Computer Entertainment Inc.**
  **Tokyo (JP)**

(72) Inventors:
• **Takiduka, Hiroshi**
  **Tokyo (JP)**
• **Takenaka, Koichi**
  **Tokyo (JP)**

(74) Representative: **Thévenet, Jean-Bruno et al**
  **Cabinet Beau de Loménie**
  **158, rue de l'Université**
  **75340 Paris Cédex 07 (FR)**

(54) **Transmitter, transmitting method, receiver and receiving method**

(57) A transmitter (102) includes: a transmission data generation section generating transmission data having a format of video field period as a unit including a horizontal blanking period, a vertical blanking period and an active video period which are separated by vertical synchronization signals, the active video period including a main video area and an auxiliary video area; and a transmission data transmitting section (81) transmitting, in a differential signal format, the transmission data generated in the transmission data generation section to an external device (202) through a transmission path (300) and through a plurality of channels. The transmission data generation section allocates picture data to the main video area and allocates, to the auxiliary video area, additional information relating to the picture data allocated to the main video area.

FIG. 4

EP 2 306 746 A2

**Description**

BACKGROUND OF THE INVENTION

1. Field of the Invention

The present invention relates to a transmitter, a transmitting method, a receiver and a receiving method, and more specifically to a transmitter and the like handling transmission data including an auxiliary video area in addition to a main video area in an active video period.

2. Description of the Related Art

In recent years, for example, interfaces such as HDMI (High Definition Multimedia Interface) have been spreading as communications interfaces transmitting, at high speed, digital video signals, that is, uncompressed (baseband) digital video signals (picture data) and digital audio signals (audio data) accompanying the video signals from a game machine, a DVD (Digital Versatile Disc) recorder, a set-top box or any other AV source (Audio Visual source) to a television receiver, a projector or any other display. For example, the HDMI specification is described in detail in High-Definition Multimedia Interface Specification Version 1.4, June 5 2009.

SUMMARY OF THE INVENTION

In the above-described HDMI specification, a method of transmitting a 3D picture is defined. For example, in a "Frame packing" format, a space for timing adjustment called "Active Space" is inserted between a left-eye picture (L) and a right-eye picture (R), and the space is not used for any purpose at present.

Moreover, in the above-described HDMI specification, "InfoFrame" is defined as a means of transmitting information. However, the InfoFrame has such an issue that synchronization between information and pictures is not ensured, and they are not synchronized with frame accuracy. Further, the data size of the InfoFrame is limited to 32 bytes, so large data is not transmitted.

Moreover, in the case where a 3D picture is outputted from a source device such as a BD (Blu-ray Disc) player to a sink device such as a television receiver (TV), subtitles, a menu (such as a menu of a BD), and OSD (such as display of BD player information or a menu) are superimposed on the 3D picture, and then the 3D picture is outputted.

However, considering that a process such as correction or picture quality enhancement of the 3D picture is performed in the television receiver, it is desirable to separately transmit the 3D picture and a picture layer to be superimposed such as subtitles, a menu or OSD, correct the 3D pictures, and then superimpose the picture layer on the 3D picture. In 3D picture processing, necessity for determining a correlation between right and left pictures is high. Therefore, when another picture layer is superimposed, accuracy of determining the correlation is pronouncedly reduced to cause a decline in quality of picture correction.

For example, it is desirable to effectively use an active space. Moreover, it is desirable to allow large data to some extent to be transmitted in synchronization with a picture with frame accuracy. Further, it is desirable to improve quality of a process such as correction or picture quality enhancement of a 3D picture.

According to an embodiment of the invention, there is provided a transmitter including: a transmission data generation section generating transmission data having a format of video field period as a unit including a horizontal blanking period, a vertical blanking period and an active video period which are separated by vertical synchronization signals, the active video period including a main video area and an auxiliary video area; and a transmission data transmitting section transmitting, in a differential signal format, the transmission data generated in the transmission data generation section to an external device through a transmission path and through a plurality of channels. The transmission data generation section allocates picture data to the main video area and allocates, to the auxiliary video area, additional information relating to the picture data allocated to the main video area.

In the transmitter according to the embodiment of the invention, the transmission data generation section generates transmission data having a format of video field period as a unit including a horizontal blanking period, a vertical blanking period and an active video period which are separated by vertical synchronization signals. The active video period includes the main video area and the auxiliary video area. Then, picture data is allocated to the main video area, and the additional information relating to the picture data allocated to the main video area is allocated to the auxiliary video area. The transmission data transmitting section transmits, in a differential signal format, the transmission data generated in the transmission data generation section to an external device through a transmission path and through a plurality of channels.

The picture data allocated to the main video area is, for example, stereoscopic picture data for displaying a stereoscopic picture (a 3D picture). For example, the stereoscopic picture data includes left-eye picture data and right-eye picture data. Alternatively, for example, the stereoscopic picture data includes two-dimensional picture data and depth information corresponding to each pixel

For example, a sync pattern with a fixed value may be provided in a leading part of the additional information allocated to the auxiliary video area. In this case, on a reception side, such a fact that additional information is allocated to the auxiliary video area and a starting position of the additional information are easily recognized by detecting the sync pattern with a fixed value in the auxiliary video area, and the additional information is easily extracted.

For example, the additional information allocated to the auxiliary video area includes one or both of information data and second picture data. For example, the information data is subjected to error correction coding by a triple modular redundancy method or the like. For example, the information data is data of information relating to a picture (for example, information display of a source device, an OSD picture such as a menu) to be superimposed on a picture described by the picture data allocated to the main video area. In this case, information relating to the picture is, for example, information such as a display position, transmittance, a color pallet or display offset.

Further, for example, the information data is data of information relating to subtitles to be superimposed on a picture based on the picture data allocated to the main video area. In this case, information relating to the picture is information of a character string, information of a display area (a display position, a display size or the like), information of a display direction, or the like.

For example, the information data is shooting-related data relating to a shooting procedure to obtain the left-eye picture data and the right-eye picture data allocated to the main video area. In this case, the shooting-related data is information of a distance between a left camera and a right camera, information of directions of the left camera and the right camera, information of view angles of the left camera and the right camera, or the like. The shooting-related data is used for estimation of necessary depth information for correction of the stereoscopic picture data on a reception side.

In the embodiment of the invention, the active video period includes the main video area and the auxiliary video area, and the additional information relating to the picture data allocated to the main video area is allocated to the auxiliary video area. Therefore, for example, when an active space is utilized as the auxiliary video area, the active space is allowed to be effectively utilized.

Moreover, in the embodiment of the invention, the auxiliary video area is included in the active video period with the main video area. Therefore, additional information with a large size to some is allowed to be allocated to the auxiliary video area, and the additional information is allowed to be transmitted in synchronization with the picture data allocated to the main video area with frame accuracy.

Further, in the embodiment of the invention, the active video period includes the main video and the auxiliary video area, and the additional information relating to the picture data allocated to the main video area is allocated to the auxiliary video area. Therefore, data of subtitles or information relating to a picture based on the picture data allocated to the main video area to be superimposed on the picture is allowed to be allocated to the auxiliary video area and then be transmitted. Therefore, for example, subtitles, a menu picture or the like is allowed to be superimposed on a reception side after performing a process such as correction or picture quality enhancement of a 3D picture, and an improvement in quality of such a process is achievable.

For example, the transmitter according to the embodiment of the invention may further include an information obtaining section obtaining information from the external device through the transmission path, the information relating to the additional information to be allocated to the auxiliary video and the transmission data generation section may allocate the additional information to the auxiliary video area based on the information obtained by the information obtaining section. For example, the information obtaining section may read out and obtain the information relating to the additional information from a memory section, for example, an EDIDROM included in the external device.

For example, information relating to the additional information represents presence or absence of a function of effectively utilizing the additional information allocated to the auxiliary video area, and the transmission data generation section allocates the additional information to the auxiliary video area in the case where the information obtained by the information obtaining section indicates the presence of the function of effectively utilizing the information allocated to the auxiliary video area. In this case, an unnecessary process of transmitting information allocated to the auxiliary video area to the external device even though the external device does not have the function of effectively utilizing information allocated to the auxiliary video area is removable.

The transmitter according to the embodiment of the invention may further include an information transmitting section transmitting information to the external device through the transmission path, the information relating to the additional information. For example, the information transmitting section transmits the information relating to the additional information to the external device through the transmission path by inserting the information into a blanking period of the transmission data.

For example, information relating to the additional information represents whether or not the additional information is allocated to the auxiliary video area. In this case, on the reception side, based on the information, whether or not the additional information is allocated to the auxiliary video area is easily recognized. Moreover, for example, the information relating to the additional information represents a data format of the additional information allocated to the auxiliary video area. In this case, on the reception side, based on the information, the data format of the additional information is easily recognized. Further, for example, the information relating to the additional information represents length of a space provided in a leading part of the auxiliary video area. In this case, on the reception side, based on the information, the length of the space provided in the leading part of the auxiliary video area is easily recognized.

In the transmitter according to the embodiment of the invention, for example, data in the main video area and data in the auxiliary video area each may include three channels of 8-bit data per pixel, and the transmission data transmitting section may perform clipping on the data in the main video area and then transmit a resultant, whereas transmit the data in the auxiliary video area without performing clipping. In this case, it is necessary to specify "no-clip" in the auxiliary video area, and the operation of the data transmitting section is complicated, but in the case of a limited range picture, 8-bit data constituting additional information is allowed to be allocated to the auxiliary video area as it is, thereby data generation is easy.

In the transmitter according to the embodiment of the invention, for example, data in the main video area and data in the auxiliary video area each may include three channels of 8-bit data per pixel, and the transmission data generation section may allocate bits of two 8-bit data of the additional information to bits other than a most significant bit (MSB) of each of the three channels of 8-bit data in the auxiliary video area, respectively, and set an inversion value, which is a logical inversion of a value of a secondarily significant bit, into the MSB, and the transmission data transmitting section may perform clipping on data in the main video area as well as data in the auxiliary video area and then transmit the data. In this case, the operation of data generation section is complicated, but in the case of a limited range picture, it is not necessary to specify "no-clip" in the auxiliary video area, and the operation of data transmitting section is easy.

According to an embodiment of the invention, there is provided a receiver including: a transmission data receiving section receiving transmission data in a differential signal format from an external device through a transmission path and through a plurality of channels, the transmission data having a format of video field period as a unit including a horizontal blanking period, a vertical blanking period and an active video period which are separated by vertical synchronization signals, the active video period including a main video area where picture data is allocated and an auxiliary video area where additional information relating to the picture data allocated to the main video area is allocated, and a data extracting section extracting and obtaining the picture data from the main video area of the transmission data received by the transmission data receiving section, and extracting and obtaining the additional information from the auxiliary video area of the transmission data received by the transmission data receiving section.

In the receiver according to the embodiment of the invention, the transmission data receiving section receives transmission data in a differential signal format from an external device through a transmission path and through a plurality of channels. The transmission data having a format of video field period as a unit including a horizontal blanking period, a vertical blanking period and an active video period which are separated by vertical synchronization signals is received. The active video period includes the main video area and the auxiliary video area, and the picture data is allocated to the main video area, and the additional information relating to the picture data allocated to the main video area is allocated to the auxiliary video area. The data extracting section extracts and obtains the picture data from the main video area of the received transmission data, and an obtains the additional information from the auxiliary video area of the received transmission data.

In the receiver according to the embodiment of the invention, for example, the picture data includes left-eye picture data and right-eye picture data for displaying a stereoscopic picture, and in the case where the additional information includes shooting-related data relating to a shooting procedure to obtain the left-eye picture data and the right-eye picture data, a picture data correcting section may correct the left-eye picture data and the right-eye picture data based on the shooting-related data. For example, the picture data correcting section estimates depth information with use of the shooting-related data, and the left-eye picture data and the right-eye picture data are corrected based on the depth information and information of a screen size. In this case, the shooting-related data is synchronized with the left-eye picture data and the right-eye picture data with frame accuracy, and high-quality correction is allowed.

Moreover, in the receiver according to the embodiment of the invention, for example, the picture data includes left-eye picture data and right-eye picture data for displaying a stereoscopic picture, and the receiver may further include a picture shift section shifting a left-eye picture described by the left-eye picture data and a right-eye picture described by the right-eye picture data in a horizontal direction, and the additional information may include necessary pixel data accompanying shift adjustment in the picture shift section. In this case, even if the left-eye picture and the right-eye picture are shifted, an effective picture is allowed to be displayed without displaying a black picture in response to the shift.

Further, for example, in the receiver according to the embodiment of the invention, the additional information may include second picture data and specification information, and the receiver according to the embodiment of the invention may further include: a plurality of buffers; a picture data writing section writing the second picture data into a specified position in a specified one of the buffers based on the specification information; and a picture data superimposing section superimposing the picture data extracted and obtained from the main video area of the transmission data and the second picture data written in the plurality of buffers at a predetermined ratio. In this case, different types of picture data included in the additional information are allowed to be written in different buffers, respectively, and a process such as updating of picture data is allowed to be efficiently performed.

According to the embodiment of the invention, an active space is allowed to be utilized effectively. Moreover, according to the embodiment of the invention, data with a large size to some extent is allowed to be transmitted in synchronization with frame accuracy. Further, according to the embodiment of the invention, an improvement in quality of a process such as correction or picture quality enhancement of a 3D picture is achievable.

Other and further objects, features and advantages of the invention will appear more fully from the following description.

BRIEF DESCRIPTION OF THE DRAWINGS

FIG. 1 is a block diagram illustrating a configuration example of an AV system according to an embodiment of the invention.

FIG. 2 is a block diagram illustrating a configuration example of a disc player (a source device) configuring the AV system.

FIG. 3 is a block diagram illustrating a configuration example of a television receiver (a sink device) configuring the AV system.

FIG. 4 is a block diagram illustrating a configuration example of an HDMI transmitting section (an HDMI source) and an HDMI receiving section (an HDMI sink).

FIG. 5 is a block diagram illustrating a configuration example of an HDMI transmitter configuring an HDMI transmitting section and an HDMI receiver configuring an HDMI receiving section.

FIG. 6 is a diagram illustrating a configuration example of TMDS transmission data (in the case where picture data of 1920 pixels widex1080 lines high is transmitted).

FIG. 7 is a table illustrating a pin assignment (Type-A) of an HDMI terminal where an HDMI cable between a source device and a sink device is connected.

FIG. 8 is a diagram illustrating a Frame packing 3D video format as one TMDS transmission data configuration of stereoscopic picture data.

FIG. 9 is a diagram illustrating a Frame packing 3D video format for an interlaced format as one TMDS transmission data configuration of stereoscopic picture data.

FIG. 10 is a diagram illustrating, in the case where a plurality of active space areas are included, integration of the active space areas.

FIGs. 11A to 11C are diagrams each illustrating, in the case where integration of three active space areas is used, an example of additional information layout in a first line of or the active space areas.

FIG. 12 is a table illustrating a size example in each frame of an active space area in the Frame packing 3D video format.

FIG. 13 is a diagram illustrating data in respective pixel positions in three TMDS channels in the case where an active space area is not used for additional information transmission.

FIG. 14 is a diagram illustrating data in respective pixel positions in three TMDS channels in the case where an active space area is used for additional information transmission.

FIG. 15 is a table illustrating data layout in an active space area in the case where additional information includes both of information data and picture data.

FIG. 16 is a table illustrating data layout in an active space area in the case where additional information includes only information data.

FIG. 17 is a table illustrating data layout in an active space area in the case where additional information includes only picture data.

FIG. 18 is a diagram illustrating an extended HDMI Vendor Specific InfoFrame packet for 3D transmission.

FIG. 19 is a table illustrating a configuration example of an information area header.

FIG. 20 is a table illustrating a configuration example of an information block.

FIG. 21 is a table illustrating a configuration example of a picture area header.

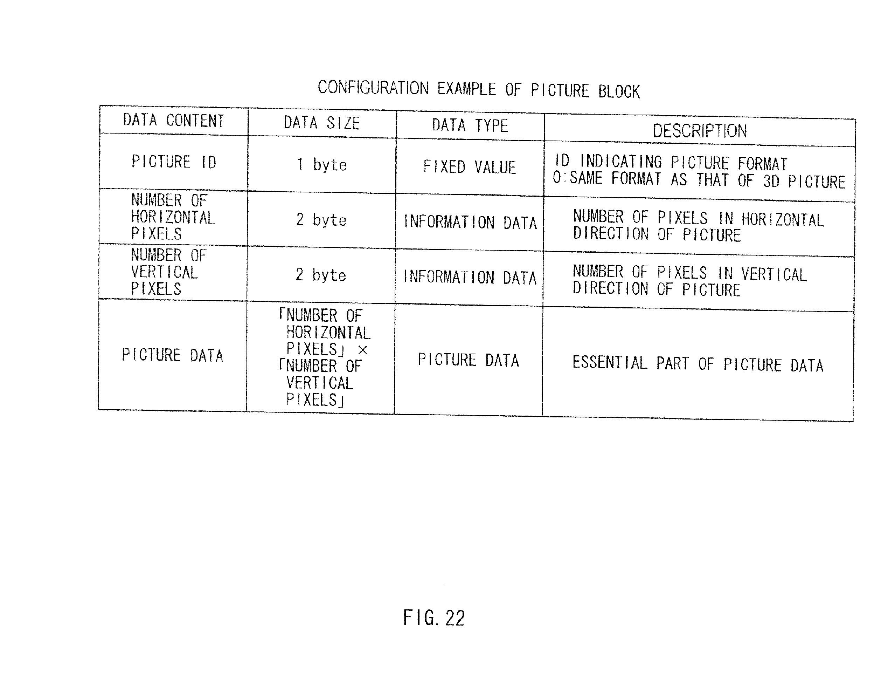

FIG. 22 is a table illustrating a configuration example of a picture block.

FIG. 23 is a table illustrating video color component ranges defined by the HDMI specification.

FIG. 24 is a diagram for describing that bit 7 has an inversion value which is a logical inversion of a value of bit 6 in a method of storing data in a limited range.

FIG. 25 is a diagram for describing bit configurations of three TMDS channels #0, #1 and #2 of pixel values (8-bit data) in the method of storing data in a limited range.

FIG. 26 is a diagram illustrating an encoding process on a transmission side and a decoding process on a reception side in the case where a triple modular redundancy method is used.

FIG. 27 is a diagram for describing that in the case where a triple modular redundancy method is used, common data is provided as three channels #0, #1 and #2 of 8-bit data per pixel on a transmission side.

FIG. 28 is a schematic diagram illustrating a data flow in the case where picture data such as subtitles, a menu or OSD is superimposed on stereoscopic picture data in a disc player and then the stereoscopic picture data is transmitted to a television receiver.

FIG. 29 is a schematic diagram illustrating a data flow in the case where picture information such as subtitles, a menu or OSD is transmitted with use of an active space area to a television receiver separately from stereoscopic picture data, and the stereoscopic picture data is corrected in the television receiver, and then the picture data such as subtitles, a menu or OSD is superimposed on the corrected stereoscopic picture data.

FIG. 30 is a diagram for describing that when depth information is estimated, a correlation between an L picture and an R picture is determined with respect to a lien in a horizontal direction.

FIG. 31 is a diagram for describing estimation of depth information.

FIG. 32 is a diagram illustrating estimated depth information of a picture.

FIG. 33 is a diagram illustrating a direction $\alpha$ and a view angle $\beta$ (in a horizontal direction) of a camera and a distance d between cameras.

FIG. 34 is a diagram illustrating numbers W and H of dots in width and height of a picture, respectively.

FIG. 35 is a diagram illustrating an angle $\gamma 1$ between the direction (axis) of a camera and a line connecting between an object and the camera with respect to an object A displayed in a position (x1, y1) in a left-eye (L) picture.

FIG. 36 is a diagram for describing a modeling process in the case where stereoscopic picture data is corrected.

FIG. 37 is a diagram for describing that when stereoscopic picture data is corrected, a screen size and a viewing distance are used as parameters.

FIG. 38 is a flowchart schematically illustrating a flow of reconstruction of stereoscopic picture data in a CPU.

FIG. 39 is a reference diagram for describing a method of calculating a view angle and an aspect ratio of a camera.

FIG. 40 is a diagram illustrating that when the display position of each of a left-eye (L) picture and a right-eye (R) picture is shifted, in the case where picture data for an edge part on a side opposite to a side where the picture is shifted is not present, black is displayed in the edge part with a width corresponding to a shifted amount.

FIG. 41 is a diagram for describing that picture data for OSD display allocated to an active space area is written to a virtual buffer called "picture plane" included in a television receiver.

FIG. 42 is a diagram illustrating an operation performed in a television receiver in which picture data for OSD display written to a given picture plane is $\alpha$-blended with stereoscopic picture data (transmission video) transmitted at a timing of a next frame.

FIG. 43 is a diagram illustrating a configuration example of information stored in a payload of an information block.

FIG. 44 is a diagram illustrating a configuration example of a picture descriptor (12 bytes).

FIG. 45 is a diagram used for description of each field of a picture descriptor.

FIG. 46 is a table illustrating a list of operations in an operation field (3 bits) of a picture descriptor.

FIG. 47 is a diagram illustrating a configuration example of a picture descriptor in the case where an operation "NOP" is performed.

FIG. 48 is a diagram illustrating a configuration example of a picture descriptor in the case where an operation '"Clear Picture Plane" is performed.

FIG. 49 is a diagram illustrating a configuration example of a picture descriptor in the case where an operation "Clear Active Video Area" is performed.

FIG. 50 is a diagram illustrating a configuration example of a picture descriptor in the case where an operation "Put Picture Horizontally N+1" is performed.

FIG. 51 is a diagram illustrating an example of an operation by a picture descriptor performing the operation "Put Picture Horizontally N+1".

FIG. 52 is a diagram illustrating a configuration example of a picture descriptor in the case where an operation "Put Picture Vertically N+1" is performed.

FIG. 53 is a diagram illustrating an example of an operation by a picture descriptor performing the operation "Put Picture Vertically N+1".

FIG. 54 is a diagram illustrating a configuration example of a picture descriptor in the case where an operation "Put Picture Magnification N+1" is performed.

FIG. 55 is a diagram illustrating an example of an operation by a picture descriptor performing the operation "Put Picture Magnification N+1".

FIG. 56 is a diagram illustrating a configuration example of E-EDID data.

FIG. 57 is a diagram illustrating a data configuration example of a Vendor Specific area.

FIG. 58 is a diagram for describing configuration information in the case where rendered contents of a frame memory for picture output are transmitted to an HDMI transmitting section.

DETAILED DESCRIPTION OF THE PREFERRED EMBODIMENTS

A preferred embodiment will be described in detail below referring to the accompanying drawings. Descriptions will be given in the following order.

    1. Embodiment
    2. Modifications

1. Embodiment

Configuration example of AV system

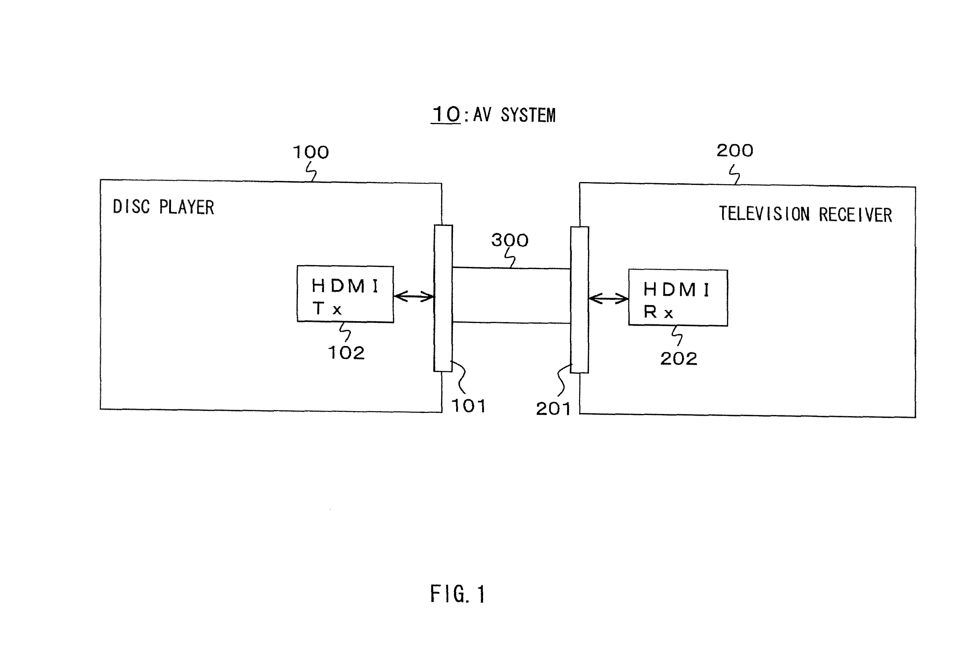

FIG. 1 illustrates a configuration example of an AV (Audio Visual) system according to an embodiment. An AV system 10 includes a disc player 100 as an HDMI source device and a television receiver 200 as an HDMI sink device.

The disc player 100 and the television receiver 200 are connected to each other through an HDMI cable 300. The disc player 100 includes an HDMI terminal 101 connected to an HDMI transmitting section (HDMI TX) 102. The television receiver 200 includes an HDMI terminal 201 connected to an HDMI receiving section (HDMI RX) 202. An end of the HDMI cable 300 is connected to the HDMI terminal 101 of the disc player 100, and the other end of the HDMI cable 300 is connected to the HDMI terminal 201 of the television receiver 200.

In the AV system 10 illustrated in FIG. 1, uncompressed (baseband) picture data (a video signal) is transmitted from the disc player 100 to the television receiver 200 through the HDMI cable 300. The television receiver 200 displays a picture based on the picture data transmitted from the disc player 100. Moreover, uncompressed (baseband) audio data (an audio signal) is transmitted from the disc player 100 to the television receives 200 through the HDMI cable 300. The television receiver 200 outputs audio based on the audio data transmitted from the disc player 100.

In the case where the picture data transmitted from the disc player 100 to the television receiver 200 is two-dimensional picture data (2D picture data), the television receiver 200 displays a two-dimensional picture. Moreover, in the case where the picture data transmitted from the disc player 100 to the television receiver 200 is three-dimensional picture data (3D picture data) for displaying a stereoscopic picture, that is, stereoscopic picture data, the television receiver 200 displays a stereoscopic picture. For example, the stereoscopic picture data includes left-eye picture data and right-eye picture data. Moreover, for example, the stereoscopic picture data includes two-dimensional picture data and depth information (depth data) corresponding to each pixel (MPEG-C system).

The stereoscopic picture data transmitted from the disc player 100 to the television receiver 200 is allocated to an active video period of TMDS transmission data. The active video period includes an active space area in addition to an active video area where the stereoscopic picture data is allocated. In the embodiment, additional information relating to the stereoscopic picture data is allocated to the active space area, and the additional information is transmitted together with the stereoscopic picture data from the disc player 100 to the television receiver 200. The television receiver 200 performs a process using the additional information. In this case, the active video area configures a main video area, and the active space area configures an auxiliary video area. The additional information will be described in detail later.

Configuration example of disc player

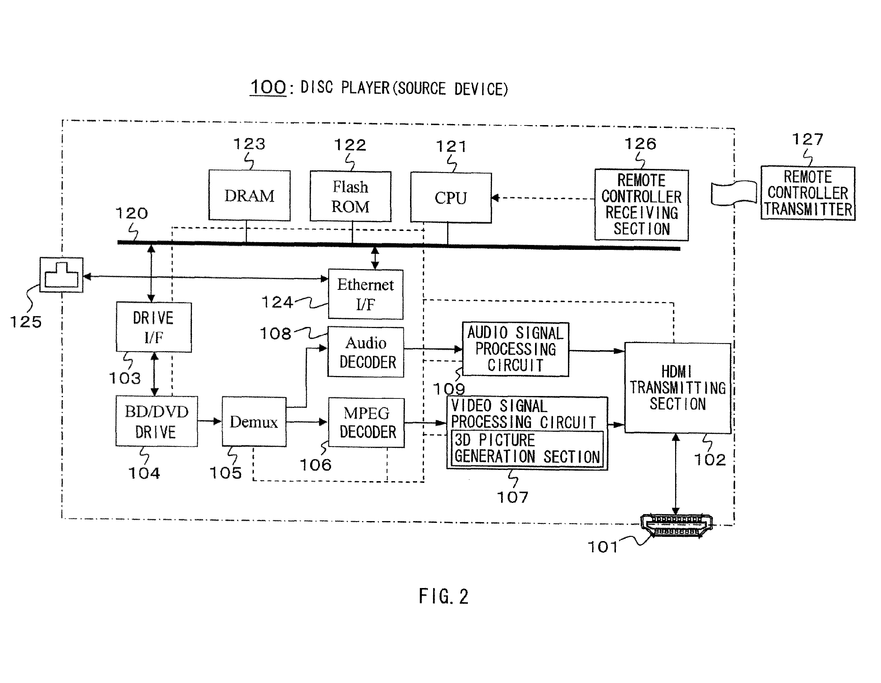

FIG. 2 illustrates a configuration example of the disc player 100. The disc player 100 includes the HDMI terminal 101, the HDMI transmitting section 102, a drive interface 103 and a BD (Blu-ray Disc)/DVD (Digital Versatile Disc) drive 104. The disc player 100 further includes a demultiplexer 105, an MPEG decoder 106, a video signal processing circuit 107, an audio decoder 108 and an audio signal processing circuit 109.

The disc player 100 further includes an internal bus 120, a CPU 121, a flash ROM 122 and a DRAM 123. The disc player 100 further includes an Ethernet interface (Ethernet I/F) 124, a network terminal 125, a remote controller receiving section 126 and a remote controller transmitter 127. Note that "Ethernet" is a registered trademark. The CPU 121, the flash ROM 122, the DRAM 123, the Ethernet interface 124 and the drive interface 103 are connected to the internal bus 120.

The CPU 121 controls an operation of each component of the disc player 100. The flash ROM 122 stores control software and data. The DRAM 123 forms a work area of the CPU 121. The CPU 121 extracts software or data read out from the flash ROM 122 to the DRAM 123 to activate the software, and controls each component of the disc player 100. The remote controller receiving section 126 receives a remote control signal (a remote control code) transmitted from the remote controller transmitter 127 to supply the remote control signal to the CPU 121. The CPU 121 controls each component of the disc player 100 in response to the remote control code.

The BD/DVD drive 104 records content data onto a BD or a DVD (not illustrated) as a disc recording medium, or reproduces the content data from the BD or the DVD. The BD/DVD drive 104 is connected to the internal bus 120 through the drive interface 103.

The demultiplexer 105 extracts an elementary stream such as video or audio from reproduced data of the BD/DVD drive 104. The MPEG decoder 106 performs a decoding process on a video elementary stream extracted by the demultiplexer 105 to obtain uncompressed (baseband) picture data.

The video signal processing circuit 107 performs, if necessary, a scaling process (a resolution conversion process), a graphics data superimposing process or the like on the picture data obtained in the MPEG decoder 106 to supply the picture data to the HDMI transmitting section 102. Moreover, in the case where the picture data obtained in the MPEG decoder 106 is stereoscopic picture data, the video signal processing circuit 107 performs processing on the stereoscopic picture data into a state corresponding to a transmission system in a 3D picture generation section. In the processing, the stereoscopic picture data is allocated to the active video area of the active video period of the TMDS transmission data.

The audio decoder 108 performs a decoding process on an audio elementary stream extracted by the demultiplexer 105 to obtain uncompressed (baseband) audio data. The audio signal processing circuit 109 performs, if necessary, an audio quality adjustment process on the audio data obtained in the audio decoder 108 to supply the audio data to the HDMI transmitting section 102.

The HDMI transmitting section 102 transmits uncompressed picture (video) data and uncompressed audio data from the HDMI terminal 101 by communication based on the HDMI. In this case, the picture data and the audio data are transmitted through TMDS channels of the HDMI, so the picture data and the audio data are packed and outputted from the HDMI transmitting section 102 to the HDMI terminal 101. The HDMI transmitting section 102 will be described in detail later.

In the case where the stereoscopic picture data is transmitted from the disc player 100 to the television receiver 200 in the above-described manner, an active space area is included in the active video period of TMDS transmission data in addition to the active video area where the stereoscopic picture data is allocated. In the embodiment, additional information relating to the stereoscopic picture data is allocated to the active space area in the video signal processing circuit 107 or the HDMI transmitting section 102.

The operation of the disc player 100 illustrated in FIG. 2 will be briefly described below. The reproduced data of the BD/DVD drive 104 is supplied to the demultiplexer 105, and is separated into elementary streams such as video and audio. A video elementary stream separated by the demultiplexer 105 is supplied to the MPEG decoder 106 to be decoded, thereby uncompressed picture data is obtained. Moreover, an audio elementary stream separated by the demultiplexer 105 is supplied to the audio decoder 108 to be decoded, thereby uncompressed audio data is obtained.

The picture data obtained in the MPEG decoder 106 is supplied to the HDMI transmitting section 102 through the video signal processing circuit 107. Moreover, the audio data obtained in the audio decoder 108 is supplied to the HDMI transmitting section 102 through the audio signal processing circuit 109. Then, the picture data and the audio data are transmitted from the HDMI terminal 101 to an HDMI cable through the TMDS channels of the HDMI.

In the case where the picture data obtained in the MPEG decoder 106 is stereoscopic picture data, the 3D picture generation section of the video signal processing circuit 107 performs processing on the stereoscopic picture data into a state corresponding to a transmission system, and then the stereoscopic picture data is supplied to the HDMI transmitting section 102. Moreover, in the case where the picture data is stereoscopic picture data, in the video signal processing circuit 107 or the HDMI transmitting section 102, if necessary, additional information relating to the stereoscopic picture data is allocated to the active space area of the active video period.

Configuration example of television receiver

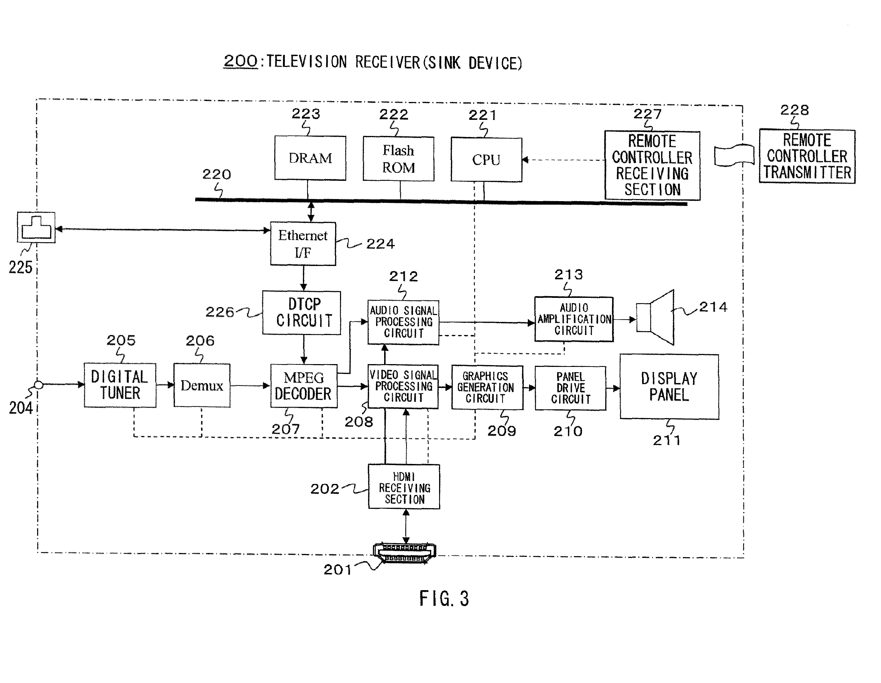

FIG. 3 illustrates a configuration example of the television receiver 200. The television receiver 200 includes the HDMI terminal 201 and the HDMI receiving section 202. The television receiver 200 further includes an antenna terminal 204, a digital tuner 205, a demultiplexer 206, an MPEG decoder 207, a video signal processing circuit 208, a graphics generation circuit 209, a panel drive circuit 210 and a display panel 211.

The television receiver 200 further includes an audio signal processing circuit 212, an audio amplification circuit 213, speakers 214, an internal bus 220, a CPU 221, a flash ROM 222 and a DRAM 223. The television receiver 200 further includes an Ethernet interface (Ethernet I/F) 224, a network terminal 225, a DTCP circuit 226, a remote controller receiving section 227 and a remote controller transmitter 228.

The antenna terminal 204 is a terminal for allowing a TV broadcasting signal received by a receiving antenna (not illustrated) to be inputted thereinto. The digital tuner 205 processes the TV broadcasting signal inputted into the antenna terminal 204 to output a predetermined transport stream corresponding to a channel selected by a user. The demultiplexer 206 extracts a partial TS (Transport Stream) (a TS packet of video data, a TS packet of audio data) corresponding to the channel selected by the user from the transport stream obtained in the digital tuner 205.

Moreover, the demultiplexer 206 extracts PSI/SI (Program Specific Information/Service Information) from the transport stream obtained in the digital tuner 205 to output the PSI/SI to the CPU 221. In the transport stream obtained in the digital tuner 205, a plurality of channels are multiplexed. A process of extracting a partial TS of an arbitrary channel from the transport stream in the demultiplexer 206 is allowed by obtaining information of a packet ID (PID) of the arbitrary channel from the PSI/SI (PAT/PMT).

The MPEG decoder 207 performs a decoding process on a video PES (Packetized Elementary Stream) packet configured of the TS packet of the video data obtained in the demultiplexer 206 to obtain picture data. Moreover, the MPEG decoder 207 performs a decoding process on an audio PES packet configured of the TS packet of the audio data obtained in the demultiplexer 206 to obtain audio data.

The HDMI receiving section (a HDMI sink) 202 receives uncompressed (baseband) picture (video) data and audio data supplied to the HDMI terminal 201 through the HDMI cable 300 by communication based on the HDMI. The HDMI receiving section 202 will be described in detail later.

The video signal processing circuit 208 and the graphics generation circuit 209 perform, if necessary, a scaling process (a resolution conversion process) or a graphics data superimposing process on the picture data obtained in the MPEG decoder 207 or the HDMI receiving section 202. Moreover, in the case where the picture data received by the HDMI receiving section 202 is stereoscopic picture data, the video signal processing circuit 208 performs a necessary process for displaying a stereoscopic picture on the stereoscopic picture data.

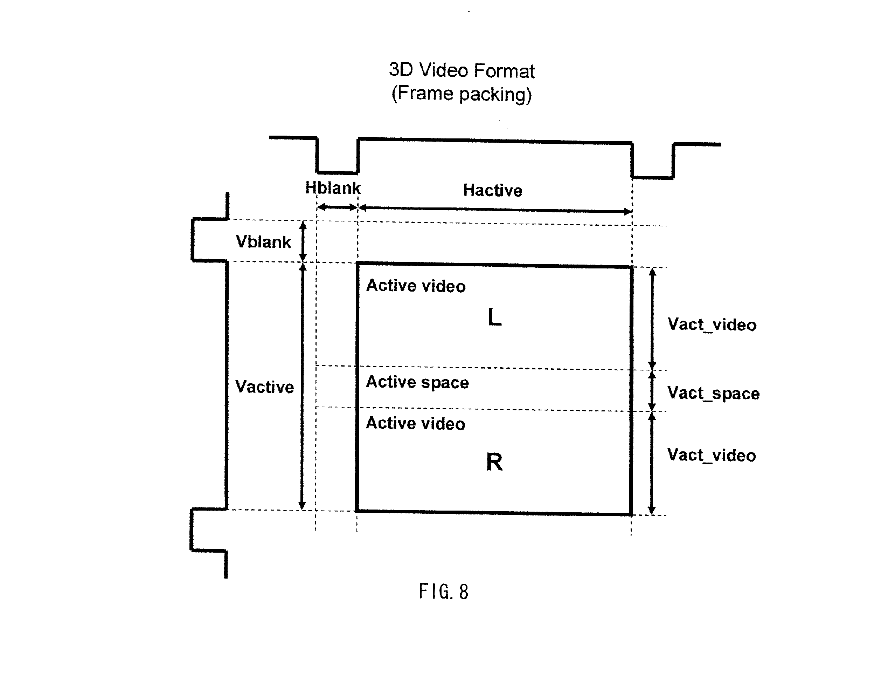

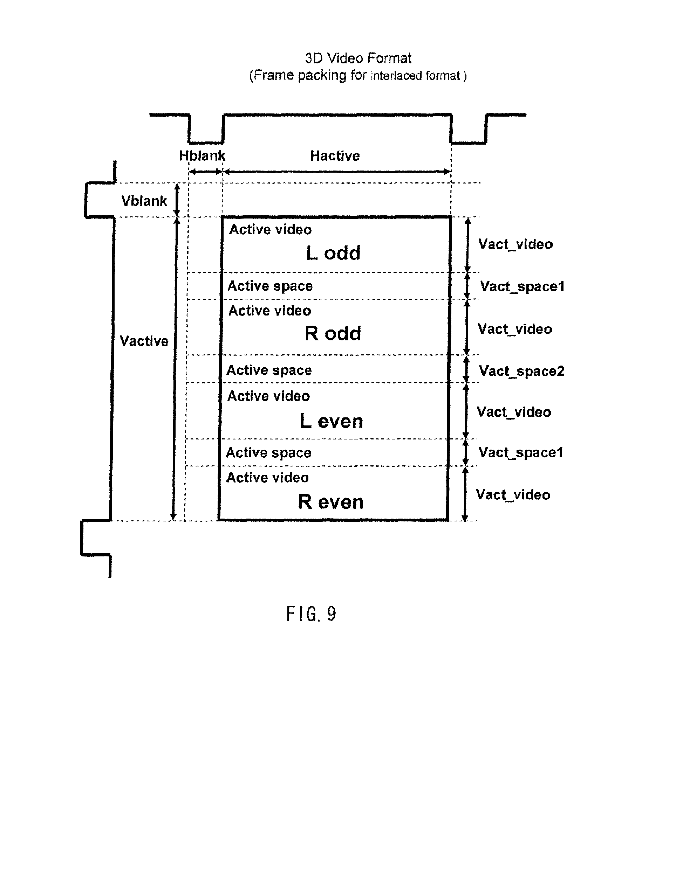

In this case, the HDMI receiving section 202 or the video signal processing circuit 208 extracts and obtains stereoscopic picture data from an active video area of 3D video format transmission data (refer to FIGs. 8 and 9 which will be described later). Moreover, in this case, the HDMI receiving section 202 or the video signal processing circuit 208 extracts and obtains additional information relating to the stereoscopic picture data from an active space area of the transmission data. The HDMI receiving section 202 or the video signal processing circuit 208 configures a data extraction section.

Moreover, in the case where the picture data received by the HDMI receiving section 202 is stereoscopic picture data, the video signal processing circuit 208 performs processes such as a process of superimposing subtitles or an OSD or a process of correcting stereoscopic picture data based on additional information relating to the stereoscopic picture data.

The panel drive circuit 210 drives the display panel 211 based on video (picture) data outputted from the graphics generation circuit 209. The display panel 211 is configured of, for example, an LCD (Liquid Crystal Display), a PDP (Plasma DisplayPanel) or the like.

The audio signal processing circuit 212 performs necessary processes such as D/A conversion on the audio data obtained in the MPEG decodes 207 or the audio data received by the HDMI receiving section 202. The audio amplification circuit 213 amplifies an audio signal outputted from the audio signal processing circuit 212 to supply the amplified audio signal to the speaker 214.

The CPU 221 controls an operation of each component of the television receiver 200. The flash ROM 222 stores control software and data. The DRAM 223 forms a work area of the CPU 221. The CPU 221 extracts software or data read out from the flash ROM 222 to the DRAM 223 to activate the software, and controls each component of the television receiver 200.

The remote controller receiving section 227 receives a remote control signal (a remote control code) transmitted from the remote controller transmitter 228 to supply the remote control signal to the CPU 221. The CPU 221 controls each component of the television receiver 200 in response to the remote control code.

The network terminal 225 is a terminal connecting to a network, and is connected to the Ethernet interface 224. The CPU 221, the flash ROM 222, the DRAM 223 and the Ethernet interface 224 are connected to the internal bus 220. The DTCP circuit 226 decodes encrypted data supplied from the network terminal 225 to the Ethernet interface 224.

The operation of the television receiver 200 illustrated in FIG. 3 will be briefly described below. The TV broadcasting signal inputted into the antenna terminal 204 is supplied to the digital tuner 205. The digital tuner 205 processes the TV broadcasting signal, outputs a predetermined transport stream corresponding to a channel selected by a user, and supplies the predetermined transport stream to the demultiplexer 206. In the demultiplexer 206, a partial TS (a TS packet of video data, a TS packet of audio data) corresponding to the channel selected by the user is extracted from the transport stream, and the partial TS is supplied to the MPEG decoder 207.

The MPEG decoder 207 performs a decoding process on a video PES packet configured of the TS packet of the video data to obtain picture data. The video signal processing circuit 208 and the graphics generation circuit 209 perform, if necessary, a scaling process (a resolution conversion process), a graphics data superimposing process or the like on the picture data, and then the picture data is supplied to the panel drive circuit 210. Therefore, a picture corresponding to the channel selected by the user is displayed on the display panel 211.

Moreover, the MPEG decoder 207 performs a decoding process on an audio PES packet configured of the TS packet of the audio data to obtain audio data. The audio signal processing circuit 212 performs a necessary process such as D/A conversion on the audio data, and the audio data is amplified in the audio amplification circuit 213, and then the audio data is supplied to the speaker 214. Therefore, audio corresponding to the channel selected by the user is outputted from the speaker 214.

Further, encrypted content data (picture data, audio data) supplied from the network terminal 225 to the Ethernet interface 224 is decoded by the DTCP circuit 226, and then the decoded content data is supplied to the MPEG decoder 207. From then on, the television receiver 200 operates in the same manner as that at the time of receiving the above-described TV broadcasting signal, and a picture is displayed on the display panel 211, and audio is outputted from the speaker 214.

The HDMI receiving section 202 obtains picture data and audio data transmitted from the disc player 100 connected to the HDMI terminal 201 through the HDMI cable 300. The picture data is supplied to the video signal processing circuit 208. The audio data is supplied to the audio signal processing circuit 212. From then on, the television receiver 200 operates in the same manner as that at the time of receiving the above-described TV broadcasting signal, and a picture is displayed on the display panel 211, and audio is outputted from the speaker 214.

In the case where the picture data received by the HDMI receiving section 202 is stereoscopic picture data, the video signal processing circuit 208 performs a process such as a process of superimposing subtitles or OSD or a process of correcting stereoscopic picture data based on additional information relating to the stereoscopic picture data. Moreover, in this case, the video signal processing circuit 208 generates picture data for displaying a stereoscopic picture. Therefore, the stereoscopic picture is displayed on the display panel 211.

Configuration examples of HDMI transmitting section and HDMI receiving section

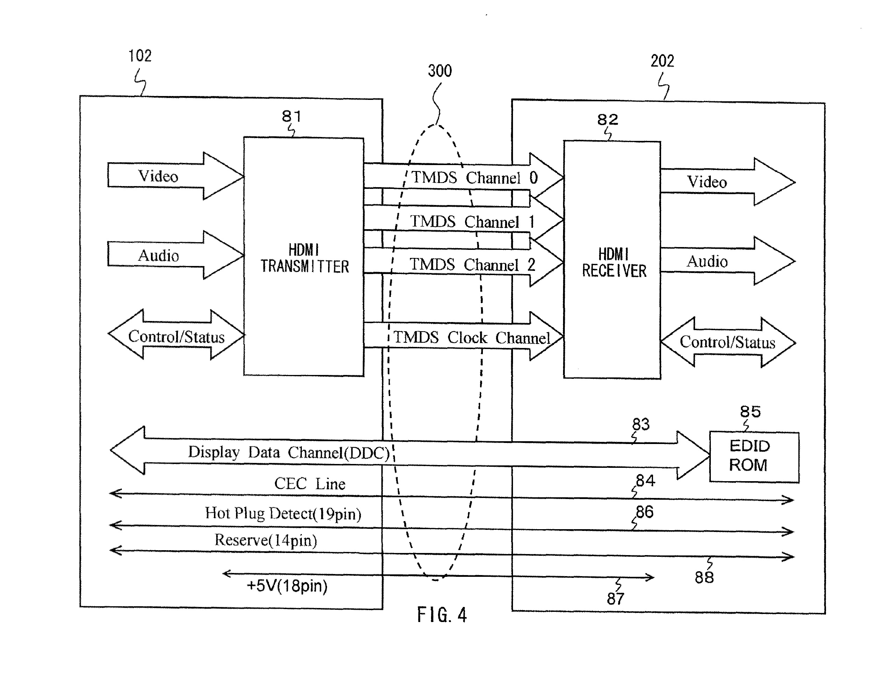

FIG. 4 illustrates configuration examples of the HDMI transmitting section (an HDMI source) 102 of the disc player 100 and the HDMI receiving section (an HDMI sink) of the television receiver 200 in the AV system 10 in FIG. 1.

The HDMI transmitting section 102 transmits, in an effective picture period (hereinafter referred to as "active video period" as appropriate), a differential signal corresponding to pixel data of an uncompressed one-screen picture in one direction to the HDMI receiving section 202 through a plurality of channels. The effective picture period is a period obtained by subtracting a horizontal blanking period and a vertical blanking period from a period between one vertical synchronization signal and a subsequent vertical synchronization signal. Moreover, the HDMI transmitting section 102 transmits, in the horizontal blanking period or the vertical blanking period, a differential signal corresponding audio data or control data accompanying at least a picture, other auxiliary data or the like in one direction to the HDMI receiving section 202 through a plurality of channels.

Transmission channels of an HDMI system configured of the HDMI transmitting section 102 and the HDMI receiving section 202 include the following transmission channels, that is, three TMDS channels #0 to #2 as transmission channels for serially transmitting pixel data and audio data in one direction from the HDMI transmitting section 102 to the HDMI receiving section 202 in synchronization with a pixel clock. The transmission channels further include a TMDS clock channel as a transmission channel for transmitting a pixel clock.

The HDMI transmitting section 102 includes a HDMI transmitter 81. The transmitter 81 converts, for example, pixel data of an uncompressed picture into a corresponding differential signal, and serially transmits the differential signal in one direction to the HDMI receiving section 202 connected through the HDMI cable 300 through a plurality of channels, that is, the three TMDS channels #0, #1 and #2.

Moreover, the transmitter 81 converts audio data accompanying the uncompressed picture, as well as necessary control data, other auxiliary data or the like into respective corresponding differential signals, and serially transmits the differential signals in one direction to the HDMI receiving section 202 through the three TMDS channels #0, #1 and #2.

Further, the transmitter 81 transmits a pixel clock, in synchronization with pixel data to be transmitted through the three TMDS channels #0, #1 and #2, to the HDMI receiving section 202, which is connected through the HDMI cable 300, through the TMDS clock channel. Through each TMDS channel #i (i=0, 1, 2), 10-bit pixel data is transmitted during one clock of the pixel clock.

The HDMI receiving section 202 receives, in the active video period, a differential signal corresponding to pixel data transmitted in one direction from the HDMI transmitting section 102 through a plurality of channels. Moreover, the HDMI receiving section 202 receives, in the horizontal blanking period or in the vertical blanking period, a differential signal corresponding to audio data or control data transmitted in one direction from the HDMI transmitting section 102 through a plurality of channels.

In other words, the HDMI receiving section 202 includes an HDMI receiver 82. The HDMI receiver 82 receives the differential signal corresponding to the pixel data and the differential signal corresponding to the audio data ar the control data transmitted in one direction from the HDMI transmitting section 102 through the TMDS channels #0, #1 and #2. In this case, the HDMI receiver 82 receives the differential signals in synchronization with a pixel clock transmitted from the HDMI transmitting section 102 through the TMDS clock channel.

The transmission channels of the HDMI system include, in addition to the above-described TMDS channels #0 to #2 and the TMDS clock channel, transmission channels called a DDC (Display Data Channel) 83 and a CEC line 84. The DDC 83 is configured of two signal lines (not illustrated) included in the HDMI cable 300. The DDC 83 is used for the HDMI transmitting section 102 to read out E-EDID (Enhanced Extended Display Identification Data) from the HDMI receiving section 202.

In other words, the HDMI receiving section 202 includes, in addition to the HDMI receiver 82, an EDID ROM (Read only Memory) 85 storing the E-EDID which is capability information on the capability (Configuration/capability) thereof. The HDMI transmitting section 102 reads out the E-EDID from the HDMI receiving section 202 which is connected thereto through the HDMI cable 300, through the DDC 83 in response to, for example, a request from the CPU 121 (refer to FIG. 2). The HDMI transmitting section 102 transmits the read E-EDID to the CPU 121. The CPU 121 stores the E-EDID into the flash ROM 122 or the DRAM 123.

The CPU 121 is allowed to recognize setting of the capability of the HDMI receiving section 202 based on the E-EDID. For example, the CPU 121 recognizes a format (resolution, a frame rate, an aspect ratio or the like) of picture data with which the television receiver 200 including the HDMI receiving section 202 is compatible. In the embodiment, CPU 121 recognizes, based on information relating to additional information included in the E-EDID, for example, whether or not the television receiver 200 including the HDMI receiving section 202 has a function of effectively utilizing additional information allocated to the active space area.

The CEC line 84 is configured of one signal line (not illustrated) included in the HDMI cable 300, and is used to carry out two-way communications of data for control between the HDMI transmitting section 102 and the HDMI receiving section 202. The CEC line 84 constitutes a control data line.

Moreover, the HDMI cable 300 includes a line (an HPD line) 86 connected to a pin called HPD (Hot Plug Detect). The source device is allowed to detect connection of the sink device with use of the line 86. The HDMI cable 300 further includes a line 87 used to supply power from the source to the sink device. The HDMI cable 300 further includes a reserve line 88.

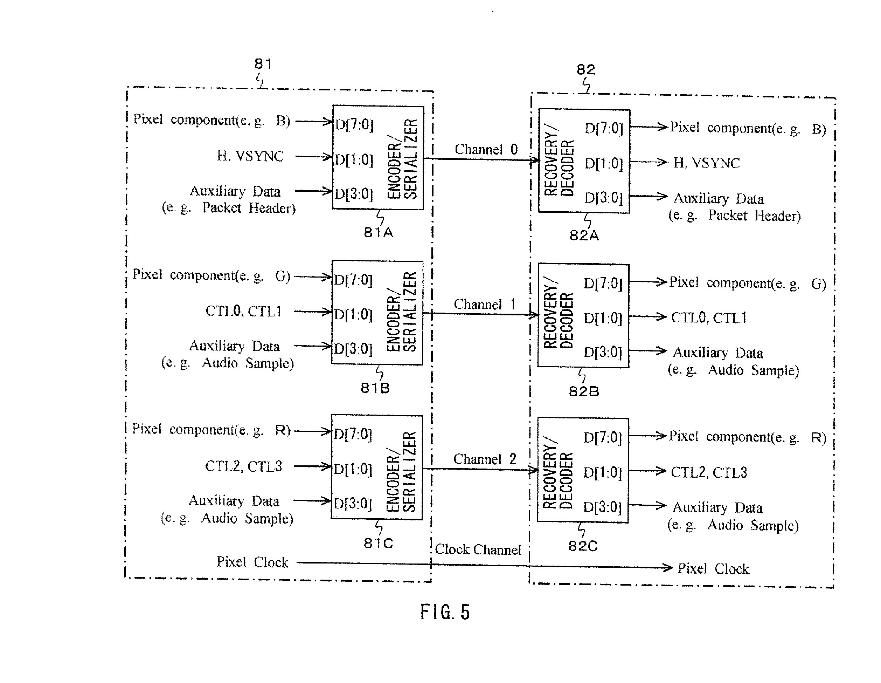

FIG. 5 illustrates configuration exmaples of the HDMI transmitter 81 and the HDMI receiver 82 in FIG. 4.

The HDMI transmitter 81 includes three encoders/serializers 81A, 81B and 81C corresponding to three TMDS channels #0, #1 and #2, respectively. Then, each of the encoders/serializers 81A, 81B, and 81C encodes picture data, auxiliary data, and control data supplied thereto, converts them from parallel data to serial data, and transmits the serial data in a differential signal format. In the case where the picture data includes three components, that is, for example, R (red), G (green), and B (blue) components, the B component, the G component and the R component are supplied to the encoders/serializers 81A, 81B and 81C, respectively.

Moreover, examples of the auxiliary data includes audio data and a control packet, and the control packet is supplied to, for example, the encoder/serializer 81A, and the audio data is supplied to the encoders/serializers 81B and 81C. Further, the control data includes a 1-bit vertical synchronization signal (VSYNC), a 1-bit horizontal synchronization signal (HSYNC), and 1-bit control bits CTL0, CTL1, CTL2, and CTL3. The vertical synchronization signal and the horizontal synchronization signal are supplied to the encoder/serializer 81A. The control bits CTL0 and CTL1 are supplied to the encoder/serializer 81B, and the control bits CTL2 and CTL3 are supplied to the encoder/serializer 81C.

The encoder/serializer 81A transmits, in a time-divisional manner, the B component of the picture data, the vertical synchronization signal and the horizontal synchronization signal, and the auxiliary data which are supplied thereto. In other words, the encoder/serializer 81A converts the B component of the picture data supplied thereto into parallel data with a size of 8 bits which is a fixed bit number. Moreover, the encoder/serializer 81A encodes the parallel data into serial data, and transmits the serial data through the TMDS channel #0.

The encoder/serializer 81A encodes 2-bit parallel data of each of the Vertical synchronization signal and the horizontal synchronization signal supplied thereto, and converts the parallel data into serial data, and then transmits the serial data through the TMDS channel #0. The encoder/serializer 81A converts the auxiliary data supplied thereto into 4-bit parallel data. Then, the encoder/serializer 81A encodes the parallel data, and converts the parallel data into serial data, and then transmits the serial data through the TMDS channel #0.

The encoder/serializer 81B transmits, in a time-divisional manner, the G component of the picture data, the control bits CTL0 and CTL1 and the auxiliary data which are supplied thereto. In other words, the encoder/serializer 81B converts the G component of the picture data supplied thereto into parallel data with a size of 8 bits which is a fixed bit number. Moreover, the encoder/serializer 81B encodes the parallel data, and converts the parallel data into serial data, and then transmits the serial data through the TMDS channel #1.

The encoder/serializer 81B encodes 2-bit parallel data of each of the control bits CLT0 and CTL1 supplied thereto, and converts the parallel data into serial data, and then transmits the serial data through the TMDS channel #1. The encoder/serializer 81B converts the auxiliary data supplied thereto into 4-bit parallel data. Then, the encoder/serializer 81B encodes the parallel data, and converts the parallel data into serial data, and then transmits the serial data through the TMDS channel #1.

The encoder/serializer 81C transmits, in a time-divisional manner, the R component of the picture data, the control bits CTL2 and CTL3, and the auxiliary data which are supplied thereto. In other words, the encoder/serializer 81C converts the R component of the picture data supplied thereto into parallel data with a size of 8 bits which is a fixed bit number. Moreover, the encoder/serializer 81C encodes the parallel data, and converts the parallel data into serial data, and then transmits the serial data through the TMDS channel #2.

The encoder/serializer 81C encodes 2-bit parallel data of each of the control bits CTL2 and CTL3 supplied thereto, and converts the parallel data into serial data, and then transmits the serial data through the TMDS channel #2. The encoder/serializer 81C converts the auxiliary data supplied thereto into 4-bit parallel data. Then, the encoder/serializer 81C encodes the parallel data, and converts the parallel data into serial data, and then transmits the serial data through the TMDS channel #2.

The HDMI receiver 82 includes three recoveries/decoders 82A, 82B and 82C corresponding to three TMDS channels #0, #1 and #2, respectively. Then, each of the recoveries/decoders 82A, 82B and 82C receives picture data, auxiliary data and control data transmitted through the TMDS channels #0, #1 and #2 in a differential signal format. Each of the recoveries/decoders 82A, 82B and 82C converts the picture data, the auxiliary data and the control data from serial data to parallel data, and decodes them, and then outputs them.

In other words, the recovery/decoder 82A receives the B component of the picture data, the vertical synchronization signal and the horizontal synchronization signal, and the auxiliary data which are transmitted through the TMDS channel #0 in a differential signal format. Then, the recovery/decoder 82A converts the B component of the picture data, the vertical synchronization signal and the horizontal synchronization signal, and the auxiliary data from serial data to parallel data, and decodes them and then outputs them.

The recovery/decoder 82B receives the G component of the picture data, the control bits CTL0 and CTL1, and the auxiliary data which are transmitted through the TMDS channel #1 in a differential signal format. Then, the recovery/decoder 82B converts the G component of the picture data, the control bits CTL0 and CTL1 and the auxiliary data from serial data to parallel data, and decodes them, and then outputs them.

The recovery/decoder 82C receives the R component of the picture data, the control bits CTL2 and CTL3, and the auxiliary data which are transmitted through the TMDS channel #2 in a differential signal format. Then, the recovery/decoder 82C converts the R component of the picture data, the control bits CTL2 and CTL3, and the auxiliary data from serial data to parallel data, and decodes them, and then outputs them.

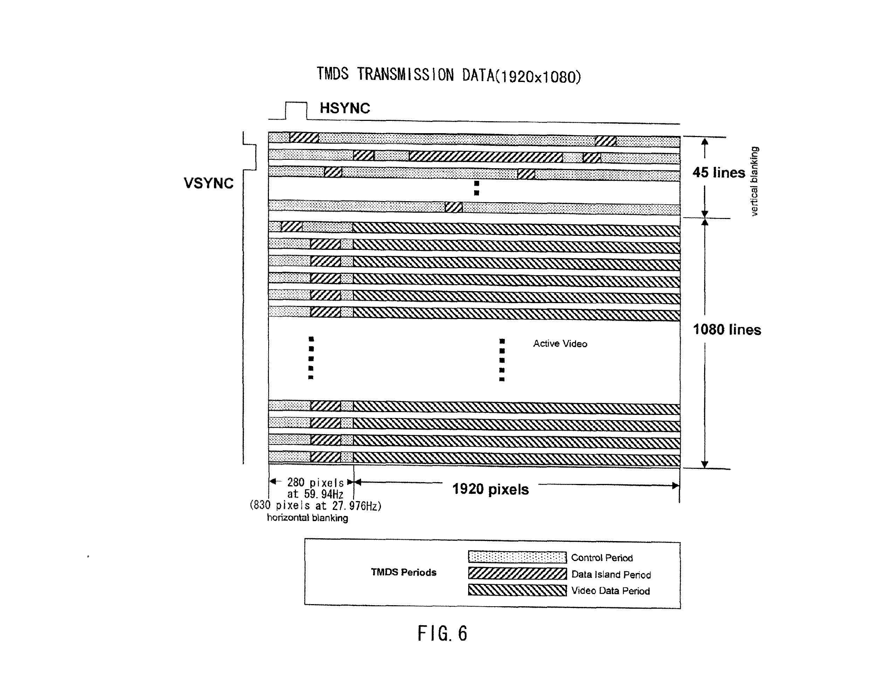

FIG. 6 illustrates a configuration example of TMDS transmission data.
FIG. 6 illustrates periods of various transmission data in the case where picture data of 1920 pixels widex1080 lines high is transmitted through the TMDS channels #0, #1 and #2.

A video field where transmission data is transmitted through three TMDS channels #0, #1 and #2 of the HDMI includes three types of periods according to types of transmission data, that is, a video data period, a data island period and a control period.

A video field period is a period from an active edge of a vertical synchronization signal to an active edge of a subsequent vertical synchronization signal. The video field period is separated into a horizontal blanking period, a vertical blanking period and an active video period. The active period is a period obtained by subtracting the horizontal blanking period and the vertical blanking period from the video field period.

The video data period is allocated to the active video period. In the video data period, active-pixel data of 1920 pixels×1080 lines constituting uncompressed one-screen picture data is transmitted.

The data island period and the control period are allocated to the horizontal blanking period and the vertical blanking period. In the data island period and the control period, auxiliary data is transmitted. In other words, the data island period is allocated to parts of the horizontal blanking period and the vertical blanking period. In the data island period, data not relating to control in the auxiliary data, for example, an audio data packet or the like is transmitted.

The control period is allocated to other parts of the horizontal blanking period and the vertical blanking period. In the control period, data relating to control in the auxiliary data, for example, the vertical synchronization signal and the horizontal synchronization signal, a control packet and the like are transmitted.

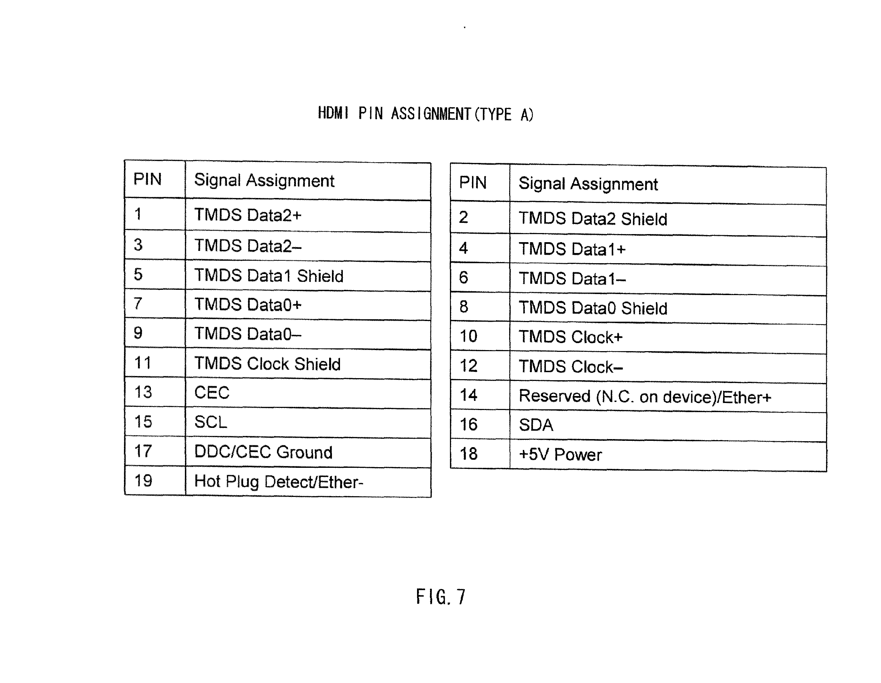

FIG. 7 illustrates an example of a pin assignment of the HDMI terminals 211 and 251. The pin assignment illustrated in FIG. 7 is called type-A.

TMDS Data #i+ and TMDS Data #i- as differential signals of a TMDS channel #i are transmitted through two lines which are differential lines. The two lines are connected to pins (pins with pin numbers 1, 4 and 7) to which the TMDS Data #i+ is assigned and pins (pins with pin numbers 3, 6 and 9) to which the TMDS Data #i- is assigned.

Moreover, the CEC line 84 where a CEC signal as data for control is transmitted is connected to a pin with a pin number 13, and a pin with a pin number 14 is a reserved pin. Further, a line where a SDA (Serial Data) signal such as E-EDID is transmitted is connected to a pin with a pin number 16. Then, a line where an SCL (Serial Clock) signal as a clock signal used for synchronization at the time of transmitting and receiving the SDA signal is connected to a pin with a pin number 15. The above-described DDC 83 is configured of the line where the SDA signal is transmitted and the line where the SCL signal is transmitted.

As described above, the HPD line 86 for allowing the source device to detect connection of the sink device is connected to a pin with a pin number 19. Moreover, as described above, the line 87 for supplying power is connected to a pin with a pin number 18.

Detailed description of additional information

FIG. 8 illustrates a frame packing 3D video format as one of TMDS transmission data configurations of stereoscopic picture data. The 3D video format is a format for transmitting progressive left-eye (L) picture data and progressive right-eye (R) picture data as stereoscopic picture data. In the 3D video format, as the left-eye (L) picture data and the right-eye (R) picture data, picture data in a 1920×1080p pixel format or a 1080×720p format is transmitted.

For the 3D video format, transmission data with a video field period including a horizontal blanking period (Hblank), a vertical blanking period (Vblank) and an active video period (Vactive) separated by vertical synchronization signals is generated. In the 3D video format, the active video period (Vactive) includes two active video areas (Active video) and an active space area (Active space) between the active video areas.

The progressive left-eye (L) picture data is allocated to a first active video area with a line number Vact_video, and the progressive right-eye (R) picture data is allocated to a second active video area with a line number of Vact_video. Moreover, additional information relating to the left-eye (L) picture data and the right-eye (R) picture data allocated to the active video areas is allocated to the active space area with a line number Vact_space.

Herein, in the case of the 1920×1080p pixel format, the line number Vact_space is 45 lines. Moreover, in the case of the 1280×720p pixel format, the line number Vact_space is 30 lines.

FIG. 9 illustrates a frame packing 3D video format for an interlaced format as one of the TMDS transmission data configurations of stereoscopic picture data. The 3D video format is a format for transmitting interlaced left-eye (L) picture data and interlaced right-eye (R) picture data as stereoscopic picture data. In the 3D video format, as the left-eye (L) picture data and the right-eye (R) picture data, picture data in a 1920×1080i pixel format is transmitted.

By the 3D video format, transmission data with a video field period including a horizontal blanking period (Hblank), a vertical blanking period (Vblank) and an active video period (Vactive) separated by vertical synchronization signals is generated. In the 3D video format, the active video period (Vactive) includes four active video areas (Active video) and three active space areas (Active space) between them.

Left-eye (L) picture data in an odd-number field is allocated to a first active video area with a line number Vact Video, and right-eye (R) picture data in an odd-number field is allocated to a second active video area with the line number Vact video. Moreover, left-eye (L) picture data in an even-number field is allocated to a third active video area with the line number Vact_video, and right-eye (R) picture data in an even-number field is allocated to a fourth active video area with the line number Vact_video.

Additional information relating to the left-eye (L) picture data and the right-eye (R) picture data allocated to the active video areas is allocated to three active space areas with line numbers Vact_space1, Vact_space2 and Vact_space1, respectively. Herein, in the case of the 1920×1080i pixel format, the line number Vact_space1 is 23 lines and the line number Vact_space2 is 22 lines.

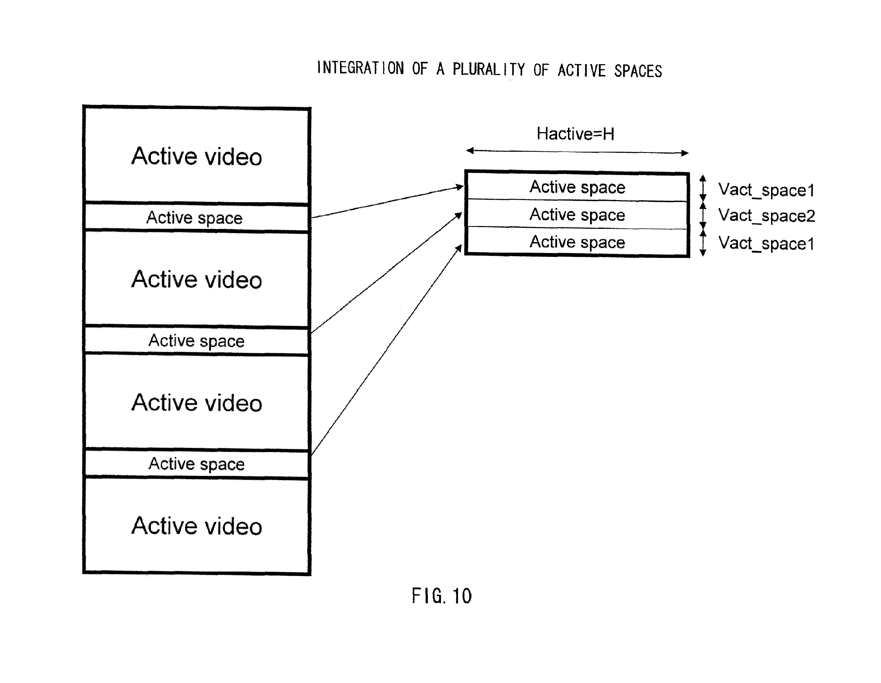

In the case where a plurality of active space areas are included as in the case of the 3D video format in FIG. 9, these active space areas are allowed to be used as one integrated area. FIG. 10 illustrates integration of the active space areas. When a plurality of active space areas are integrated and used in such a manner, the data amount of additional information allowed to be transmitted in one frame is allowed to be increased.

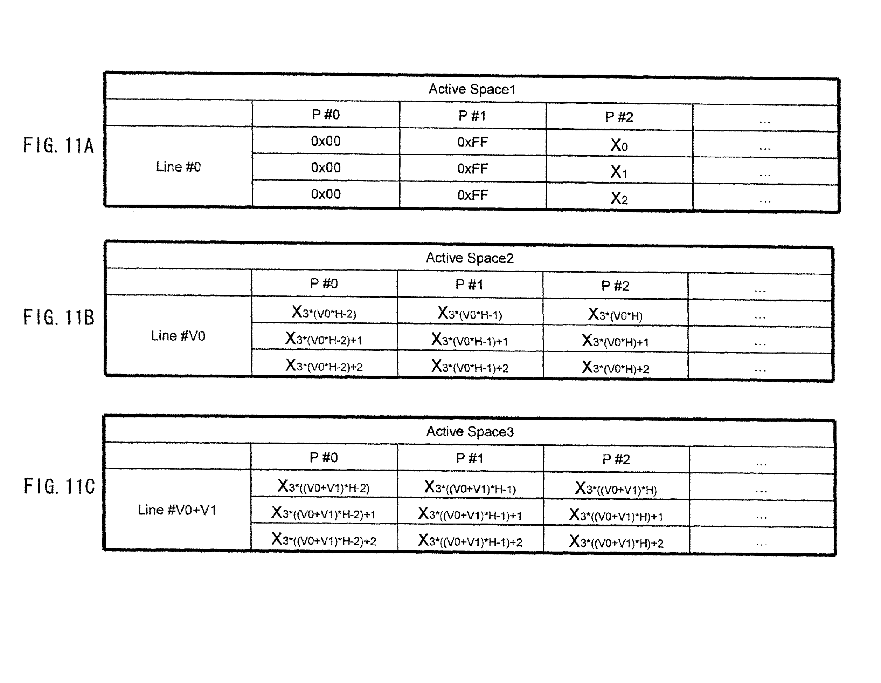

FIGs. 11A to 11C each illustrate, in the case where integration of three active space areas is used, an example of additional information layout in a first line of each of the active space areas. FIG. 11A illustrates a first line of a first active space area (Active Space1), and the number of the line is #0.

Sync patterns with fixed values "0x00" and "0xFF" as data of each of three TMDS channels are allocated to two pixel positions #0 and #1 of the line #0, respectively. Then, 8-bit data X0, X1, ... constituting additional information as data of each of the three TMDS channels are allocated to a pixel position #2 and later positions of the line #0, respectively.

Moreover, FIG. 11B illustrates a first line of a second active space area (Active Space2), and the number of the line is #V0. FIG. 11C illustrates a first line of a third active space area (Active Space3), and the number of the line is #V0+V1. In this case, the number of lines (Vact_space1) in the first active space area is "V0", and the number of lines (Vact space2) in the second active space area is "V1". Moreover, the number of pixels in a horizontal direction is "H".

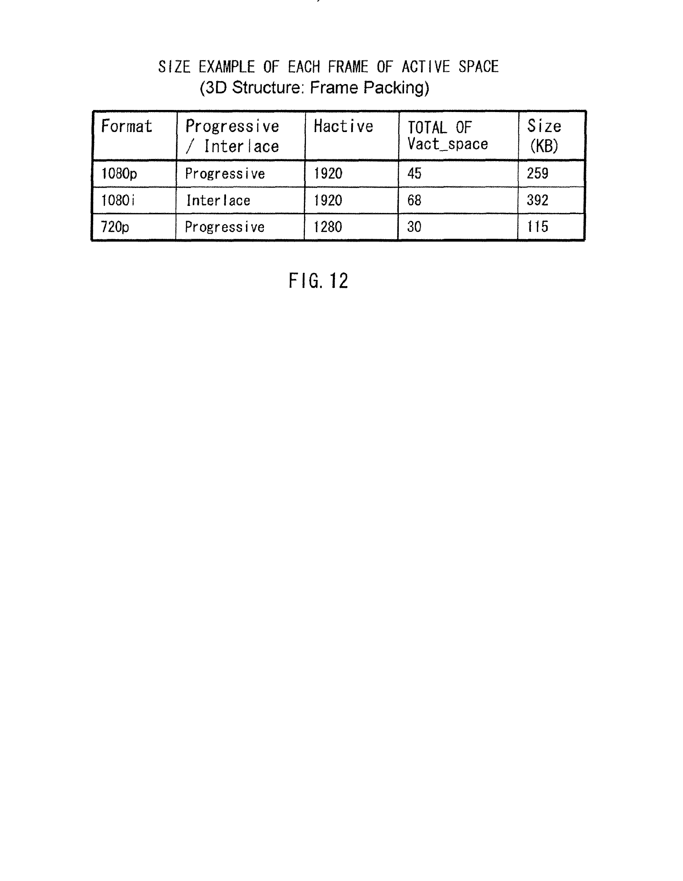

FIG. 12 illustrates a size example of each frame of an active space area in the Frame packing 3D video format. This example is an example obtained by calculation assuming that 8-bit data is transmitted in each of pixel positions of three TMDS channels. In a 3D transmission format (refer to FIG. 8) in which picture data in a pixel format of 1920×1080p is transmitted, the total line number Vact_space in the active space area is 45 lines. Therefore, the size of each frame of the active space area is approximately 259 KB.

In a 3D transmission format (refer to FIG. 9) in which picture data in a pixel format of 1920×1080i is transmitted, the total line number Vact_space in the active space area is 68 lines. Therefore, the size of each frame of the active space area is approximately 392 KB. Moreover, in a 3D transmission format (refer to FIG. 8) in which picture data in a pixel format of 1280×720p is transmitted, the total line number Vact_space in the active space area is 30 lines. Therefore, the size of each frame of the active space area is approximately 115 KB.

Data storing method in active space area

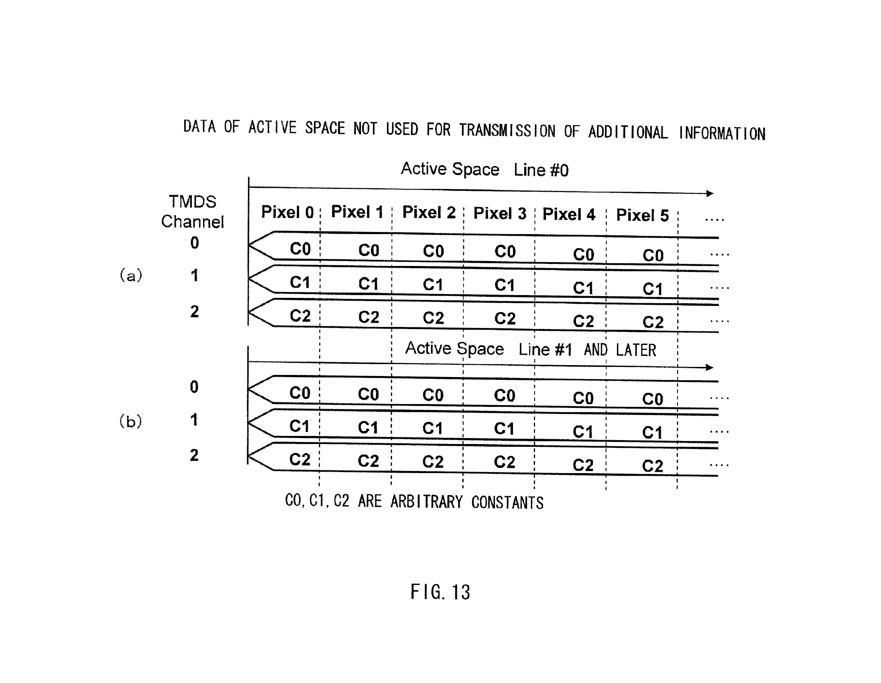

A data storing method in an active space area will be described below. In the HDMI specification Ver.1.4, it is necessary to fill the active space area with a single color. FIG. 13 illustrates data in each of pixel positions of three TMDS channels in the case where the active space area is not used for transmission of additional information. A part (a) in FIG. 13 illustrates a 0th line (Line #0), and a part (b) in FIG. 13 illustrates a first or later line (Line #1 or later). In this case, common data is allocated to all pixel positions, and the active space area is filled with a single color as defined by the HDMI specification Ver. 1.4. In addition, C0, C1 and C2 in FIG. 13 are arbitrary constants.

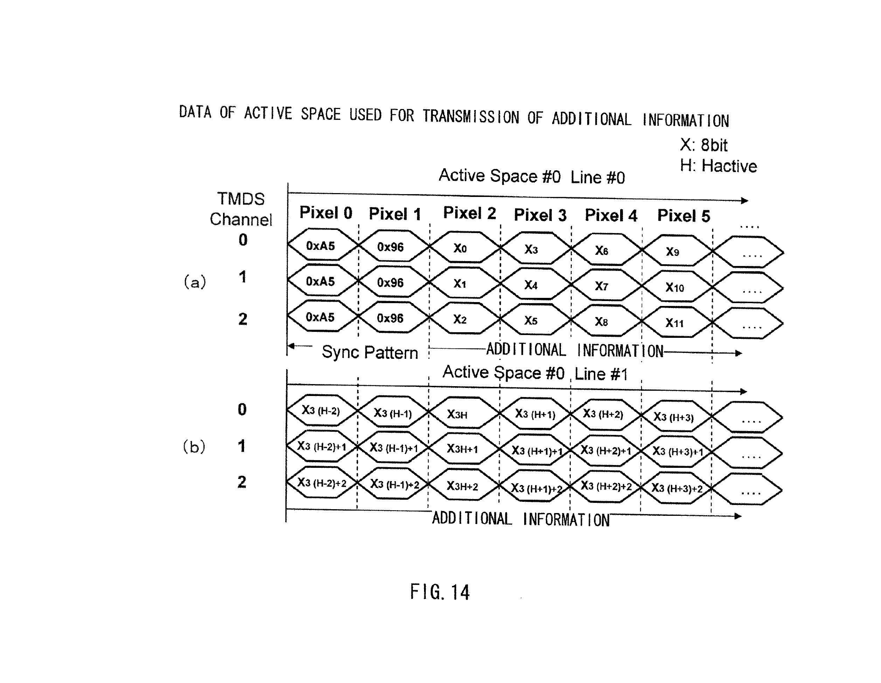

FIG. 14 illustrates data in each of pixel positions of three TMDS channels in the case where the active space area is used for transmission of additional information. A part (a) in FIG. 14 illustrates a 0th line (Line #0) and a part (b) in FIG. 14 illustrates a first line (Line #1). In this case, sync patterns with a fixed value are provided in pixel positions of a pixel 0 (Pixel 0) and a pixel 1 (Pixel 1) in the 0th line. In addition, in the example illustrated in the drawing, fixed values provided in the pixels 0 and 1 are "0xA5" and "0x96", respectively. Moreover, 8-bit data X0, X1, X2, ... constituting additional information as data of each of three TMDS channels are provided in positions of a pixel 2 (Pixel 2) and later pixels in the 0th line. In addition, "H" indicates the number of pixels in a horizontal direction (Hactive).

Data storing method (data configuration) in active space area

Additional information allocated to the active space area includes one or both of information data and picture data. In this case, information data is configured of one information block or a plurality of information blocks. Moreover, the picture data is configured of one picture block or a plurality of picture blocks.

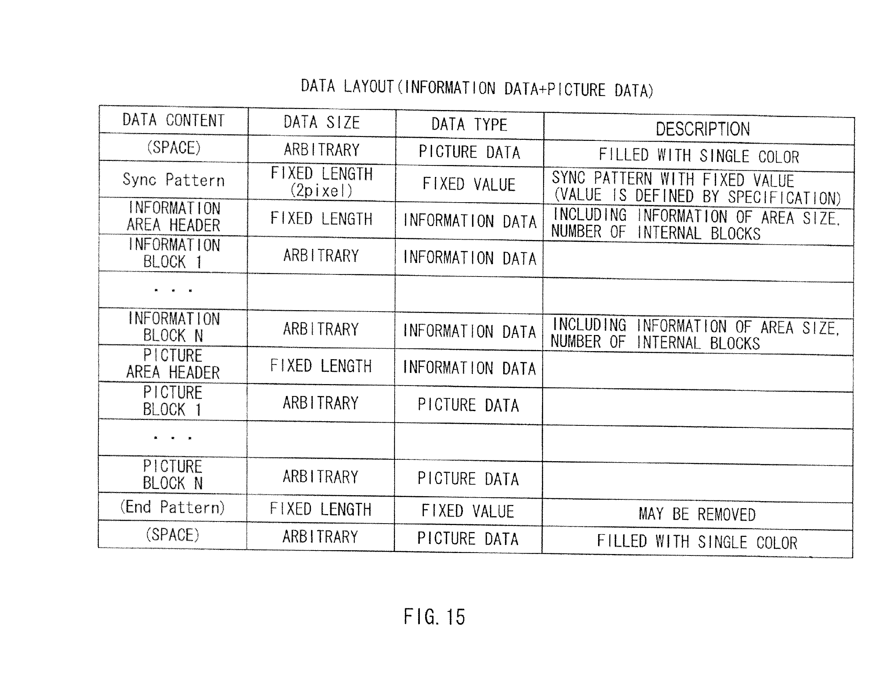

FIG. 15 illustrates a data layout in the active space area in the case where the additional information includes both of the information data and the picture data. In this case, in the active space area, a space, a sync pattern, an information area header, information blocks 1 to N, a picture area header, picture blocks 1 to N, an end pattern and a space are arranged in this order. In addition, a first space is arranged depending on circumstances on a transmission side. Moreover, the end pattern may be removed.

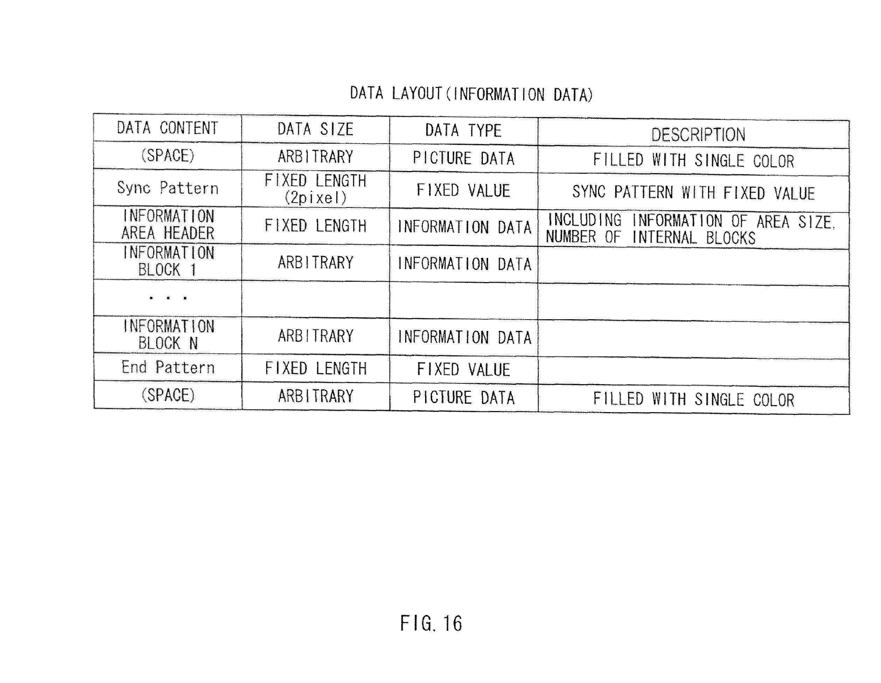

FIG. 16 illustrates a data layout in the active space area in the case where only information data is included in the additional information. In this case, in the active space area, a space, a sync pattern, an information area header, information blocks 1 to N, an end pattern, and a space are arranged in this order. A first space is arranged depending on circumstances on the transmission side.

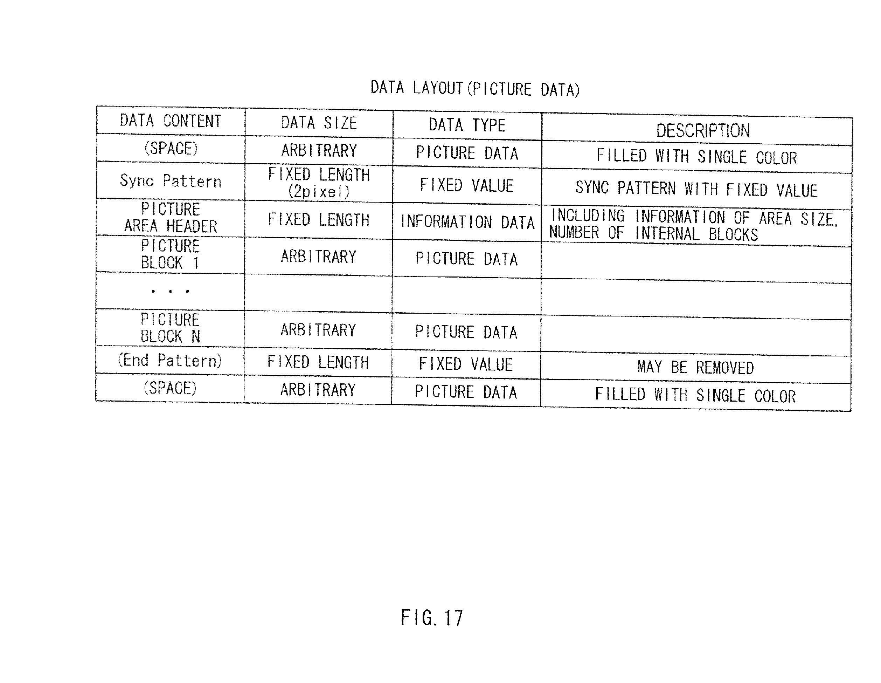

FIG. 17 illustrates a data layout in the active space area in the case where only the picture data is included in the additional information. In this case, in the active space area, a space, a sync pattern, a picture area header, picture blocks 1 to N, an end pattern and a space are arranged in this order. A first space is arranged depending on circumstances on the transmission side. Moreover, the end pattern may be removed.

The space has an arbitrary data size, and the type of the data is "picture data". The space is filled with a single color. A leading part of the active space area is a space depending on circumstances on the transmission side. In addition, in the case where a plurality of active space areas are included as in the case of the frame packing 3D video format (refer to FIG. 9) for an interlaced format, spaces are arranged in leading parts with a common data length of the active space areas.

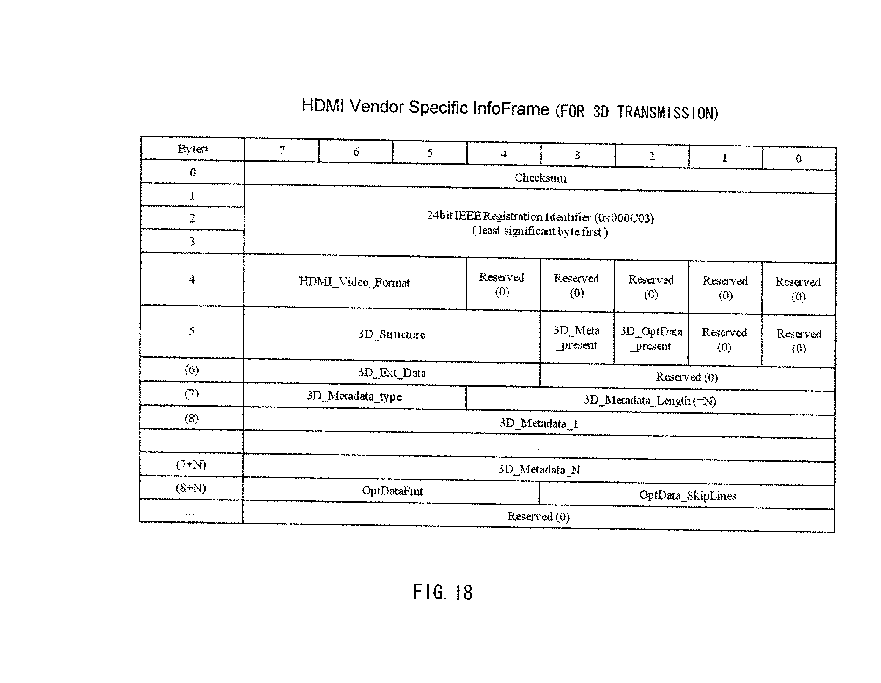

The data length of the space in the leading part of the active space area is informed from a transmission side (an HDMI source device) to a reception side (an HDMI sink device) with use of InfoFrame. For example, an HDMI Vendor Specific InfoFrame packet for 3D transmission is extended as illustrated in Fig. 18. In addition, the HDMI Vendor Specific InfoFrame packet is allocated to a data island period in a blanking period.

The HDMI Vendor Specific InfoFrame is defined by CEA-861-D, and will not be described. Herein, an extended part will be described. A fifth byte will be described. Information "3D_OptData_Present" indicating whether or not additional information is allocated to an active space area, that is, whether or not the additional information is transmitted in the active space area is allocated to a third bit of the fifth byte. In the case where the third bit is "1", "1" indicates that the additional information is not transmitted in the active space area.

In the case where the above-described third bit of the fifth byte is "1", fields "OptDataFmt" and "OptData_SkipLines" are present. The field "OptDataFmt" indicates the format of data to be transmitted in the active space area, for example, whether full range data or limited range data is transmitted. Moreover, the field "OptDataFmt" indicates the type of data to be transmitted in the active space area, or the like. The field "OptData_SkipLines" indicates that a leading N line in the active space area is a space. In the case where a space is not present, "0" is set.

On the reception side (the HDMI sink device), whether or not additional information is allocated to the active space area is recognizable by the above-described information "3D_OptData_Present" of HDMI Vendor Specific InfoFrame packet. Moreover, a data format or the like is recognizable by the field "OptDataFmt", and the presence or absence of a space in a leading part of the active space area and the data size of the space are recognizable by the field "OptData_SkipLines".

The data size of the sync pattern is a fixed length (2 pixels or over), and the data type of the sync pattern is "fixed value". For example, as the sync pattern, a fixed value such as "0xA5" or "0x96" is defined. On the reception side (the HDMI sink device), once a sync pattern is found, data is read out as effective data from then on.

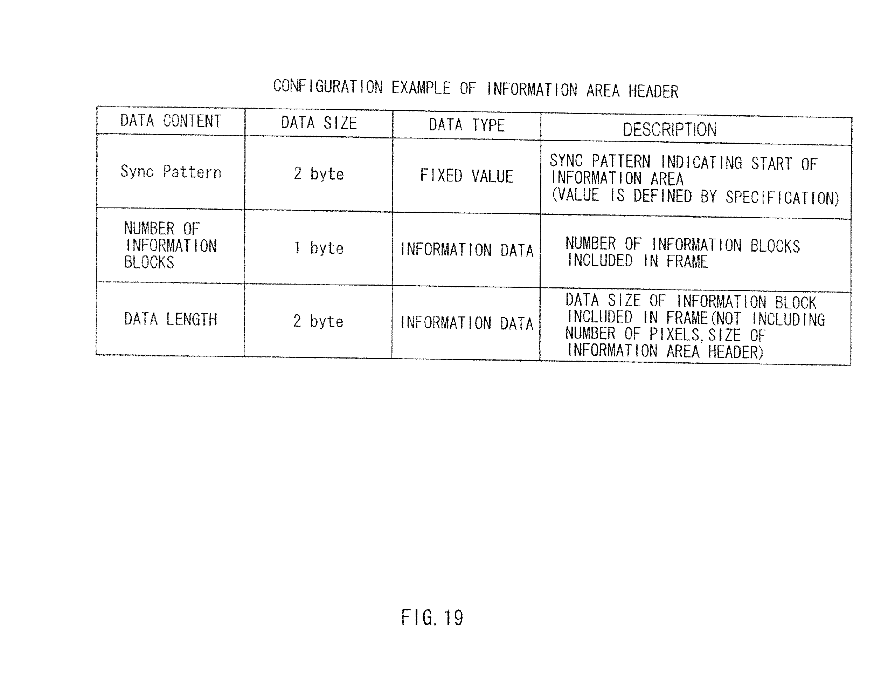

The information area header includes information of an area size and the number of internal blocks. The data size of the information area header is a fixed length, and the data type of the information area header is "information data". FIG. 19 illustrates a configuration example of the information area header. The information area header includes data of "sync pattern", "number of information blocks" and "data length" in this order.

The data size of the "sync pattern" is 2 bytes, and the data type of the "sync pattern" is "fixed value". The "sync pattern" indicates the start of an information area. The data size of the "number of information blocks" is 1 byte, and the data type of the "number of information blocks" is "information data". The "number of information blocks" indicates the number of information blocks included in a frame. The data size of the "data length" is 2 bytes, and the data type of the "data length" is "information data". The "data length" indicates the data size of the information block included in the frame. The data size is represented by, for example, the number of pixels.

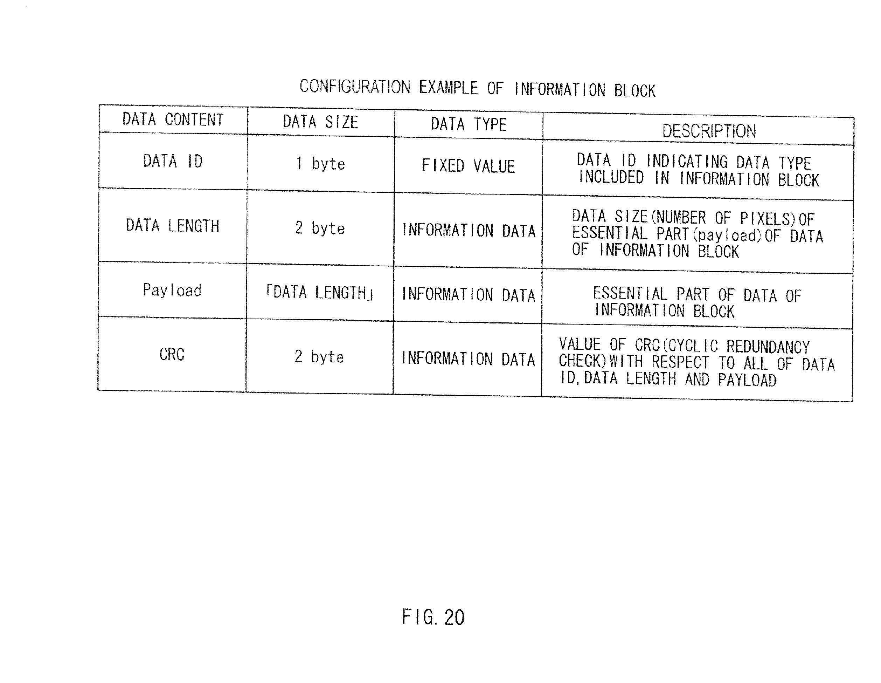

A number equal to a value of the "number of information blocks" of information blocks 1 to N follows the information area header. Each information block has an arbitrary data size, and the data type is "information data". FIG. 20 illustrates a configuration example of an information block. The information block includes data of "data ID", "data length", "payload" and "CRC (Cyclic Redundancy Check)" in this order. The data size of the "data ID" is 1 byte, and the data type of the "data ID" is "fixed value". The "data ID" indicates the type of data included in the information block. The data size of the "data length" is "2 byte", and the data type of the "data length" is "information data". The "data length" indicates the data size (the number of pixels) of an essential part (payload) of data of the information block.

The data size of the "payload" is a size represented by "data length", and the data type of the "payload" is "information data". The "payload" is an essential part of the data of the information block. The data size of the "CRC" is 2 bytes, and the data type of the "CRC" is "information data". The "CRC" is a value of CRC with respect to all of the data ID, the data length and the payload.

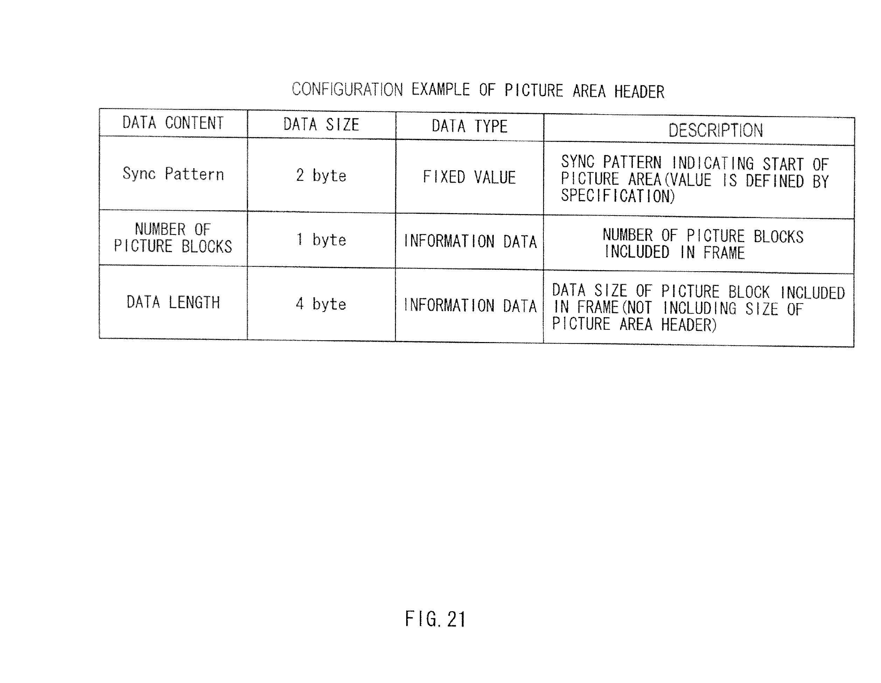

The picture area header includes information of an area size and the number of internal blocks. The data size of the information area header is a fixed length, and the data type is "information data". FIG. 21 illustrates a configuration example of the picture area header. The picture area header includes data of "sync pattern", "number of picture blocks" and "data length" in this order.

The data size of the "sync pattern" is 2 bytes, and the data type of the "sync pattern" is "fixed value". The "sync pattern" indicates the start of a picture area. The data size of the "number of picture blocks" is 1 byte, and the data types of the "number of picture blocks" are "information data". The "number of picture blocks" indicates the number of picture blocks included in a frame. The data size of the "data length" is 4 bytes, and the data type of the "data length" is "information data". The "data length" indicates the data size of the picture block included in the frame.

A number equal to a value of the "number of picture blocks" of picture blocks 1 to N follow the picture area header. Each picture block has an arbitrary data size, and the data type of each picture block is "picture data". FIC. 22 illustrates a configuration example of the picture block. The picture block includes data of "picture ID", "number of horizontal pixels", "number of vertical pixels", and "picture data" in this order.

The data size of the "picture ID" is 1 byte, and the data type of the "picture ID" is "fixed value". The "picture ID" is an ID indicating a picture format. For example, "0" indicates that a picture format is the same as that of stereoscopic picture (3D picture) data allocated to an active video area.

The data size of the "number of horizontal pixels" is 2 bytes, and the data type of the "number of horizontal pixels" is "information data". The "number of horizontal pixels" indicates the number of pixels in a horizontal direction of a picture. The data size of the "number of vertical pixels" is 2 bytes, and the data type of the "number of vertical pixels" is "information data". The "number of vertical pixels" indicates the number of pixels in a vertical direction of a picture. The data size of the "picture data" is equal to the "number of horizontal pixels"×the "number of vertical pixels", and the data type of the "picture data" is "picture data". The "picture data" is an essential part of the picture data.

The data size of the end pattern is a fixed length (2 pixels or over), and the data type of the end pattern is "fixed value". For example, as the end pattern, a fixed value such as "0xFE" is defined. On the reception side (the HDMI sink device), the end of data is recognized by finding an end pattern. In the case where the picture data is arranged in the end, the end pattern may be removed (refer to FIGs. 15 and 17).

Data storing method in each pixel

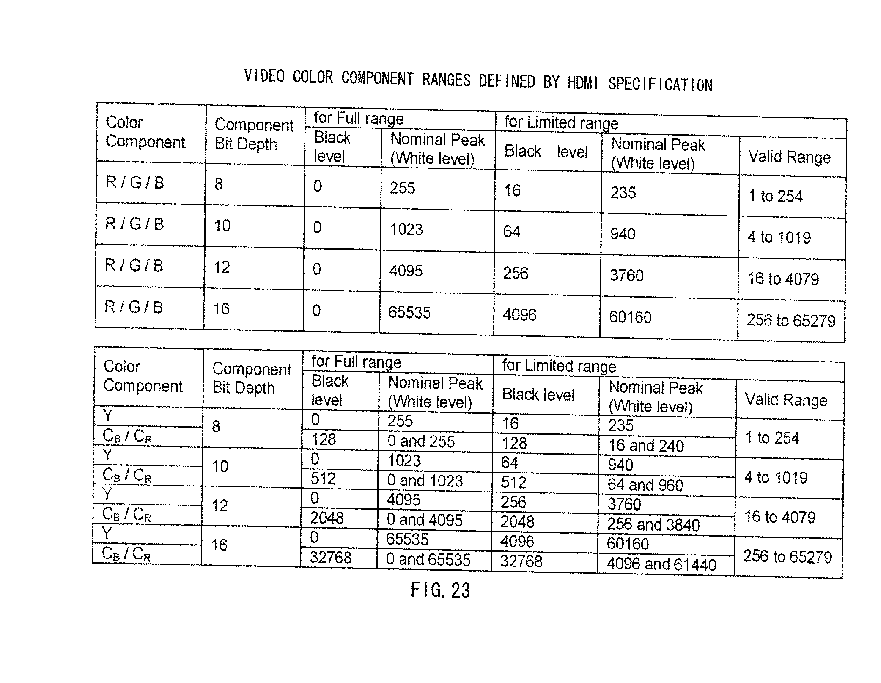

A data storing method in each pixel in an active space area will be described below. In the HDMI specification, a color component range allowed to be used in video data is defined as illustrated in FIG. 23.

Picture data (video data) such as a DVD (Digital Versatile Disc) or a BD (Blu-ray Disc) is typically outputted in a limited range of YCbCr. In the case of the limited range, the whole 8-bit range (values 0-255) is not allowed to be used. In the case of the limited range, a valid range of values is "1 to 254", so values 0 and 255 are not allowed to be used.

In the embodiment, as described above, information data allocated to the active space area is transmitted. Therefore, data in the active space area is transmitted by any one of the following methods.

Method 1

A method 1 is a method of transmitting, in the case where limited range picture data is transmitted, data (additional information) of the active space area as it is without clipping, and allowing use of the values 0 and 255 as data (additional information).

Method 1-1

The HDMI transmitting section 102 (refer to FIG. 2) has a color space conversion function such as converting a RGB color space into a YCbCr color space and vice versa, or a function of rounding (clipping) a pixel value with a range of 0 to 255 to a pixel value in a limited range of 1 to 254 in the case where limited range data is outputted.

In the case where stereoscopic picture data (refer to FIGs. 8 and 9) is outputted, the HDMI transmitting section 102 performs, if necessary, the color space conversion function on picture data in an active video area, or clips the picture data in the active video area to a value in the limited range, and then transmits the picture data. However, the color space conversion function is invalid for data (additional information) in the active space area, so the HDMI transmitting section 102 transmits the value of the data as it is without clipping.

In this case, on the transmission side (the HDMI source device), for example, in the video signal processing circuit 107 of the disc player 100 in FIG. 2, the 3D video generation section renders a stereoscopic picture (a 3D picture) and data in the active video area and the active space area in a frame memory for video output, respectively.

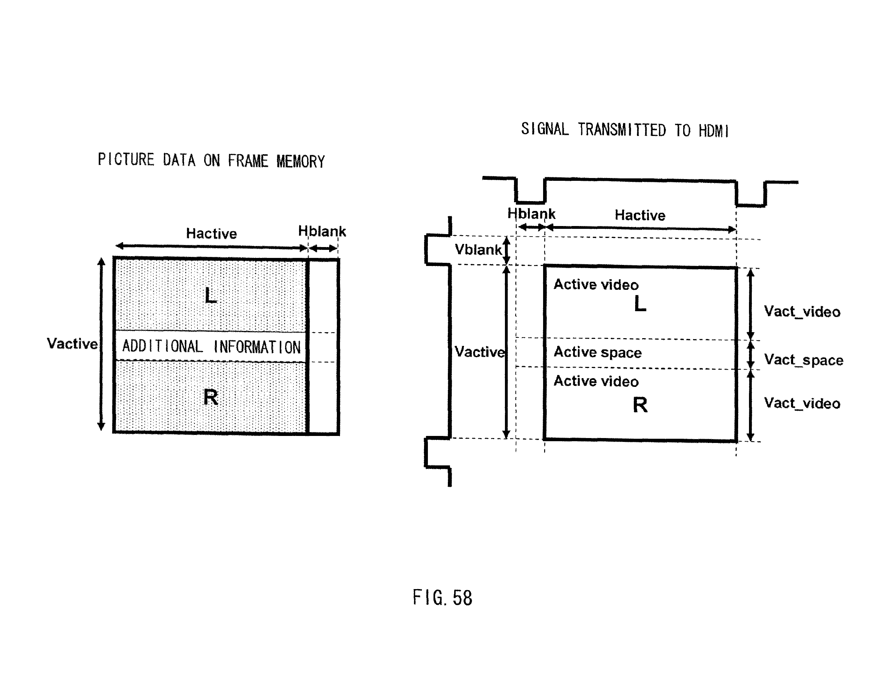

The transmission side sets (specifies) the following information when rendered contents of the frame memory for video output is transmitted to the HDMI transmitting section 102 (refer to FIG. 58).

    (a) Video format (frame rate, Vblank, Vacitve, Hblank, Hactive, PixelClock (transfer rate)) of signal to be transmitted to HDMI, color space of active video area, full range/limited range, number of bits (Deep Color or not), numbers of active video areas and active space areas, numbers of start and end lines in each area

    (b) Number of lines in video on frame memory (Vactive, Hactive, Hblank), color space, number of bits

When the HDMI transmitting section 102 generates a signal to be transmitted to the HDMI, in the case where a color space on the frame memory and a color space to be outputted to the HDMI are not equivalent to each other, in the specified active video area (stereoscopic picture data: left-eye and right-eye picture data), the color space of a pixel value of each dot on the frame memory is converted as specified to generate data to be outputted to the HDMI. On the other hand, in the specified active space area (additional information), output data is generated without converting a pixel value (data) of each dot.

Moreover, in the case where as an output format, a limited range format is specified, in the specified active video area (stereoscopic picture data), a pixel value with a range of 0 to 255 of each dot is clipped to a pixel value with a range of 1 to 254, and data to be outputted to the HDMI is generated. On the other hand, in the specified active space area (additional information), output data is generated without clipping a pixel value (data of each dot.

Method 1-2

The HDMI transmitting section 102 (refer to FIG. 2) has a function of inputting stereoscopic picture data to be transmitted in an active video area and data to be transmitted in an active space area as different data, and combining and outputting them. Moreover, the HDMI transmitting section 102 has a function of rounding (clipping) a pixel value with a range of 0 to 255 of stereoscopic picture data (left-eye picture data and right-eye picture data) from the 3D video generation section of the video signal processing circuit 107 to the limited range of 1 to 254.

On the transmission side (the HDMI source device), for example, in the video signal processing circuit 107 of the disc player 100 in FIG. 2, the 3D video generation section renders a stereoscopic picture (a 3D picture) in an active video area. Moreover, the CPU 121 generates data (additional information) which is allocated to an active space area and transmitted.

In the case where the stereoscopic picture data (refer to FIGs. 8 and 9) is outputted, the 3D video generation section transmits left-eye picture data to the HDMI transmitting section 102 with use of a vertical synchronization signal (Vsync) as a trigger. When the 3D video generation section completes transmission of the left-eye picture data, the 3D video generation section transmits right-eye picture data to the HDMI transmitting section 102 with use of a pseudo vertical synchronization signal (Vsync) generated by the HDMI transmitting section 102 as a trigger.

Moreover, the CPU 121 transmits, to the HDMI transmitting section, 102, generated data (additional information) corresponding to the active space area. The HDMI transmitting section 102 transmits the left-eye picture data subjected to clipping, data not subjected to clipping (additional information), and the right-eye picture data subjected to clipping in this order.

In addition, when data are transmitted in such a manner, in the case where the areas of the left-eye picture data, the data (additional information) and the right-eye picture data are adjacent to one another without space, it is difficult to adjust a timing between the 3D video generation section of the video signal processing circuit 107 and the CPU 121, and the HDMI transmitting section 102. In this case, when a space (refer to FIGs. 15, 16 and 17) is arranged in a leading part of the active space area as described above, a space is inserted between data areas, and the above-described timing is easily adjusted.

Method 2

A method 2 is a method of allowing transmission of data in an active space area with the same valid range as that of picture data in the case where limited range picture data is transmitted.

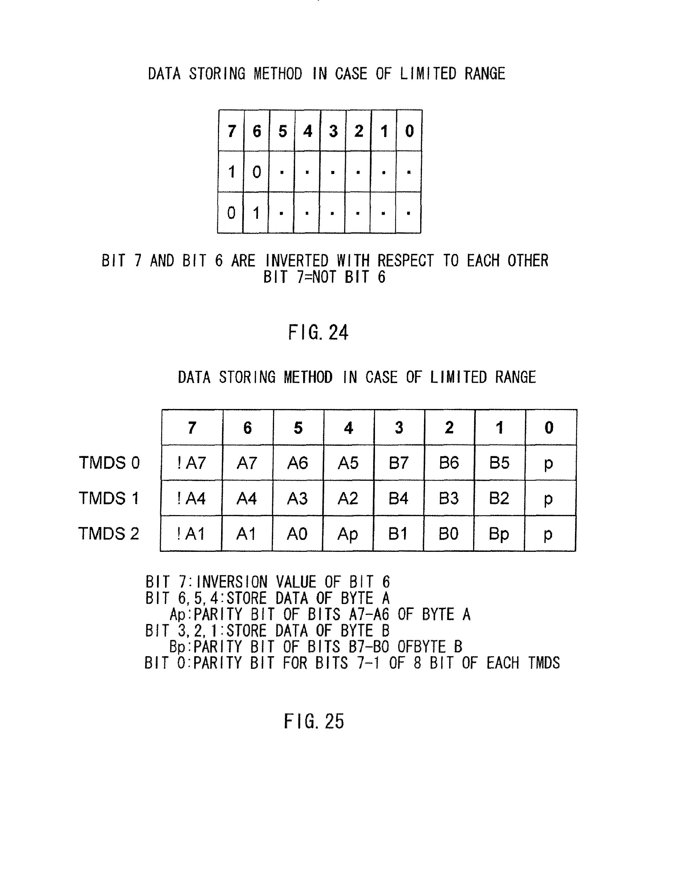

In the method 2, the 3D video generation section of the video signal processing circuit 107 processes a pixel value (8-bit data) in the active space area to clip the pixel value to the limited range (1 to 254) in advance. In other words, the 3D video generation section transmits data of 7 bits 0 to 6 in each pixel, and as illustrated in FIG. 24, the value of a bit 7 is an inversion value which is a logical inversion of a value of the bit 6. Thereby, each pixel value (8-bit data) in the active space area is a value with a range of 64 (01000000) to 191(10111111), and is limited to the limited range (1 to 254).

In this case, as data of 7 bits is transmitted in each pixel, as data for 3 TMDS channels #0, #1 and #2, data of 21 ($7\times3$) bits in total is stored in each pixel. Therefore, for example, 16 bits are used to store data (additional information) of 2 bytes, and the other 5 bits are used as parity bits. FIG. 25 illustrates a bit configuration example of the three TMDS channels #0, #1 and #2 of pixel values (8-bit data).

As bits 6 to 4 of the three channels #0, #1 and #2, 8 bits (A7 to A0) constituting data of 1 byte and a parity bit (Ap) therefor are stored. Moreover, as bits 3 to 1 of the three channels #0, #1 and #2, 8 bits (B7 to B0) constituting data of 1 byte and a parity bit (Bp) therefor are stored. Further, as the value of a bit 7 of each of the three channels #0, #1 and #2, an inversion value which is a logical inversion of a value of the bit 6 is stored. As a bit 0 of each of the three channels #0, #1 and #2, a parity bit (P) for the bits 7 to 1 is stored.

As video transmission in the HDMI, a deep color mode may be used. The deep color mode is a mode allowing transmission of the value of each pixel not as data of 8 bits but as data of a multiple bit length such as 10 bits, 12 bits or 16 bits. In the embodiment, transmission of data with a range of 8 bits in each pixel will be described below.

Upon deep color transmission, in the same manner as that described in the above-described "method 2", a value obtained by inverting the value of a bit next to a most significant bit may be set to the most significant bit, and low-side 8 bits of a pixel value may be transmitted in a state where all values of 0 to 255 are allowed to be used. In this case, a process of generating data on the transmission side (the HDMI source device) and a process of reading out data on the reception side (the HDMI sink device) become easier.

Error correction

TMDS coding (8b/10b coding) used in the active space area is typically coding for picture and is vulnerable to an error. Therefore, error correction coding for improving reliability is performed on data (additional information) allocated to the active space area. Herein, the case where full range data (additional information) is allowed to be stored in the active space area will be described below. In the case of the limited range, it is necessary to perform error correction by another method.

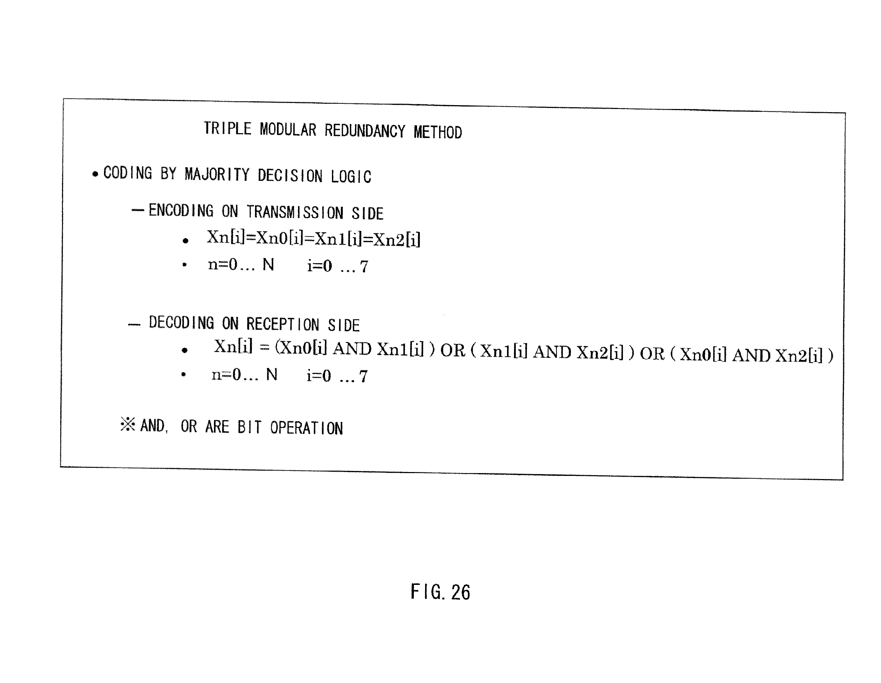

A known triple modular redundancy method is used for error correction coding. FIG. 26 illustrates an encoding process on the transmission side and a decoding process on the reception side in the case where the triple modular redundancy method is used. Xn[i] indicates data of a bit i in an nth byte. Xn0[i] indicates data of a bit i in an nth byte of the channel #0. Xn1[i] indicates data of a bit i in an nth byte of the channel #1. Xn2[i] indicates data of a bit i in an nth byte of the channel #2.

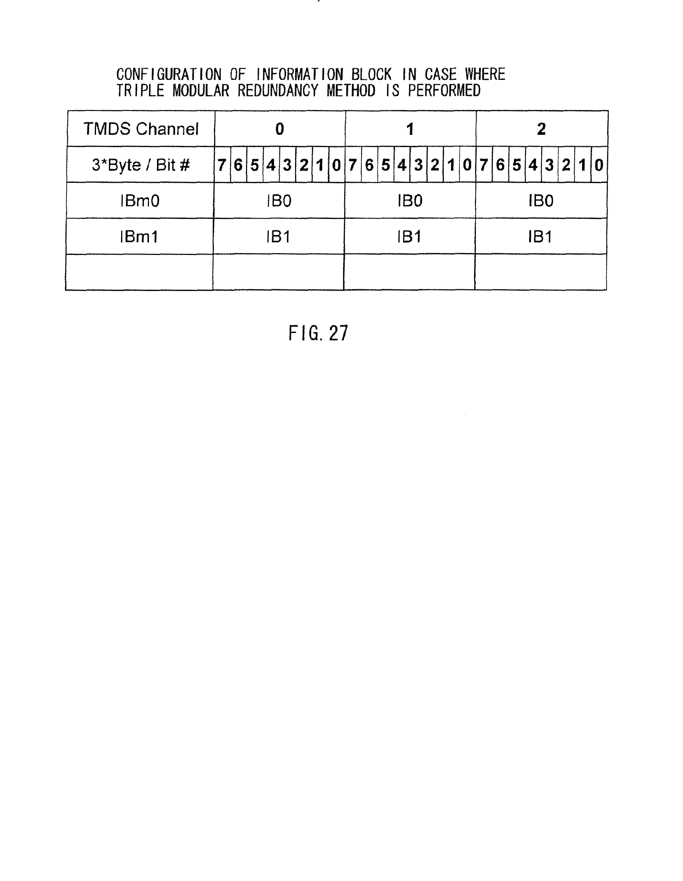

In this case, on the transmission side, as illustrated in FIG. 27, as three channels #0, #1 and #2 of 8-bit data per pixel, common data is provided. On the reception side, the three channels of 8-bit data per pixel are compared from one bit to another, and values of bits 7 to 0 are decided by majority, thereby error correction is performed.

Correction of stereoscopic picture data in television receiver (sink device) A process of correcting stereoscopic picture data (3D picture data) in the television receiver 200 will be described below. In the case of stereoscopic picture display, it is considered more important to correct picture data according to viewing environment (a screen size, a viewing distance, surrounding brightness) or preferences of a user than in the case of two-dimensional picture (2D picture) display.

Information about the viewing environment is easily obtained by the television receiver 200, so the television receiver 200 preferably performs a process of correcting stereoscopic picture data according to the viewing environment.

Moreover, correction of the stereoscopic picture data according to preferences of a user may be performed by the television receiver 200 or the disc player 100. However, the television receiver 200 preferably performs the correction according to preferences of the user, because in consideration of broadcasting, when the television receiver 200 is allowed to perform the correction, more types of contents are corrected.

In the case where the television receiver 200 performs a process such as correction or picture quality enhancement of stereoscopic picture data, when picture data such as subtitles, a menu or OSD is superimposed on stereoscopic picture data in the disc player 100, and then the stereoscopic picture data is transmitted to the television receiver 200, the picture data interferes with a process such as correction or picture quality enhancement of stereoscopic picture data. In this case, the menu means a menu in a disc such as a DVD or a BD, and the OSD is information display, a menu or the like of the disc player.

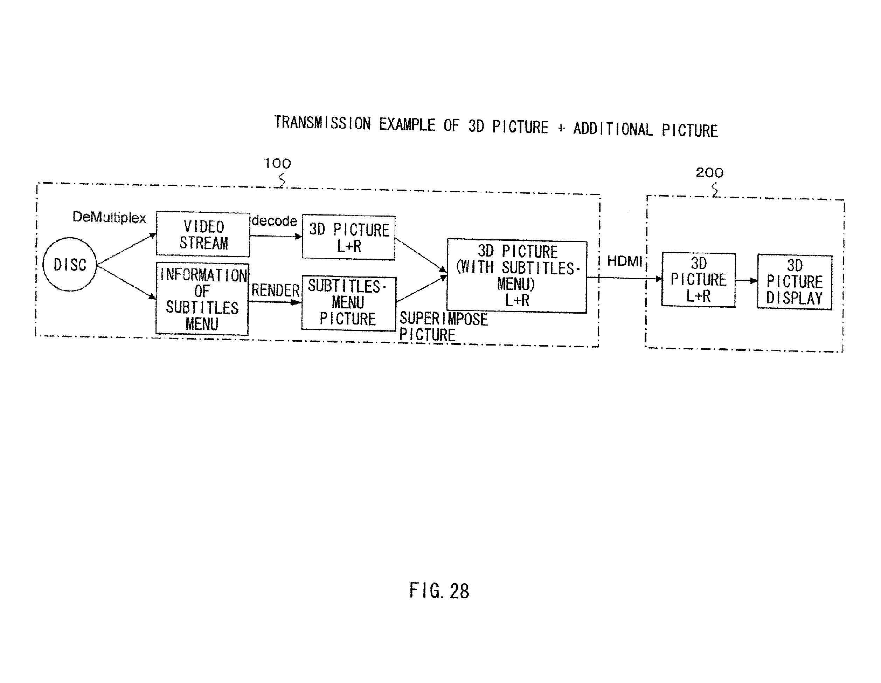

FIG. 28 schematically illustrates a flow of data in this case. The flow of data in the disc player 100 will be described. A video stream from a disc is decoded to obtain stereoscopic picture data (left-eye picture data and right-eye picture data). Moreover, rendering is performed based on information of subtitles or a menu from the disc to obtain picture data such as subtitles and a menu. Then, the stereoscopic picture data and the picture data such as the subtitles and the menu are superimposed on each other to generate stereoscopic picture data on which a picture such as subtitles or a menu is superimposed, and the stereoscopic picture data is transmitted to the television receiver 200. The flow of data in the television receiver 200 will be described below. The stereoscopic picture data on which the picture such as the subtitles and the menu is superimposed is received from the disc player 100. Then, a stereoscopic picture on which the picture such as subtitles or a menu is superimposed is displayed based on the stereoscopic picture data.

In the embodiment, picture information such as subtitles, a menu or OSD is transmitted in an active space area to the television receiver 200 separately from the stereoscopic picture data. Then, the stereoscopic picture data is corrected in the television receiver 200, and then the picture data such as subtitles, a menu or OSD is superimposed on the stereoscopic picture data. Thereby, an improvement in quality of a process such as correction or picture quality enhancement of stereoscopic picture data is achievable.

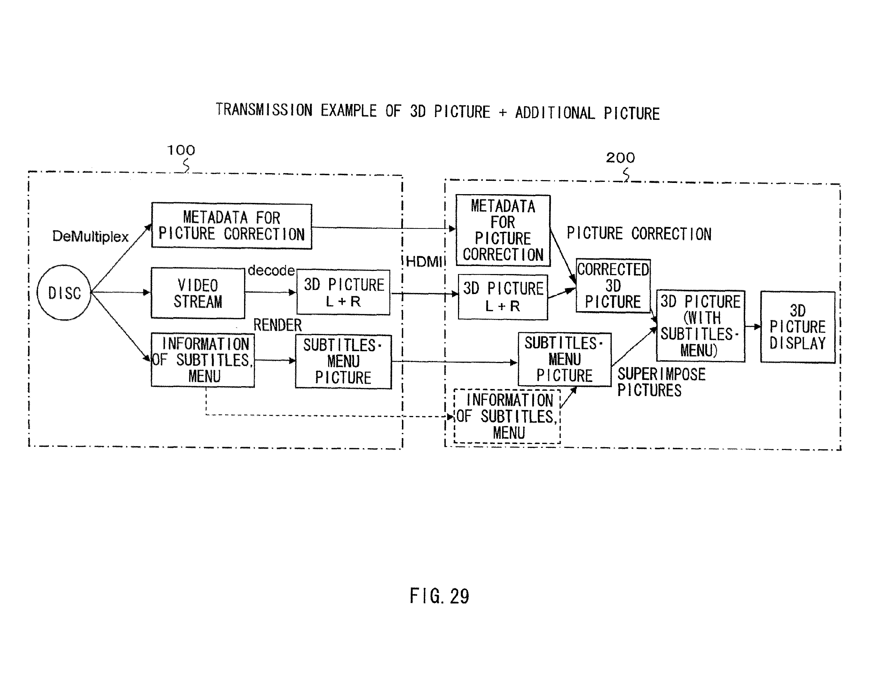

FIG. 29 schematically illustrates a flow of data in this case. The flow of data in the disc player 100 will be described below. A video stream from a disc is decoded to obtain stereoscopic picture data (left-eye picture data and right-eye picture data). Moreover, rendering is performed based on information such as subtitles or a menu from the disc to obtain picture data such as subtitles and a menu. The stereoscopic picture data is allocated to an active video area, and is transmitted to the television receiver 200. Moreover, the picture data such as subtitles or a menu and metadata for picture correction from the disc are allocated to an active space area, and is transmitted to the television receiver 200.

The flow of data in the television receiver 200 will be described below. The stereoscopic picture data and the picture data such as subtitles or a menu are received separately from each other from the disc player 100. Moreover, the metadata for picture correction is received from the disc player 100. Correction of the stereoscopic picture data is performed based on the metadata for picture correction. Then, the corrected stereoscopic picture data and the picture data such as subtitles and a menu are superimposed on each other to generate stereoscopic picture data on which a picture such as subtitles or a menu is superimposed. A stereoscopic picture on which the picture such as subtitles or a menu is superimposed is displayed based on the stereoscopic picture data.

In addition, as indicated by a broken line in FIG. 29, information such as subtitles or a menu from the disc may be allocated to an active space area, and then be transmitted from the disc player 100 to the television receiver 200. In this case, rendering is performed in the television receiver 200 based on information such as subtitles and a menu to obtain picture data such as subtitles and a menu, and the picture data is superimposed on corrected stereoscopic picture data.

Transmission of subtitle information

An information block including the following information is transmitted with use of an active space area from the disc player 100 (a source device) to the television receiver 200 (a sink device). Thereby, subtitles, a message or a character string is allowed to be displayed on the television receiver 200.

(a) Character string
(b) Character display direction (left→right, right→left, top→bottom)
(c) Display area: position (coordinates), size, background color (transmittance $\alpha$ may be specified)
(d) Character display position, character alignment (horizontal alignment: left alignment/right alignment/center alignment/equal spacing, vertical alignment: top alignment/center alignment/bottom alignment, and the like)
(e) Character spacing, linefeed width
(f) 3D display method
Display offset: displaying pictures shifted by x dots in a horizontal direction Shading

etc.

(g) Character code type
(h) Font type
(i) Font size
(j) Character decoration (boldface, oblique face, underline and the like)
(k) Character color (transmittance $\alpha$ may be specified)
(l) Width and color of outline of character (transmittance $\alpha$ may be specified)
(m) Use of background texture
When using background texture:

* Image ID used as a texture (transmitted in a picture area)

(n) Use of character texture
When using character texture:

* Image ID used as a texture

(o) External character defining function (an external character is transmitted in a bitmap format separately)
(p) Display time
* Number of frames continuing display
Previous subtitles are eliminated when subsequent subtitle information is transmitted. To eliminate subtitles, subtitle information which is a null character string may be transmitted.
(q) Animation (fade-in, fade-out, scrolling and the like)
* Subtitle information may be transmitted in each frame, or at the start of subtitle display, information of display time and animation may be transmitted.

In the BD-ROM specification, as a subtitle data recording format, two types, that is, PG (Presentation Graphics) and TextST (Text Subtitle) are defined. The PG is a format of recording subtitle data as picture data. The TextST is a format of recording subtitle data as a text or font data.

In subtitle data in the TextST format, the following character display information is stored in a BD-ROM disc.

· Character string
· Display area: position, size, background color
Character display position (coordinates, width of display area), character alignment (vertical alignment, horizontal alignment), linefeed width
* Font type, character decoration, font size, character color, width and color of outline of character
etc.

When an information block including subtitle data in the TextST format is allocated to an active space area of transmission data, the disc player 100 is allowed to transmit the subtitle data in the TextST format to the television receiver 200 through the HDMI. The television receiver 200 obtains the subtitle data in the TextST format from the active space area of the transmission data, thereby the television receiver 200 is allowed to display subtitles.

In addition, the subtitle data in the TextST format includes information relating to a timing of displaying subtitles. Therefore, the disc player 100 starts transmission of subtitle data at a timing of starting subtitle display and finishes subtitle display by specifying a display time or transmitting a null character string at a timing of finishing subtitle display.

As data of superimposed subtitles and characters in Japanese digital broadcasting includes the following information.

· Character string
· Character size (font size)
· Character color, background color
· Underline
· outline
·Typeface
· Font
· Scrolling
· External character

At present, Japanese digital broadcasting is not ready for 3D. However, in the case where Japanese digital broadcasting is ready for 3D in future, when the disc player 100 reproduces digital data recorded on a BD-RE disc, data of superimposed subtitles and characters may be included in the data. In this case, the disc player 100 is allowed to transmit the data of superimposed subtitles and characters to the television receiver 200 through the HDMI by allocating an information block including the data of the superimposed subtitles and characters to an active space area of transmission data. The television receiver 200 obtains the data of the superimposed subtitles and characters from the active space area of the transmission data to display subtitles.

Data of closed captions used in the US may be transmitted from the disc player 100 to the television receiver 200 with use of the active space area of transmission data as in the same manner as that in the case where the above-described subtitle data or the like is transmitted.

When necessary data for subtitle display as subtitle information is transmitted through the HDMI, the television receiver 200 (the sink device) generates subtitle picture data, and performs a process of a 3D display method (display offset, shading). Then, the subtitle picture data is superimposed on left-eye picture data and right-eye picture data constituting stereoscopic picture data to display subtitles.

Generation of the above-described subtitle picture data, the process of the 3D display method, a superimposing process and the like are executed in, for example, the video signal processing circuit 208, the graphics generation circuit 209 and the like of the television receiver 200 (refer to FIG. 3)

Transmission of camera information during shooting

The disc player 100 transmits, to the television receiver 200, camera information during shooting as metadata for correcting stereoscopic picture data. It is necessary to transmit information of the direction, zoom or the like of a camera with frame accuracy. Therefore, transmission with frame accuracy is allowed to be guaranteed by allocating the information to an active space area of a plane where stereoscopic picture data is provided to transmit the information.

For example, the camera information during shooting includes:

· Distance between cameras
· Directions of L camera and R camera
· View angles of L camera and R camera
· Lens information and focus information of L camera and R camera etc.

The television receiver 200 detects a depth and corrects stereoscopic picture data (left-eye picture data and right-eye picture data). The CPU 221 of the television receiver 200 analyzes a left-eye picture and a right-eye picture based on the left-eye picture data and the right-eye picture data to extract a feature point and detect a correlation between the left-eye picture and the right-eye picture, thereby depth information is estimated.

Moreover, after estimating the depth information, the CPU 221 of the television receiver 200 corrects the left-eye picture data and the right-eye picture data based on information of a screen size and a viewing distance (a distance between the television receiver 200 and a viewer). Thereby, the television receiver 200 is allowed to display a stereoscopic picture with correct parallax.

A flow of a process of detecting a depth to correct stereoscopic picture data will be described below. First, the CPU 221 estimates depth information. The CPU 221 analyzes left-eye (L) picture data and right-eye (R) picture data constituting stereoscopic picture data to determine a correlation between an L picture and an R picture. It may be assumed that in vertical direction vectors of cameras for the L and R pictures taken for displaying a stereoscopic picture are equal to each other.

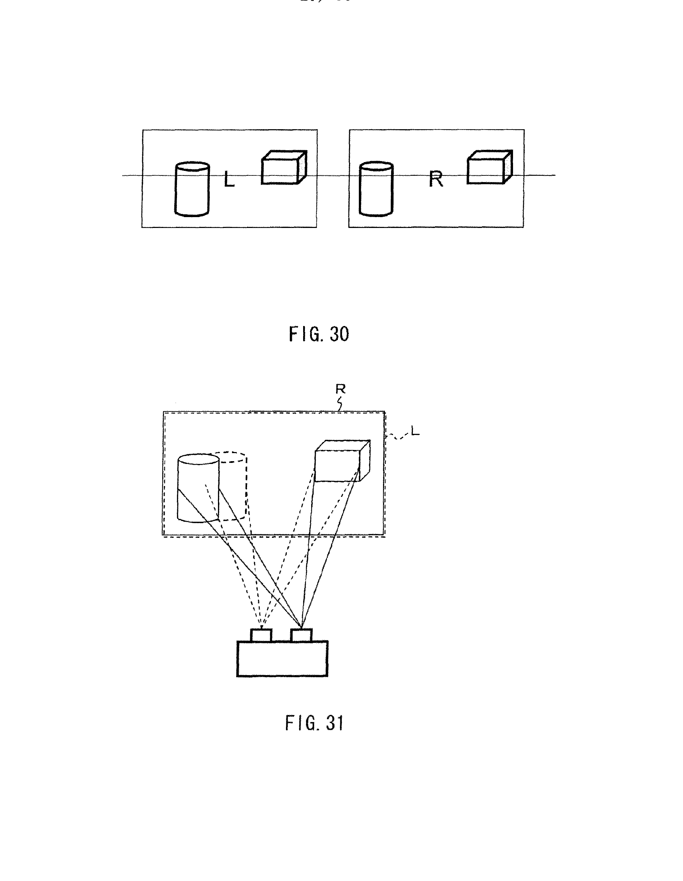

Therefore, as illustrated in FIG. 30, a correlation between the L and R pictures is determined with respect to a line in a horizontal direction. In this case, the correlation is determined with use of luminance/color information, picture information subjected to filtering (edge detection) such as differentiation on luminance/color, thereby to determine a horizontal deviation between areas and points of pictures.

In the case where the L picture and the R picture are as illustrated in FIG. 30, as illustrated in FIG. 31, right and left sight lines toward a cylindrical object intersect each other at the front of a screen surface. Therefore, it is perceptible that the cylindrical object is provided at front of a reference plane (the screen surface). In this case, a depth is allowed to be determined by calculation. Moreover, right and left sight lines toward a rectangular parallelepiped object intersect each other on the screen surface. Therefore, it is perceptible that the rectangular parallelepiped object is provided on the reference plane (the screen surface).

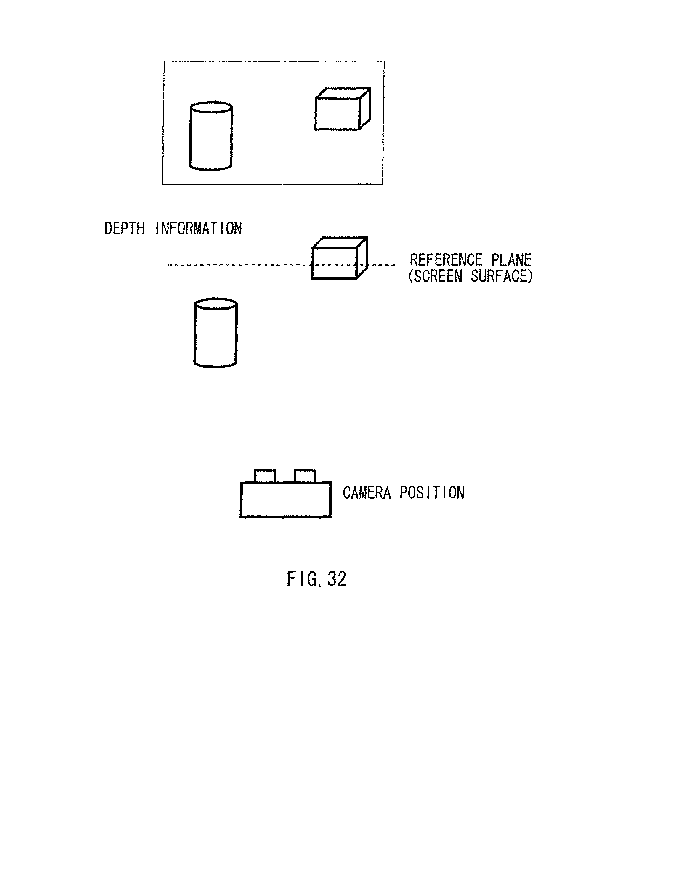

The depth information of the picture is allowed to be represented as illustrated in FIG. 32. The cylindrical object is provided at front of the reference plane, and the rectangular parallelepiped object is provided in a position on the reference plane. Moreover, it is assumable that the objects are placed at the midpoint between a position in the L picture and a position in the R picture. Thus, the depth information is allowed to be estimated.

When information such as a distance between lenses of a twin-lens camera or the angles of lenses are allowed to be used as camera shooting conditions, the depth information in each area or each point is allowed to be estimated more accurately from information of the position and angle of the camera, and information of a horizontal deviation between areas or points.

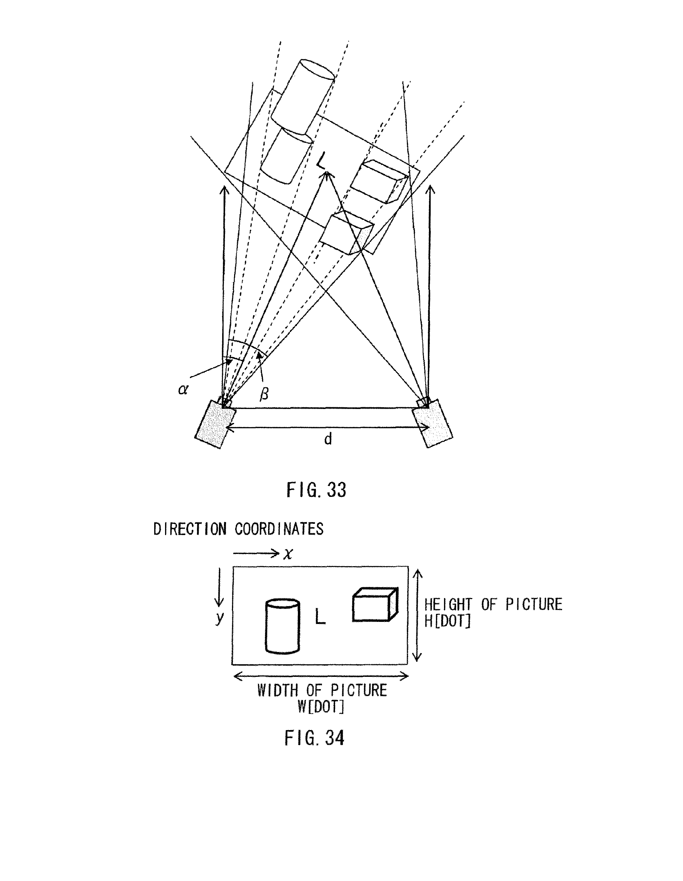

As illustrated in FIG. 33, the direction of a camera is represented by $\alpha$, the view angle (in a horizontal direction) of a camera is represented by $\beta$, and a distance between cameras is represented by d. As illustrated in FIG. 34, the number of dots in a width of a picture is represented by W and the number of dots in a height of the picture is represented by H.

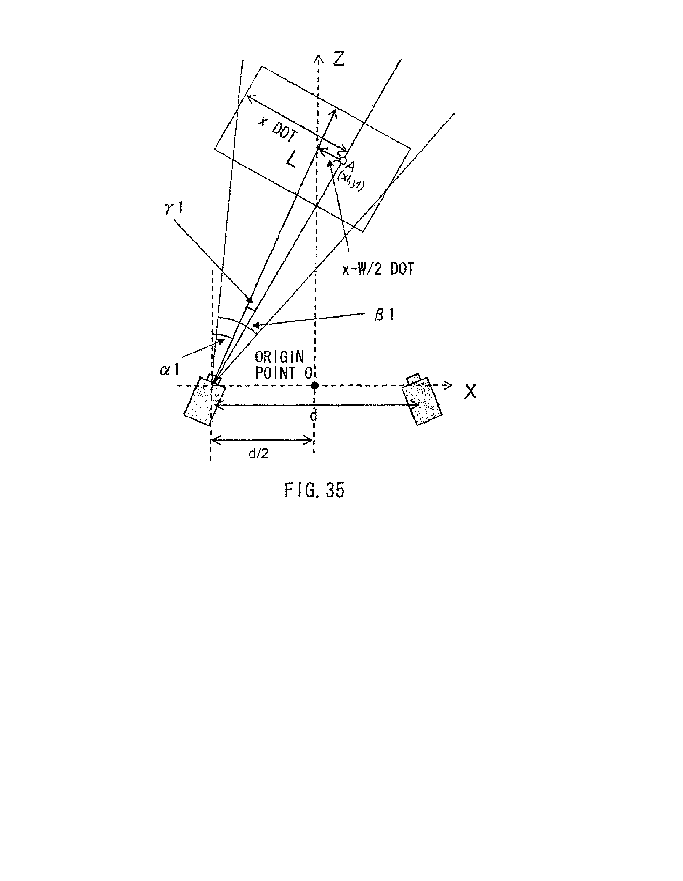

As illustrated in FIG. 35, with respect to an object A displayed in a position (x1, y1) of a left-eye (L) picture, an angle $\gamma 1$ between the direction (the axis) of a camera and a line connecting the object to the camera is represented by an expression (1).

$$\gamma l = sgn(xl - W/2) \cdot atan((xl/W - 1/2) \cdot tan(\beta l/2)) \quad ...(1)$$

Therefore, the object A is placed on a straight line represented by an expression (2).

$$X = tan(\alpha l + \gamma l) \cdot Z - d/2 \quad ...(2)$$

Moreover, with respect to an object A displayed in a position (xr, yr) of a right-eye (R) picture (not illustrated), an angle $\gamma r$ between the direction (the axis) of a camera and a line connecting the object to the camera is represented by an expression (3).

$$\gamma r = sgn(xr - W/2) \cdot atan((xr/W - 1/2) \cdot tan(\beta r/2)) \quad ...(3)$$

Therefore, the object A is placed on a straight line represented by an expression (4).

$$X = tan(-\alpha r + \gamma r) \cdot Z + d/2 \quad ...(4)$$

When the expressions (2) and (4) are solved, the position (Z, X) of the object A during shooting is determined as indicated by the following expressions (5) and (6).

$$Z = d/(tan(\alpha l + \gamma l) - tan(-\alpha r + \gamma r)) \quad ...(5)$$

$$X = d \cdot (tan(\alpha l + \gamma l) + tan(-\alpha r + \gamma r))/(2 \cdot (tan(\alpha l + \gamma l) - tan(-\alpha r + \gamma r)) \quad ...(6)$$

When a correlation between the left-eye (L) picture and the right-eye (R) picture is determined in such a manner to determine coordinates of an object in each picture, the position of the object during shooting is allowed to be calculated, and spatial placement during shooting is allowed to be calculated. Therefore, the depth information of each area and each point is allowed to be estimated more accurately.

The CPU 221 reconfigures stereoscopic picture data (left-eye picture data and right-eye picture data) after estimating the position and the depth information (spatial placement during shooting) of the object in the above-described manner so that a stereoscopic picture is allowed to be properly displayed with a 3D depth in viewing environment of a user. In this case, the CPU 221 uses information of a screen size (the physical size of a screen displaying 3D video) and a sight distance (a distance between the television receiver and a viewer). Moreover, in this case, the CPU 221 sets the position and depth information of the object determined by estimation in a modeling process, and then performs processes of viewpoint/light source setting, rendering and video output.

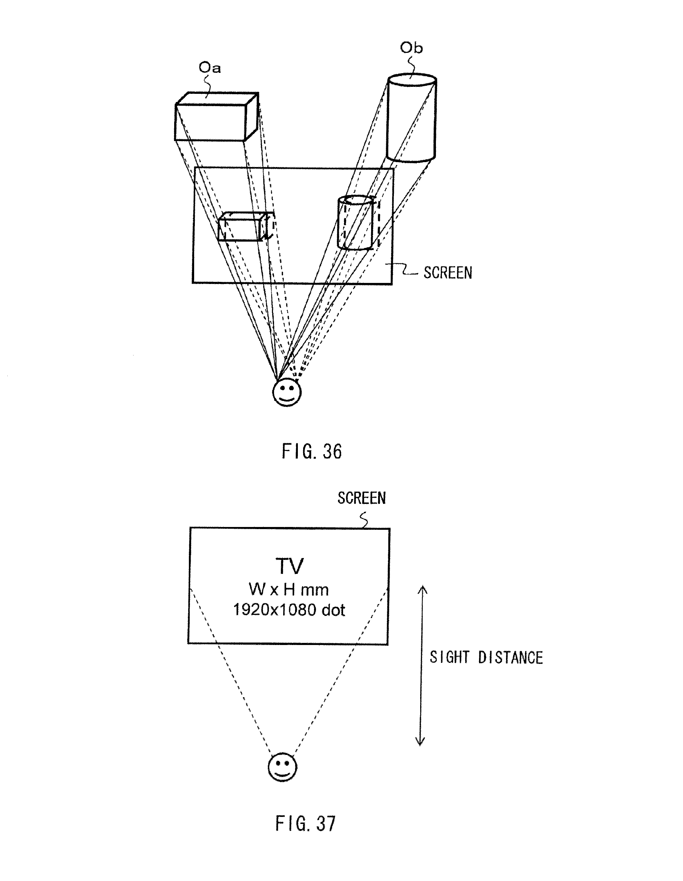

A flow of reconfiguration of the stereoscopic picture data (the left-eye picture data and right-eye picture data) will be briefly described below. In the case where the stereoscopic picture data is generated, as illustrated in FIG. 36, 2D pictures (a left-eye picture and a right-eye picture) are generated by modeling in a 3D (three-dimensional) space and projecting on a 2D (two-dimensional) screen. In a modeling example in FIG. 36, a rectangular parallelepiped object Oa and a cylindrical object Ob are placed behind a screen surface. In this case, as illustrated in FIG. 37, 2D pictures (the left-eye picture and the right-eye picture) having correct parallax are allowed to be generated with use of a screen size and a viewing distance as parameters.

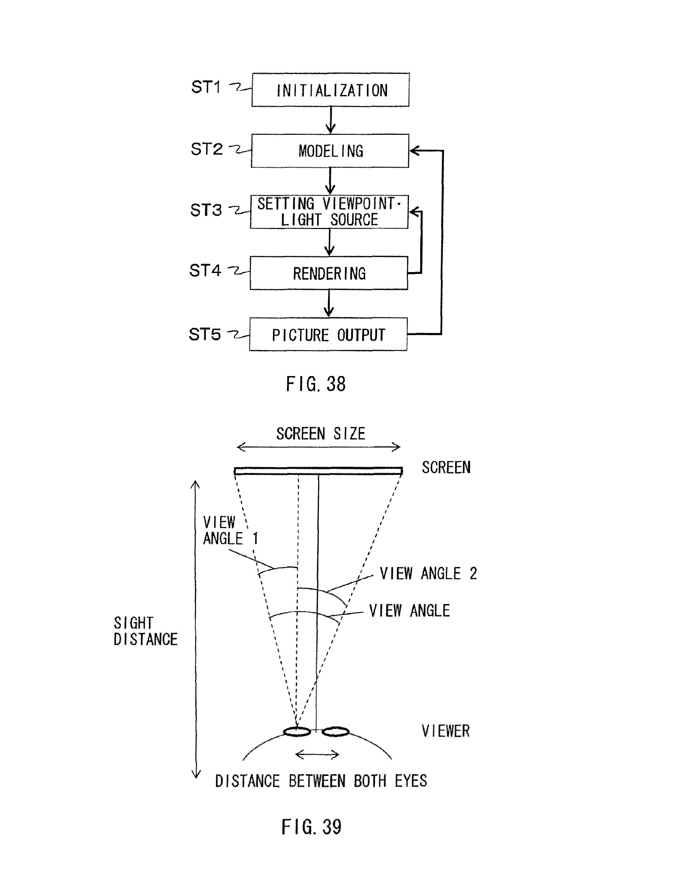

A flowchart in FIG. 38 schematically illustrates a flow of reconfiguration of stereoscopic picture data in the CPU 221. First, the CPU 221 performs an initialization process in a step ST1. In this case, the CPU 221 performs various initialization processes including initialization of various libraries and memories, setting of a VRAM (a frame buffer), output setting and the like.

Next, the CPU 221 performs a modeling process in a step ST2. In the modeling process, the CPU 221 performs a calculation of each vertex data to be rendered in each rendering frame. In this case, a model of each object is constructed. Then, each vertex to be rendered is calculated on a "model coordinate system (local coordinate system)" of each object. Then, each object to be rendered is placed in a "world coordinate system" space. In other words, vertex data of each object to be rendered which is calculated on a "model coordinate system" is placed on a "world coordinate system".

Next, the CPU 221 performs a process of setting a viewpoint and a light source in a step ST3, and performs rendering in a step ST4, thereby to generate left picture data and right picture data. In the case where the stereoscopic picture data is generated, viewpoint setting is important. In this case, the CPU 221 performs viewpoint and light source setting and rendering for a left-eye picture to generate left-eye picture data, and then performs viewpoint and light source setting and rendering for a right-eye picture to generate right-eye picture data.

In the process of setting the viewpoint and the light source, the position and direction of the viewpoint are set. In the "world coordinate system" on which each object to be rendered is placed, a viewpoint, a gaze point, an up vector (which specifies which direction is the up direction of a camera to determine the position of the viewpoint), the view angle of a camera, and the aspect ratio of the camera are set. In this case, coordinates of left-eye and right-eye viewpoints at a distance equal to a distance between left and right eyes are determined. The gaze point is specified to a common point for left-eye and right-eye gaze points. The up vector is specified to a common direction for the left eye and the right eye so that left and right eyes are horizontally aligned.

As the view angle (viewing angle) of the camera, a view angle determined from the screen size of the television receiver 200 and the viewing distance is specified. In this case, a height and a width as the screen size are determined based on information relating to the screen size obtained from the television receiver 200. As the viewing distance, a value set by a user or a value of a recommended viewing distance (for example, a value equal to 2 to 3 times as high as the height of a screen) based on the screen size is used.

In the case where a view angle in a vertical direction is specified as the view angle of the camera, the view angle in actual visual environment is allowed to be determined from the height of the screen size and the viewing distance. In the case where the view angle in a horizontal direction is specified as the view angle of the camera, the view angle in actual visual environment is allowed to be determined from the width of the screen size and the viewing distance. As the aspect ratio of the camera, an aspect ratio of a picture to be outputted is specified. For example, in the case where the picture is outputted in a Full HD (1920×1080 16:9) format, the aspect ratio is specified to 16:9.

FIG. 39 is a reference diagram for describing a method of calculating the view angle and the aspect ratio of the camera. In the method of calculating, more accurate values of the view angle and the aspect ratio are obtainable. In this case, a view angle 1 is determined by an expression (7), and a view angle 2 is determined by an expression (8). Then, the view angle is determined by an expression (9) as a value obtained by adding the view angle 1 and the view angle 2.

$$[\text{view angle 1}] = \text{atan} (([\text{screen size}]/2 - [\text{distance between both eyes}]/2)/[\text{viewing distance}])$$

$$...(7)$$

$$[\text{view angle 2}] = \text{atan}(([\text{screen size}]/2 + [\text{distance between both eyes}]/2)/[\text{viewing distance}])$$

$$...(8)$$

[view angle]=[view angle 1]+[view angle 2]

=atan(([screen size]/2−[distance between both eyes]/2)/[viewing distance])

+atan(([screen size]/2+[distance between both eyes]/2)/[viewing distance ]) ...(9)

Moreover, in the case where the specified aspect ratio of the camera is [width]/[length], the aspect ratio (width/length) is determined by an expression (10). [aspect ratio (width/length)]=cos([view angle]/2-[view angle 1])*[aspect ratio of outputted video (width/length)=cos(atan(([screen size]/2+[distance between both eyes]/2)/[viewing distance])-atan(([screen size]/2-[distance between both eyes]/2)/[viewing distance]))*[aspect ratio of outputted video (width/length)] ... (10)

Moreover, in the case where the specified aspect ratio of the camera is a ratio of [height]/[width], the aspect ratio (height/width) is the inverse of the expression (9).

In the process of rendering, texture mapping, a depth test, an alpha test, a stencil test, blending, various effect processes and the like are performed. Then, in the process of rendering, left-eye picture data and right-eye picture data corresponding to a final picture to be displayed are generated to be expanded (rendered) to a VRAM (a frame buffer).

Next, the CPU 221 reads out the left-eye picture data and the right-eye picture data expanded (rendered) to the VRAM, that is, corrected left-eye picture data and corrected right-eye picture data in a step ST5, and outputs the data to, for example, the video signal processing circuit 208.

Transmission of picture information such as menu or OSD

An information block including picture information (compressed picture data) of a menu or OSD is transmitted with use of an active space area from the disc player 100 (the source device) to the television receiver 200 (the sink device). Thereby, the television receiver 200 is allowed to display the menu or the OSD. In this case, the menu means a menu of a disc such as a DVD or a BD, and the OSD means information display, a menu or the like of a disc player. The picture information is information obtained by compressing a picture of the menu or the OSD by, for example, a color pallet, run length encoding or the like.

In this case, information such as a picture size or a display position is also transmitted in addition to the above-described picture information (compressed picture data) of the menu or the OSD from the disc player 100 to the television receiver 200. An example of the information to be transmitted will be described below.

(a) Picture size
(b) Display position
(c) 3D display method
· Offset
· Varying color pallets for L and R
· Shading
etc.
(d) Transmittance $\alpha$
(e) Display time
(f) Animation (fade-in, fade-out, scrolling or the like)
· Subtitle information may be transmitted in each frame, or information of the display time and the animation may be transmitted at the start of subtitle display.
(g) Picture information (compressed picture data)
· Color pallet
· picture data

In the BD-ROM specification, as a recording format of menu data, IG (Interactive Graphics) is defined. Moreover, in the BD-ROM specification, as a recording format of subtitle data, PG (Presentation Graphics) is defined. In the IG and the PG, picture data is compressed by run length encoding using a color pallet. A plurality of IG and PG objects may be included in one screen. The IG and the PG objects may be temporarily rendered in the disc player 100, and may be recompressed by a color pallet and run length encoding to be included in the information block as described above, and then the information block may be transmitted.

Alternatively, each of the IG and PG objects may be included in the information block in order, and the information block may be transmitted from the disc player 100 to the television receiver 200, and then the objects may be rendered in order of data placement in the television receiver 200. In this case, when the objects are rendered in order of data placement in the television receiver 200, all of the IG and PG objects are allowed to be rendered in the television receiver 200.

Transmission of auxiliary picture data for shift display

As a method of easily adjusting the sense of depth in a stereoscopic picture (a 3D picture) in the television receiver 200, a method called shift display of pictures is used. The sense of depth in the stereoscopic picture is allowed to be adjusted forward or backward by shifting the display positions of the left-eye (L) picture and the right-eye (R) picture in a horizontal direction by a few dots. For example, when the left-eye (L) picture and the right-eye (R) picture are shifted to the left and the right, respectively, the whole stereoscopic picture is shifted backward. Moreover, for example, when the left-eye (L) picture and the right-eye (R) picture are shifted to the right and the left, respectively, the whole stereoscopic picture is shifted forward.

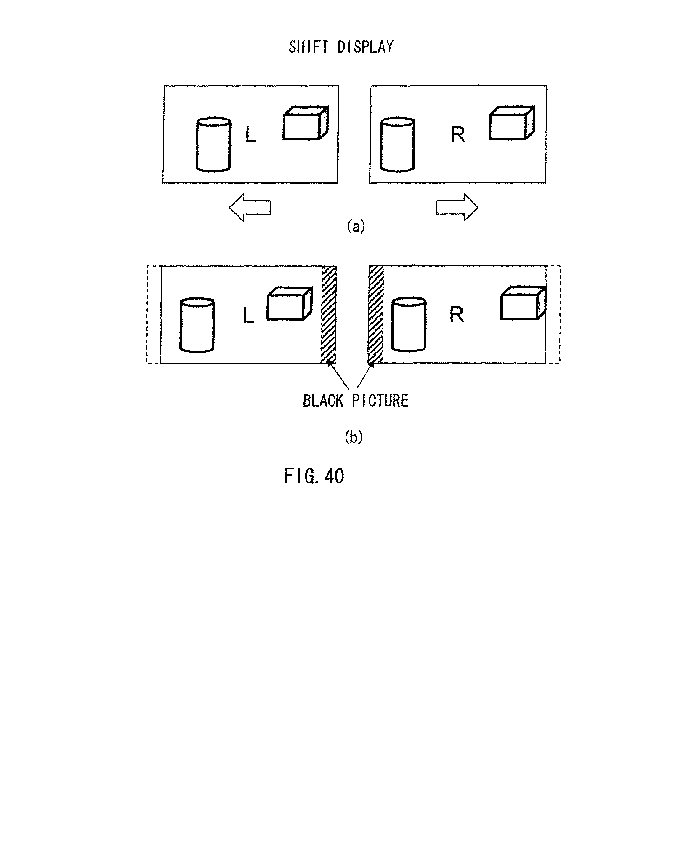

When the display position of each of the left-eye (L) picture and the right-eye (R) picture is shifted, in the case where picture data in an edge part on a side opposite to a side where each picture is shifted, black is displayed in the edge part with a width corresponding to a shifted amount is displayed black. For example, when the left-eye (L) picture and the right-eye (R) picture before being shifted are displayed as illustrated in a part (a) in FIG. 40, the left-eye (L) picture and the right-eye (R) picture are shifted to the left and the right, respectively. When a stereoscopic picture is pepped up too forward, fatigue is increased or some users dislike to view the stereoscopic picture popped up too forward, so such a picture shift is performed to solve such issues, However, such a picture shift causes a shortage of picture data, so as illustrated in a part (b) in FIG. 40, black is displayed in an edge part of each picture.

The picture block including picture data (auxiliary picture data) for a part where black is displayed during the above-described picture shift is transmitted with use of an active space area from the disc player 100 (the source device) to the television receiver 200 (the sink device). Thereby, an effective picture is allowed to be displayed in a part where black is displayed with use of the auxiliary picture data in a picture shift in the television receiver 200 to prevent black display.

Transmission of picture data for OSD display

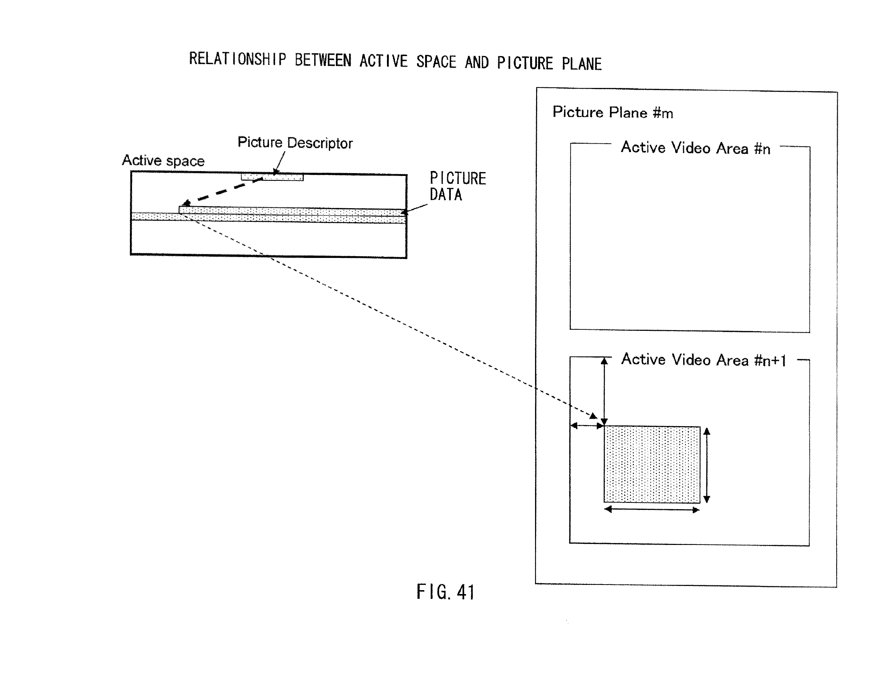

A picture block including picture data for OSD display is transmitted with use of an active space area from the disc player 100 (the source device) to the television receiver 200 (the sink device). Thereby, the OSD is allowed to be displayed on the television receiver 200. In this case, as illustrated in FIG. 41, the picture data for OSD display allocated to the active space area is written to a virtual buffer called a picture plane included in the television receiver 200. In the television receiver 200, the buffer is configured in, for example, a memory (not illustrated) included in the video signal processing circuit 208.

The picture plane has the same configuration as that of an active video area where the stereoscopic picture data (the 3D picture data) is allocated. The television receiver 200 may have a plurality of picture planes. Then, each picture plane is separated into active video areas having attributes indicated by a 3D video format (refer to FIGs. 8 and 9). It is necessary for picture data prepared for the active space area to conform to the attributes of active video areas. The attributes include L/R/depth/Graphics/Graphics-depth, odd/even, YCC/RGB, 4:2:2/4:4:4, deep color, colorimetry and the like.

In addition, as information data allocated to the active space area, a picture descriptor is provided. The picture descriptor includes information such as the position of picture data in the active space area, the picture size, a picture plane number and an active video area number where picture data is to be written, and the position of an active video area where picture data is to be written, and the like.

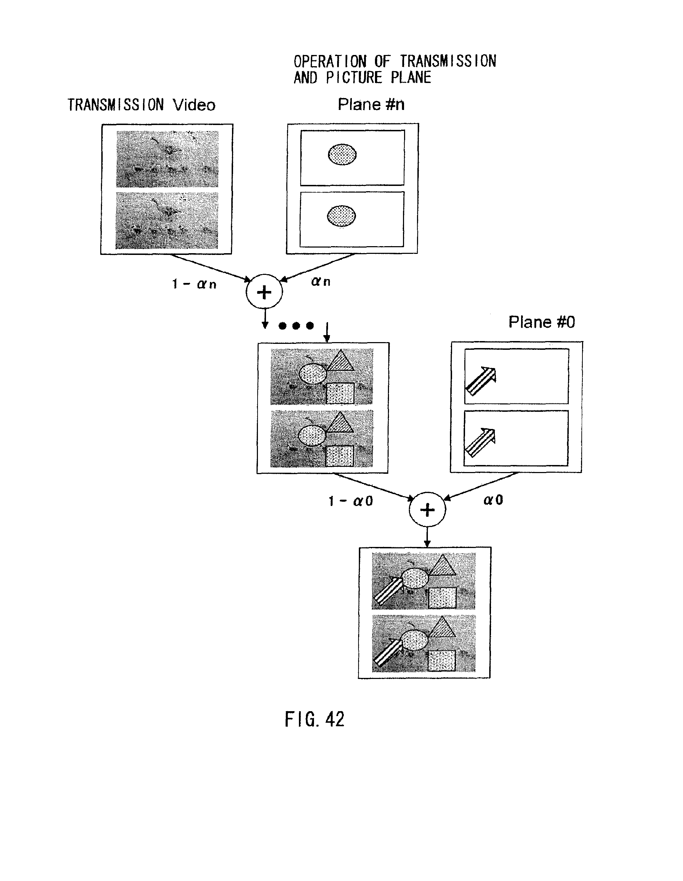

In the television receiver 200, an operation of $\alpha$-blending picture data for OSD display written to a given picture plane with stereoscopic picture data (transmission video) transmitted at a timing of a subsequent frame is performed to display a stereoscopic picture on which an OSD picture is superimposed. FIG. 42 illustrates an $\alpha$-blending operation. As a plurality of picture planes are used, different types of picture data included in additional information are allowed to be written to different picture planes, respectively, and a process such as updating is allowed to be performed efficiently. For example, types of picture data include data of moving pictures, data of a still picture and the like. It is not necessary to update the data of the still picture in each frame, and it may be necessary to update only the data of moving pictures in each frame.

In the case where an $\alpha$ value is 0, a picture of a picture plane is not displayed, so when the $\alpha$ value is set to 0 for a picture plane in which rendering is not completed, display synchronization is allowed. Moreover, data necessary to be displayed at high speed such as a cursor is allowed to be consistently displayed by using an $\alpha$ value other than 0 for each frame.

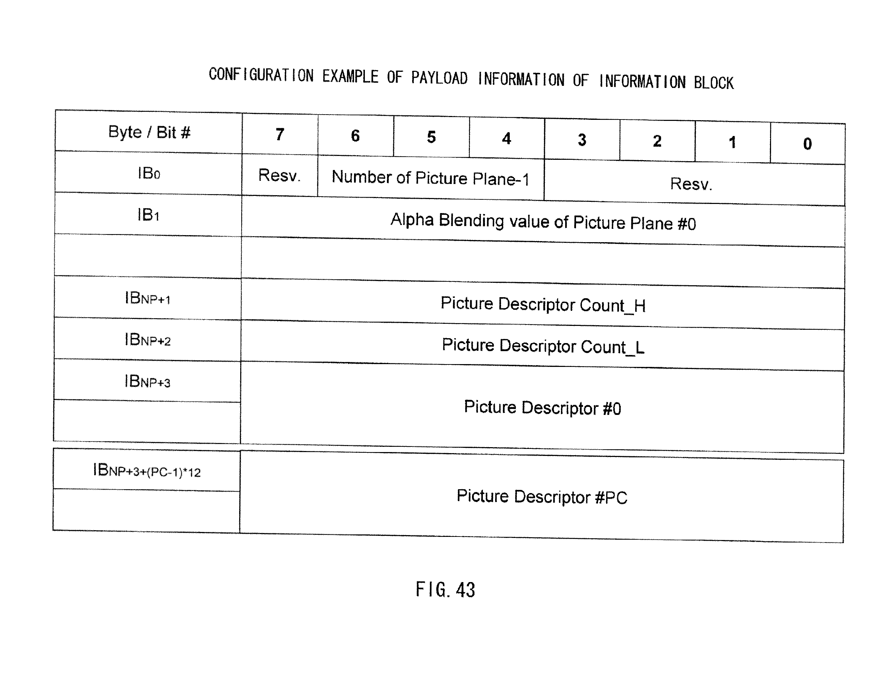

FIG. 43 illustrates a configuration example of information stored in a payload of an information block (refer to FIG. 20).

A value indicating the number of picture planes NP (Number of Picture Plane)-1 is provided in sixth to fourth bits in 0th byte. The number of picture plane is 1 or over. Moreover, the α value of each picture plane (Alpha Blending value of Picture Plane) is provided to each of first to NP bytes. Moreover, 2-byte information (Picture Descriptor Count) indicating the number of picture descriptors is provided in NP+1th to NP+2th bytes. In addition, "H" indicates a high bit side, and "L" indicates a low bit side. The same applies to the following information.

The above-described number of picture descriptors with a fixed length of 12 bytes are provided in NP+3th and later bytes. In each picture descriptor, necessary information for manipulating data stored in a picture block to render the data to a picture plane is written.

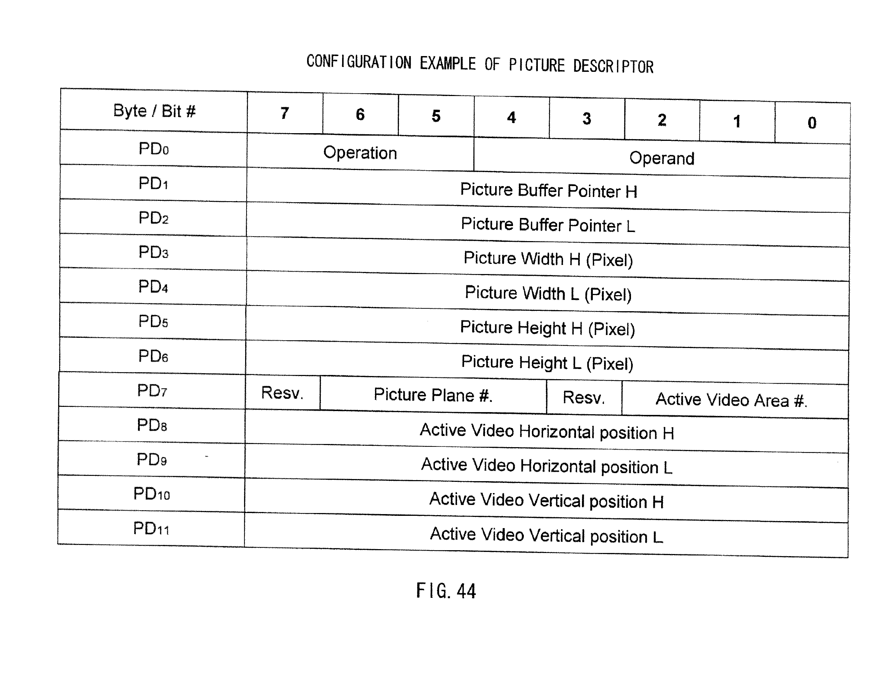

FIG. 44 illustrates a configuration example of a picture descriptor (12 bytes). Three bits, that is, seventh to fifth bits of a 0th byte are operation fields indicating operation. Moreover, 5 bits, that is, fourth to 0th bits of the 0th byte are operant fields indicating a parameter necessary for operation.

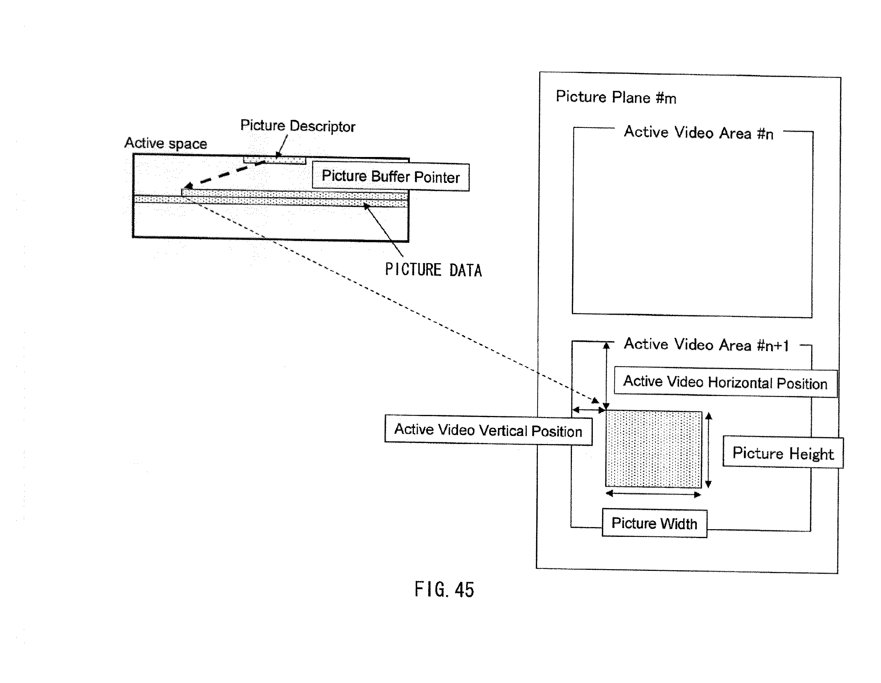

Further, 2-byte pointer information (Picture Buffer Pointer) indicating the location of picture data in an active space area is provided in a first byte and a second byte (refer to FIG. 45). The pointer information indicates, for example, a value obtained by subtracting 1 from the number of pixels from the start of an active space area to the start of a picture block including picture data. In addition, the active space area herein means combined active space areas in the case of the 3D video format including a plurality of active space areas (refer to FIGs. 9 and 10).

Moreover, 2-byte information (Picture Width) indicating a width (the number of pixels) of a rectangular picture is provided in a third byte and a fourth byte (refer to FIG. 45). Moreover, 2-byte information (Picture Height) indicating a height (the number of pixels) of the rectangular picture is provided in a fifth byte and a sixth byte (refer to FIG. 45).

Further, 3-bit information (Picture Plane #) indicating a picture plane number to which picture data is to be written is provided in sixth to fourth bits of a seventh byte. 3-bit information (Active Video Area #) indicating an active video area number to which picture data is to be written in a picture plane is provided in second to 0th bits of the seventh byte. In addition, the active video area number is assigned from 0 after a vertical blanking period.

2-byte information (Active Video Horizontal position) indicating a horizontal position in an active video area to which a rectangular picture is to be written is provided in an eighth byte and a ninth byte. The information indicates a horizontal top left position of the rectangular picture when the top left of the active video area is defined as an origin point (refer to FIG. 45). 2-byte information (Active Video Vertical position) indicating a vertical position in the active video area to which the rectangular picture is to be written is provided in a 10th byte and a 11th byte. The information indicates a vertical top left position of the rectangular picture when the top left of the active video area is defined as an origin point (refer to FIG. 45).

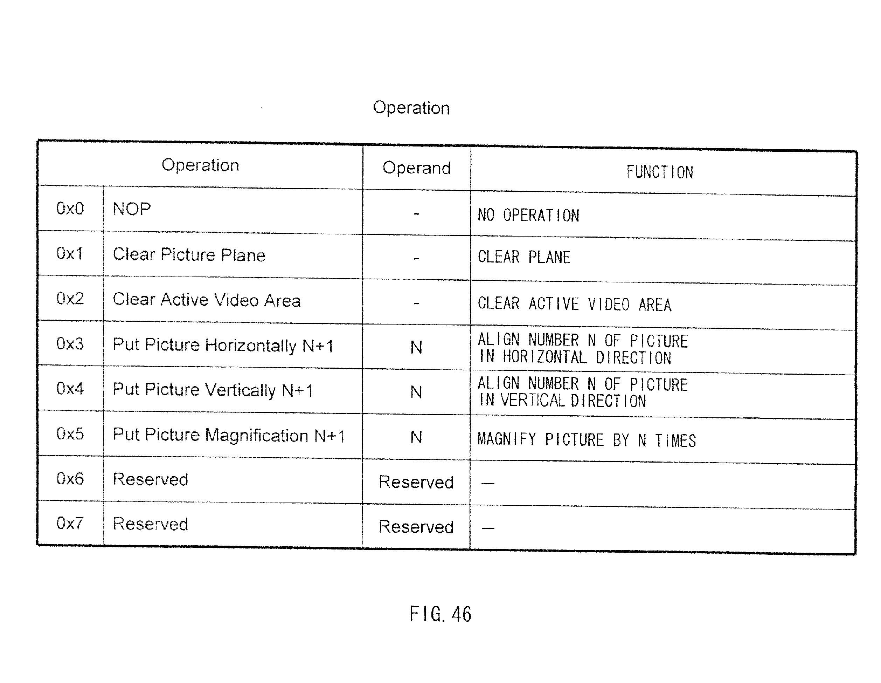

FIG. 46 illustrates a list of operations indicated by an operation field (3 bits) of a picture descriptor. In the case where the operation field is "0x0", "0x0" indicates an operation "NOP". In this operation, no operation is performed. Moreover, in the case where the operation field is "0x1", "0x1" indicates an operation "Clear Picture Plane". In this operation, a plane is cleared.

In the case where the operation field is "0x2", "0x2" indicates an operation "Clear Active Video Area". In the operation, an active video area is cleared. In the case where the operation field is "0x3", "0x3" indicates an operation "Put Picture Horizontally N+1". In the operation, a number N of pictures are aligned in a horizontal direction. In this case, in the operand field (3 bits) of the picture descriptor, as a parameter necessary for operation, "N" is provided.

In the case where the operation field is "0x4", "0x4"indicates an operation "Put Picture Vertically N+1". In the operation, a number N of pictures are aligned in a vertical direction. In this case, in the operand field (3 bits) of the picture descriptor, as a parameter necessary for the operation, "N" is provided. In the case where the operation field is "0x5", "0x5" indicates an operation "Put Picture Magnification N+1". In this operation, a picture is magnified by N times. In this case, in the operand field (3 bits) of the picture descriptor, as a necessary parameter for the operation, "N" is provided.

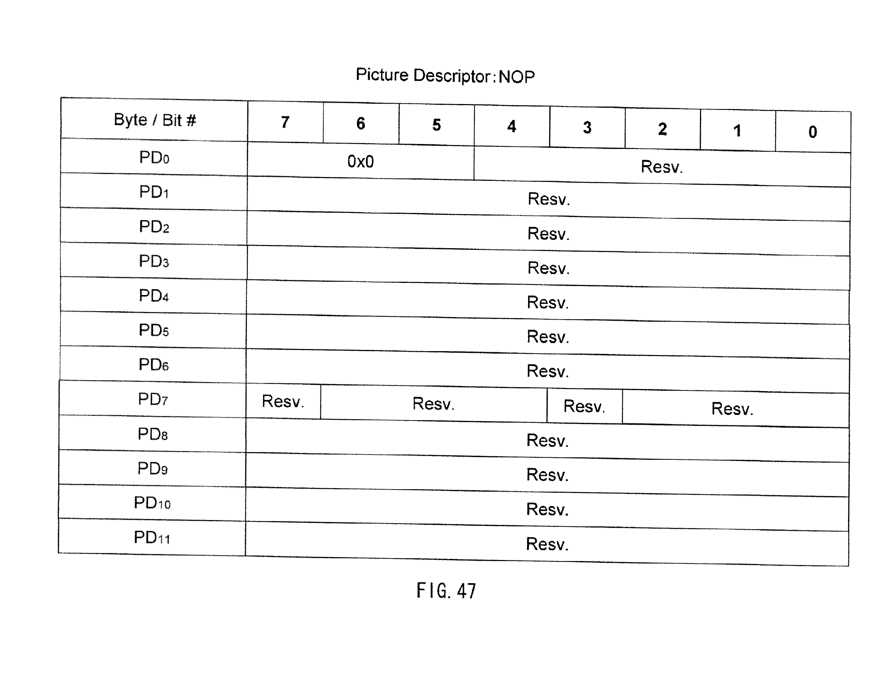

FIG. 47 illustrates a configuration example of the picture descriptor in the case where the operation "NOP" is performed. The operation field is "0x0". In this operation, information is not provided in other fields.

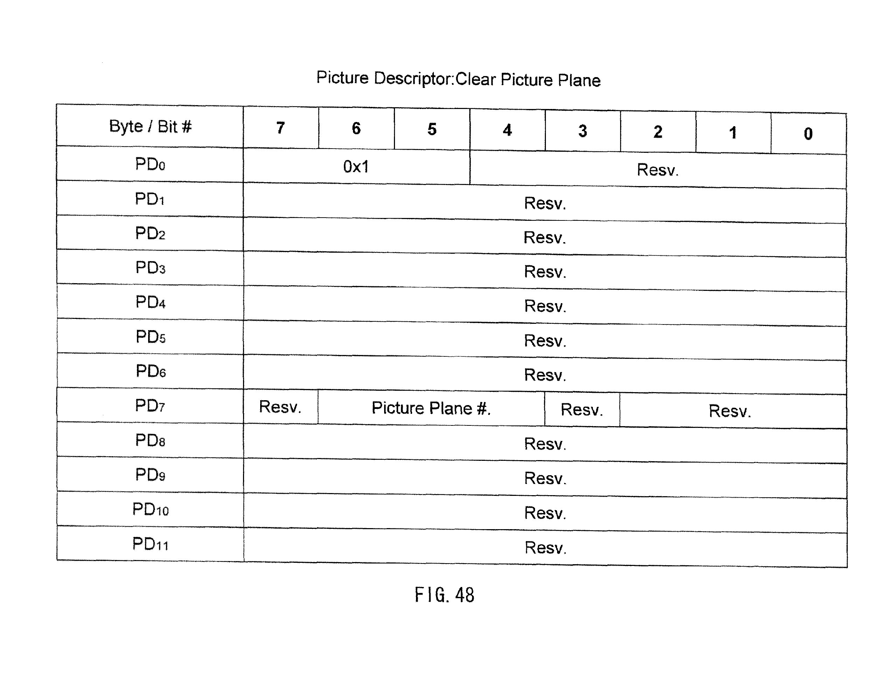

FIG. 48 illustrates a configuration example of the picture descriptor in the case where the operation "Clear Picture Plane" is performed. The operation field is "0x1". Moreover, 3-bit information (Picture Plane #) indicating a picture plane number to be cleared is provided in the sixth to fourth bits of the seventh byte, but information is not provided in other fields. In this case, on the transmission side (the television receiver 200), the picture plane number to be cleared is recognized based on the information (Picture Plane #), and all picture data in the active video area included in the picture plane is cleared.

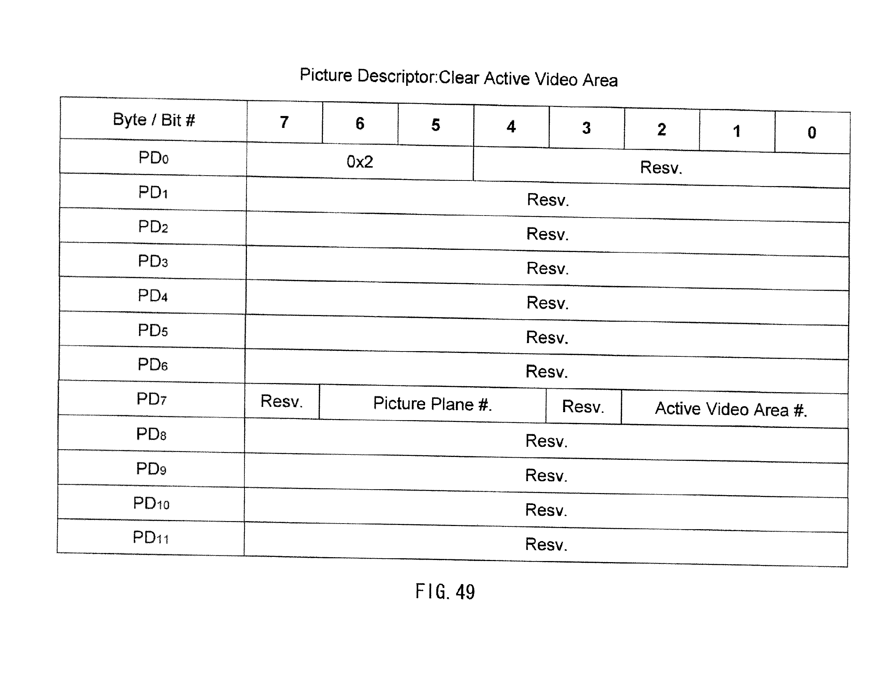

FIG. 49 illustrates a configuration example of the picture descriptor in the case where the operation "Clear Active Video Area" is performed. The operation field is "0x2". Moreover, 3-bit information (Picture Plane #) indicating the number of a picture plane including an active video area to be cleared is provided in the sixth to fourth bits of the seventh byte. Further, 3-bit information (Active Video Area #) indicating the number of an active video area to be cleared is provided in the second to 0th bits of the seventh byte. Information is not provided in other fields.

In this case, on the reception side (the television receiver 200), the picture plane number including the active video area to be cleared is recognized based on the information (Picture Plane #). Then, on the reception side (the television receiver 200), the number of the active video area to be cleared is recognized based on the information (Active Video Area #), and picture data in the active video area is cleared.

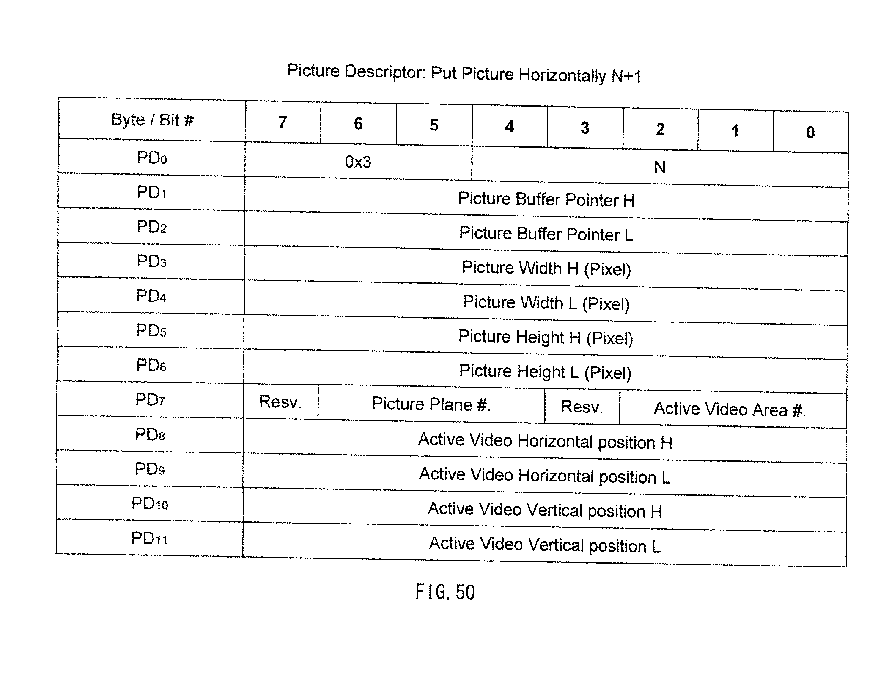

FIG. 50 illustrates a configuration example of the picture descriptor in the case where the operation "Put Picture Horizontally N+1" is performed. The operation field is "0x3", and "N" as a parameter is provided to the operand field. Moreover, 3-bit information (Picture Plane #) indicating the number of a picture plane including an active video area where picture data is to be written is provided in the sixth to fourth bits of the seventh byte. 3-bit information (Active Video Area #) indicating the number of an active video area where picture data is to be written is provided in the second to 0th bits of the seventh byte. In this case, information of other fields is necessary, so information is provided in each field.

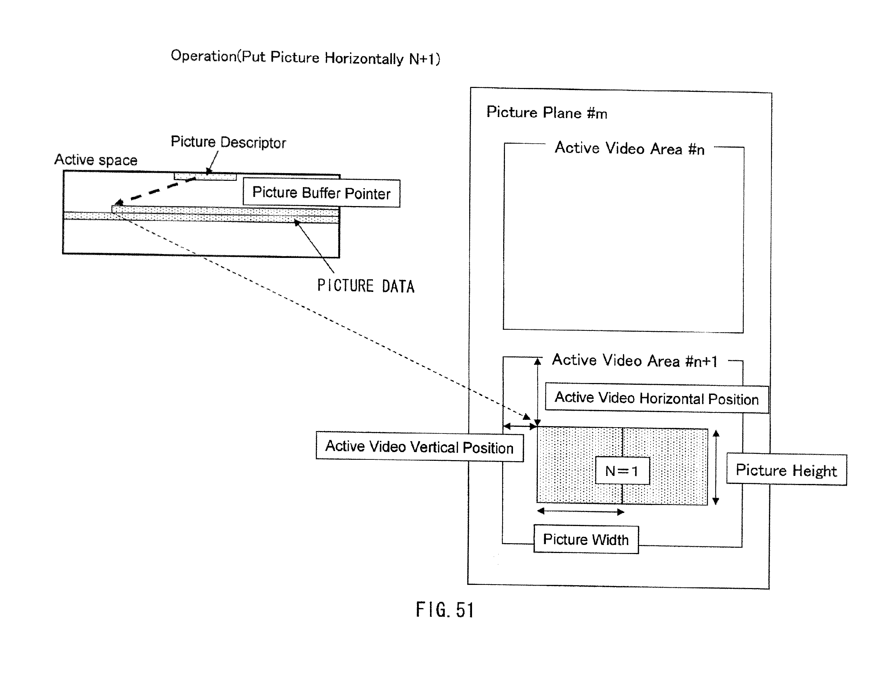

FIG. 51 illustrates an example of an operation by the picture descriptor performing the operation "Put Picture Horizontally N+1" illustrated in FIG. 50. This example is an example in the case of N=1. In this case, on the reception side (the television receiver 200), picture data of the rectangular picture is read out from an active space area based on 2-byte pointer information (Picture Buffer Pointer). Then, on the reception side, the picture data of the rectangular picture is written to a specified active video area of a specified picture plane.

In this case, on the reception side (the television receiver 200), the size of the rectangular picture and the top left position of a rectangular area where picture data of the rectangular picture is to be written in an active video area are recognized. The size of the rectangular picture is recognized based on 2-byte information (Picture Width) indicating the width of the rectangular picture and 2-byte information (Picture Height) indicating the height of the rectangular picture. The top left position of the rectangular area is recognized based on 2-byte information indicating a horizontal position (Active Video Horizontal position) and 2-byte information indicating a vertical position (Active Video Vertical position).

In the case of N=0, only one picture data of the rectangular picture is written to the active video area, but as described above, in the case of N=1, another same picture data is aligned and written in a horizontal direction. In other words, in the case of N=1, two of the picture data of the rectangular picture are aligned and written in the horizontal direction. In addition, in this case, in the case where the position where the picture data is written is out of the active video area, the picture data is clipped in the active video area.

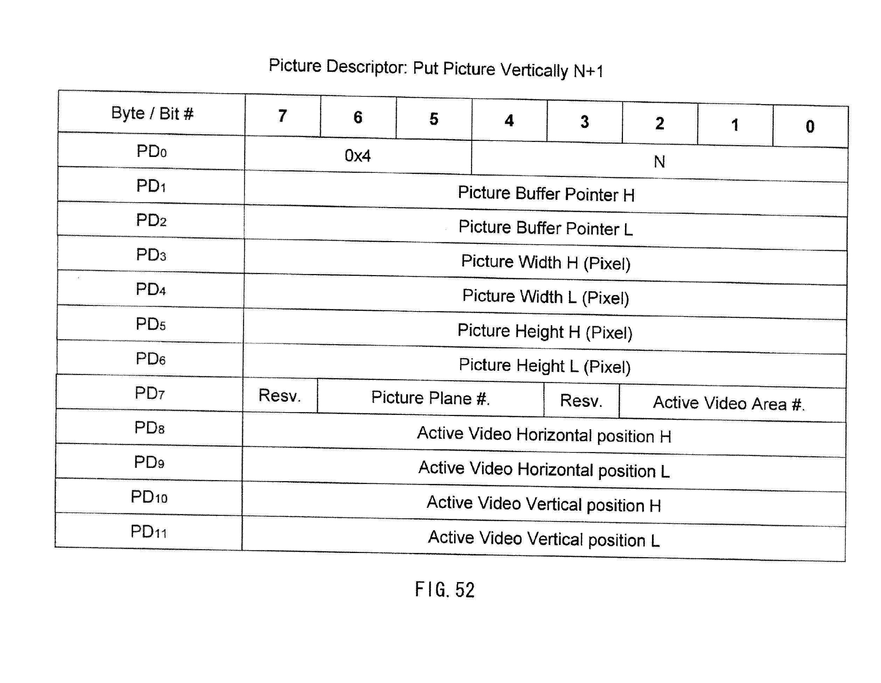

FIG. 52 illustrates a configuration example of the picture descriptor in the case where the operation "Put Picture Vertically N+1" is performed. The operation field is "0x4", and "N" is provided as a parameter to the operand field. Moreover, 3-bit information (Picture Plane #) indicating the number of a picture plane including an active video area where picture data is to be written is provided to the sixth to fourth bits of the seventh byte. Moreover, 3-bit information (Active Video Area #) indicating the number of an active video area where picture data is to be written is provided in the second to 0th bits of the seventh byte. In this case, information of other fields is necessary, so information is provided in each field.

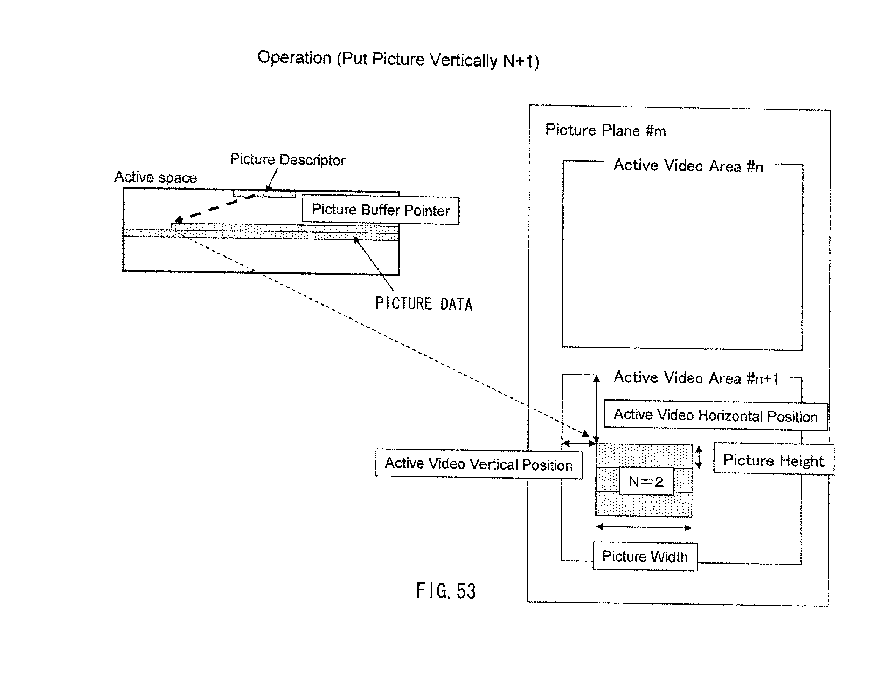

FIG. 53 illustrates an example of an operation by the picture descriptor performing the operation "Put Picture Vertically N+1" illustrated in FIG. 52. The example is an example in the case of N=2. In this case, on the reception side (the television receiver 200), picture data of the rectangular picture is read out from the active space area based on 2-byte pointer information (Picture Buffer Pointer). Then, on the reception side, the picture data of the rectangular picture is written to a specified active video area of a specified picture plane.

In this case, on the reception side (the television receiver 200), the size of the rectangular picture, and the top left position of a rectangular area where the picture data of the rectangular picture is to be written in the active video area are recognized. The size of the rectangular picture is recognized based on 2-byte information (Picture Width) indicating the width of the rectangular picture and 2-byte information (Picture Height) indicating the height of the rectangular picture. The top left position of the rectangular area is recognized based on 2-byte information indicating a horizontal position (Active Video Horizontal position) and 2-byte information indicating a vertical position (Active Video Vertical position).

In the case of N=0, only one picture data of the rectangular picture is written to the active video area, but as described above, in the case of N=2, another two of the same picture data are aligned and written in a vertical direction. In other words, in the case of N=2, 3 of the picture data of the rectangular picture are aligned and written in the vertical direction. In addition, in this case, in the case where the position where the picture data is written is out of the active video area, the picture data is clipped in the active video area.

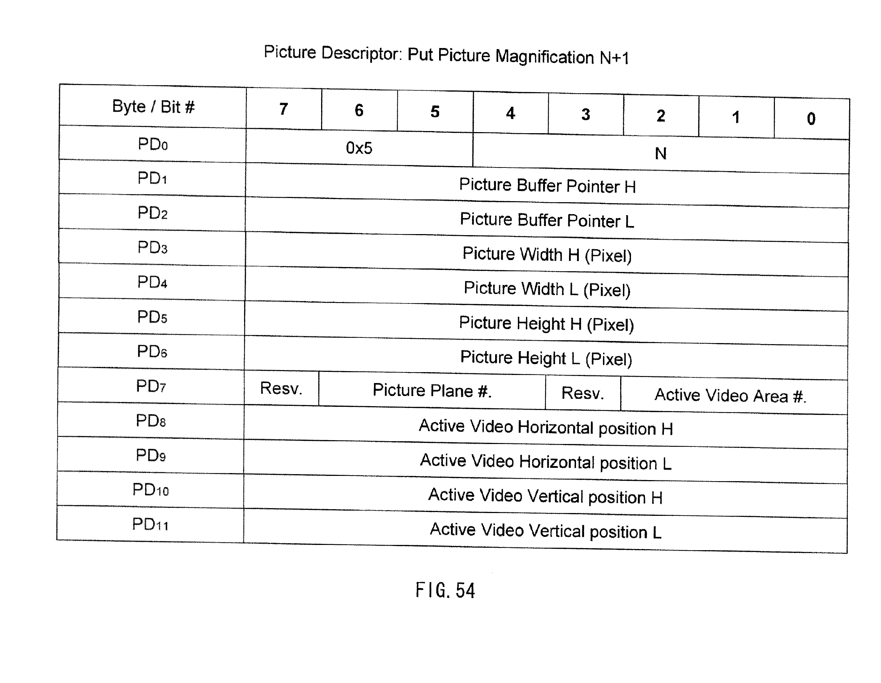

FIG. 54 illustrates a configuration example of the picture descriptor in the case where the operation "Put Picture Magnification N+1" is performed. The operation field is "0x5", and "N" is provided as a parameter to the operand field. Moreover, 3-bit information (Picture Plane indicating the number of a picture plane including an active video area where picture data is to be written is provided in the sixth to fourth bits of the seventh byte. Further, 3-bit information (Active Video Area #) indicating the number of an active video area where picture data is to be written is provided in the second to 0th bits of the seventh byte. In this case, information of other fields is necessary, so information is provided in each field.

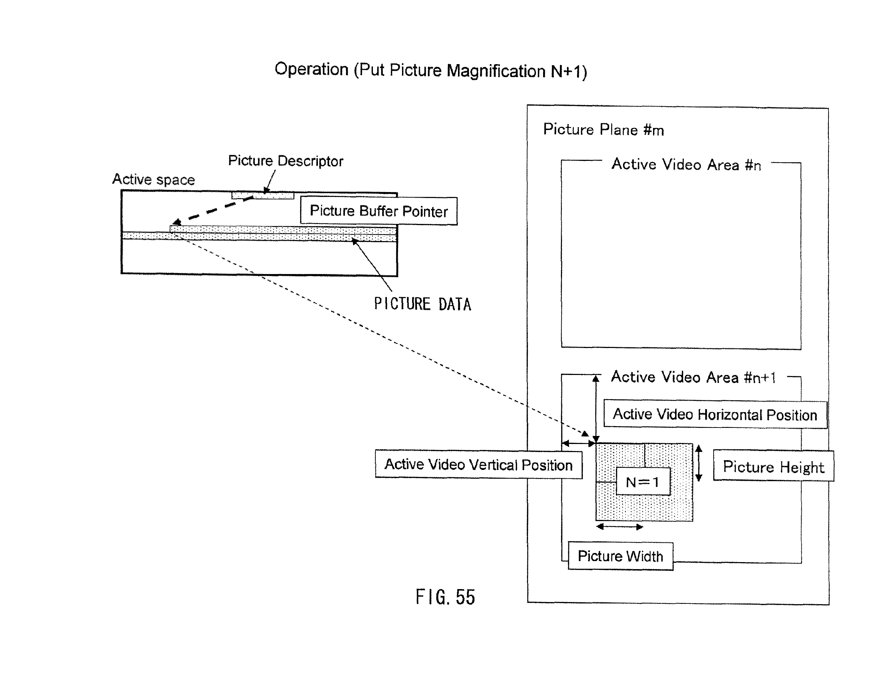

FIG. 55 illustrates an example of an operation by the picture descriptor performing the operation "Put Picture Magnification N+1" illustrated in FIG. 54. The example is an example in the case of N=1. In this case, on the reception side (the television receiver 200), the picture data of the rectangular picture is read out from the active space area based on 2-byte pointer information (Picture Buffer Pointer). Then, on the reception side, the picture data of the rectangular picture is written to a specified active video area of a specified picture plane.

In this case, on the reception side (the television receiver 200), the size of the rectangular picture and the top left position of the rectangular area where the picture data of the rectangular picture is to be written in the active video area are recognized. The size of the rectangular picture is recognized based on 2-byte information (Picture Width) indicating the width of the rectangular picture and 2-byte information (Picture Height) indicating the height of the rectangular picture. The top left position of the rectangular area is recognized based on 2-byte information indicating a horizontal position (Active Video Horizontal position) and 2-bypte information indicating a vertical position (Active Video Vertical position).

In the case of N=0, the picture data of the rectangular picture is written under the same magnification to an area corresponding to the rectangular picture in the active video area. However, as described above, in the case of N=1, the number of pixels of the picture data of the rectangular picture are magnified by twice in a horizontal direction and a vertical direction by a scaling process. Then, the picture data is written to an area magnified by twice in the horizontal direction and the vertical direction in the active video area. In this case, in the case where the position where the picture data is written is out of the active video area, the picture data is clipped in the active video area.

EDID

As described above, the CPU 121 of the disc player 100 as the HDMI source device recognizes whether or not the television receiver 200 has a function of effectively utilizing information allocated to the active space area. The CPU 121 recognizes this based on information relating to additional information included in the E-EDID (refer to FIG. 4).

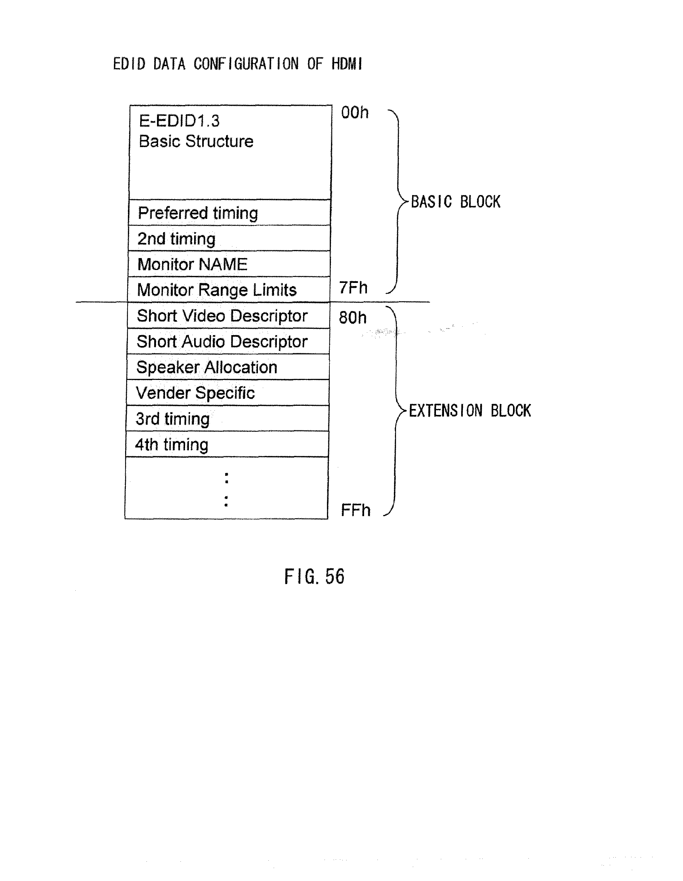

FIG. 56 illustrate a data configuration example of the E-EDID. The E-EDID is configured of a basic block and an extension block. Data represented by "E-EDID1.3 Basic Structure" and defined by the E-EDID1.3 specification is provided in a leading part of the basic block. In the basic block, subsequent to the data, timing information represented by "Preferred timing" for maintaining compatibility with EDID in related art and timing information represented by "2nd timing", which is different from "Preferred timing" for maintaining compatibility with EDID in related art are provided.

Also, in the basic block, subsequent to "2nd timing", information represented by "Monitor NAME" and indicating the name of a display, and information represented by "Monitor Range Limits" and indicating the number of pixels which is allowed to be displayed in an aspect ratio of 4:3 and 16:9 are provided.

In a leading part of the extension block, information represented by "Short Video Descriptor" is provided. The information indicates a picture size (resolution) which is allowed to be displayed, a frame rate and whether the video data is interlaced or progressive. Subsequent to "Short Video Descriptor", information represented by "Short Audio Descriptor" is provided. The information "Short Video Descriptor" is information such as a reproducible audio codec system, a sampling frequency, a cut-off bandwidth, the number of codec bits. Then, information relating to right and left speakers represented by "Speaker Allocation" is subsequently provided.

Also in the extension block, subsequent to "Speaker Allocation", data represented by "Vender Specific" and defined uniquely for each manufacturer is provided. In the extension block, timing information represented by "3rd timing" for maintaining compatibility with EDID in related art, and timing information represented by "4th timing" for maintaining compatibility with EDID in related art are provided subsequently.

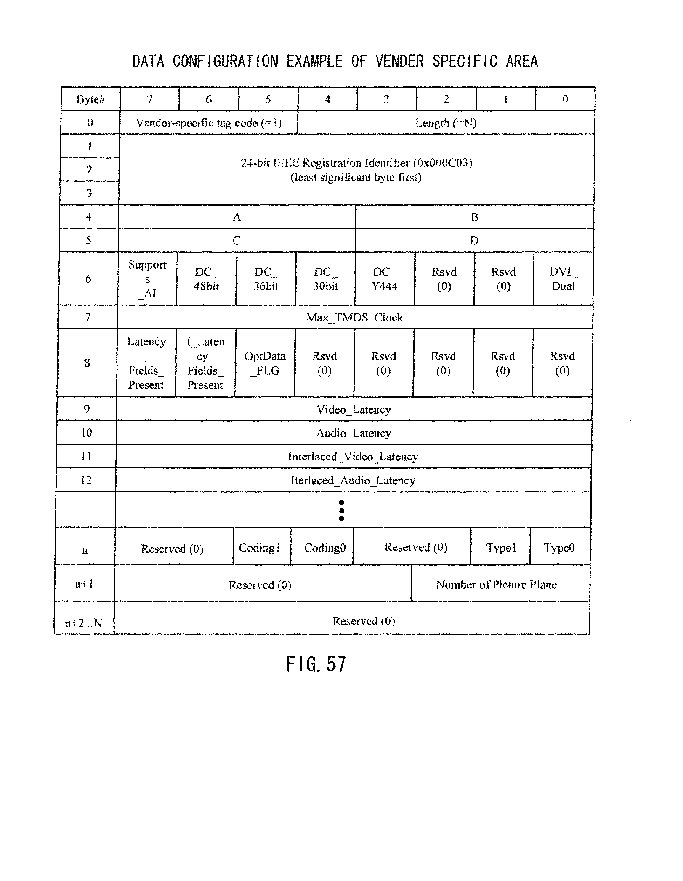

FIG. 57 illustrates a data configuration example of a Vender Specific area (an HDMI Vendor Specific Data Block). In the Vender Specific area, 0th to Nth blocks as one-byte blocks are provided.

In the 0th block, a header represented by "Vendor-Specific tag code (=3)" and indicating a data area of data "Vender Specific" is provided. Moreover, in the 0th block, information represented by "Length (=N)" and indicating the length of data "Vender Specific" is provided.

In a first block to a third block, information represented hy "24-bit IEEE Registration Identifier (0x000C03) LSB first" and indicating a number "0x000C03" registered for HDMI (R) is provided. Moreover, in a fourth block and a fifth block, pieces of information represented by "A", "B", "C", and "D" and indicating a physical address of a 24-bit sink device are provided, respectively.

In a sixth block, a flag represented by "Supports_AI" and indicating a function which the sink device supports is provided. Moreover, in the sixth block, pieces of information represented by "DC_48 bit", "DC_36 bit", and "DC_30 bit" and specifying the number of bits per pixel are provided, respectively. Further, in the sixth block, a flag represented by "DC_Y444", and indicating whether or not the sink device supports transmission of a picture of YCbCr 4:4:4, and a flag represented by "DVI_Dual" and indicating whether or not the sink device supports a dual DVI (Digital Visual Interface) are provided.

Moreover, in a seventh block, information represented by "Max_TMDS_Clock" and indicating a maximum frequency of the pixel clock of TMDS is provided. Further, in a sixth bit and a seventh bit of an eighth block, a flag represented by "Latency" and indicating presence or absence of delay information of the video and the audio is provided.

In a ninth block, delay time data of progressive video represented by "Video Latency" is provided, and in a tenth block, delay time data of audio accompanying the progressive video and represented by "Audio Latency" is provided.

Moreover, in an eleventh block, delay time data of interlaced video represented by "Interlaced Video Latency" is provided. In a twelfth block, delay time data of audio accompanying the interlaced video and represented by "Interlaced Audio Latency" is provided.

In the embodiment, for example, in a fifth bit of the eighth block, a flag (OptData_FLG) representing presence or absence of a function of effectively utilizing information allocated to an active space area is provided. For example, in the case where the flag is "1", "1" indicates the presence of the function of effectively utilizing information allocated to the active space area.

Moreover, in a fifth bit and a fourth bit of the nth block, 2-bit information (Coding1, Coding0) indicating performance for error correction coding on data allocated to the active space area is provided. For example, in the case where the 2-bit information is "0x0", the information corresponds to "no error correction" and in the case where the information of 2 bit is "0x1", the information corresponds to "a triple modular redundancy method".

Further, in a first bit and a 0th bit of the nth block, 2-bit information (Type1, Type0) indicating performance for use of an active space area is provided. For example, in the case where the 2-bit information is "0x0", the information corresponds to "use as a picture data area", and in the case where the 2-bit information is "0x1", the information corresponds to "use as a 3D language (for example, X3D) description area". In second to 0th bits of an n+1th block, 2-bit information (Number of Picture Plane) indicating the number of available picture planes is provided.

The CPU 121 of the disc player 100 is allowed to recognize, based on the flag (OptData_FLG) included in the above-described E-EDID, whether or not the television receiver 200 has a function of effectively utilizing additional information allocated to an active space area. Then, in the case where the flag indicates that the television receiver 200 has the function, the CPU 121 of the disc player 100 allocates additional information to the active space area and transmits the additional information to the television receiver 200. Thereby, the disc player 100 is allowed to remove an unnecessary process of allocating additional information to the active space area and transmitting the additional information to the television receiver 200 even though the television receiver 200 does not have the function of effectively utilizing the additional information allocated to the active space area. Moreover, the disc player 100 is allowed to control the additional information to be transmitted to the television receiver 200 to an appropriate state based on information (Coding, Type, Number of Picture Plane) relating to the additional information included in the E-EDID.

As described above, in the AV system 10 illustrated in FIG. 1, stereoscopic picture data (3D picture data) is transmitted with use of a 3D video format including an active space area in addition to an active video area in an active video period. In this case, additional information relating to the stereoscopic picture data allocated to the active video area is allocated to the active space area, and is transmitted with the stereoscopic picture data. Therefore, the active space area is allowed to be used effectively.

Moreover, in the AV system 10 illustrated in FIG. 1, additional information relating to the stereoscopic picture data is transmitted with use of the active space area included in the active video period of the 3D video format. Therefore, compared to transmission by InfoFrame defined by the HDMI specification, information with a relatively large size as additional information is allowed to be transmitted, and the additional information is alloyed be transmitted in synchronization with the picture data with frame accuracy.

Further, in the AV system 10 illustrated in FIG. 1, additional information relating to the stereoscopic picture data is transmitted with use of the active space area included in the active video period of the 3D video format. Therefore, data of subtitles or information relating to the picture which is superimposed and displayed on a picture based on stereoscopic picture data allocated to the active video area is allowed to be allocated to the active space area and then be transmitted.

Therefore, after performing a process such as correction or picture quality enhancement of 3D picture data in the television receiver 200, subtitles, a menu picture or the like is allowed to be superimposed, thereby an improvement in quality of such a process is achievable. In addition, in the above-described embodiment1, only the correction of the 3D picture data is described. Also a picture quality enhancement process such as contrast correction or color correction is allowed to be performed based on picture data on which picture data such as subtitles or a menu picture is not superimposed, and an improvement in process quality is achievable.

Moreover, in the AV system 10 illustrated in FIG. 1, as described above, the stereoscopic picture data and data of subtitles and information relating to the picture are allowed to be separately transmitted from the source device (the disc player 100) to the sink device (the television receiver 200). Therefore, the AV system 10 is suitable for application allowing the television receiver 200 to turn on/off of display. The AV system 10 is expected to use for display of 3D closed caption, a control screen of the source device, 3D advertisement, channel display, a warning message, different service (news feeds such as RSS) and the like.

2. Modifications

In the above-described embodiment, the case where the TMDS transmission data configuration of the stereoscopic picture data is a Frame packing 3D video format is described. The invention is applicable to the case where the TMDS transmission data configuration of the stereoscopic picture data is any other 3D video formant including an active video area and an active space area in an active video period in the same manner. For example, the invention is applicable to not only the case where the TMDS transmission data configuration of the stereoscopic picture data is a 3D video format including left-eye picture data and right-eye picture data as stereoscopic picture data but also the case where the TMDS transmission data configuration of the stereoscopic picture data is a 3D video format including two-dimensional picture data and depth information corresponding to each pixel as picture data.

Moreover, in the above-described embodiment, the case where data of a picture superimposed and displayed on a picture based on picture data allocated to the active video area is allocated to the active space area is described. However, the data size of the active space area is not so large. Therefore, picture data of one picture may be separated into active space areas of a plurality of frames, and then be transmitted. Alternatively, in the active space area, a frame number is transmitted, and picture data corresponding to the frame number is transmitted through a different transmission path from a TMDS line such as Ethernet, thereby picture data with a larger size may be transmitted.

Further, in the above-described embodiment, the AV system 10 including the disc player 100 as the HDMI source device and the television receiver 200 as the HDMI sink device is described as an example. However, the HDMI source device and the HDMI sink device are not limited thereto. For example, as the source device, in addition to the disc player 100, a DVD recorder, a set-top box, a game machine, or any other AV source may be used. Moreover, as the sink device, in addition to the television receiver 200, a projector, a PC monitor, or any other display may be used.

In the above-described embodiment, description is given on the premise that as a transmission path connecting devices, an HDMI-compliant interface is used, but the invention is applicable to any other similar transmission specifications. Moreover, in the above-described embodiment, the case where devices are connected through an HDMI cable is described, but the invention is applicable, in the same manner, to the case where electronic devices are wirelessly connected to each other.

Industrial Applicability

The present invention is applicable to an AV system or the like which transmits stereoscopic picture data (3D picture data) with use of a 3D video format including an active video area and an active space area in an active video period.

The present application contains subject matter related to that disclosed in Japanese Priority Patent Application JP 2009-226538 filed in the Japan Patent Office on September 30, 2009.

It should be understood by those skilled in the art that various modifications, combinations, sub-combinations and alterations may occur depending on design requirements and other factors insofar as they are within the scope of the appended claims or the equivalents thereof. Various aspects of the invention are defined in the following numbered clauses:

Clause 1 A transmitter comprising:

a transmission data generation section generating transmission data having a format of video field period as a unit including a horizontal blanking period, a vertical blanking period and an active video period which are separated by vertical synchronization signals, the active video period including a main video area and an auxiliary video area; and
a transmission data transmitting section transmitting, in a differential signal format, the transmission data generated in the transmission data generation section to an external device through a transmission path and through a plurality of channels,
wherein the transmission data generation section allocates picture data to the main video area and allocates, to the auxiliary video area, additional information relating to the picture data allocated to the main video area.

Clause 2 The transmitter according to clause 1, further comprising an information obtaining section obtaining information from the external device through the transmission path, the information relating to the additional information to be allocated to the auxiliary video area,
wherein the transmission data generation section allocates the additional information to the auxiliary video area based on the information obtained by the information obtaining section.

Clause 3 The transmitter according to clause 2, wherein
the information relating to the additional information obtained by the information obtaining section represents presence or absence of a function of effectively utilizing the additional information, and
the transmission data generation section allocates the additional information to the auxiliary video area in the case where the information obtained by the information obtaining section indicates the presence of the function of effectively utilizing the additional information.

Clause 4 The transmitter according to clause 2, wherein

the external device has a memory section, and

the information obtaining section reads out and obtains the information relating to the additional information from the memory section in the external device.

Clause 5 The transmitter according to clause 1, wherein

the picture data is stereoscopic data for displaying a stereoscopic picture.

Clause 6 The transmitter according to clause 5, wherein

the stereoscopic picture data includes left-eye picture data and right-eye picture data.

Clause 7 The transmitter according to clause 5, wherein

the stereoscopic picture data includes two-dimensional picture data and depth information corresponding to each pixel.

Clause 8 The transmitter according to clause 1, further comprising an information transmitting section transmitting information to the external device through the transmission path, the information relating to the additional information.

Clause 9 The transmitter according to clause 8, wherein

the information relating to the additional information represents whether or not the additional information is allocated to the auxiliary video area.

Clause 10 The transmitter according to clause 8, wherein

the information relating to the additional information represents a data format of the additional information allocated to the auxiliary video area.

Clause 11 The transmitter according to clause 8, wherein

the information relating to the additional information represents length of a space provided in a leading part of the auxiliary video area.

Clause 12 The transmitter according to clause 8, wherein

the information transmitting section transmits the information relating to the additional information to the external device through the transmission path by inserting the information into a blanking period of the transmission data.

Clause 13 The transmitter according to clause 1, wherein

a sync pattern with a fixed value is provided in a leading part of the additional information allocated to the auxiliary video area.

Clause 14 The transmitter according to clause 13, wherein

the additional information allocated to the auxiliary video area includes one or both of information data and second picture data.

Clause 15 The transmitter according to Clause 1, wherein

data in the main video area and data in the auxiliary video area each include three channels of 8-bit data per pixel, and the transmission data transmitting section performs color space conversion or clipping on the data in the main video area and then transmits a resultant, whereas transmits the data in the auxiliary video area without performing color space conversion or clipping.

Clause 16 The transmitter according to clause 15, wherein

once the transmission data is provided from the transmission data generation section, the transmission data transmitting section specifies the picture area and the auxiliary video area, specifies a color space type employed in the main picture areas of transmission data generated in the transmission data generation section and of video data to be outputted to the transmission path, and specifies whether the video data in the main picture area outputted to the transmission path is full range data or limited range data, and thereby performs color space conversion and a limited range check/conversion process on the video data in the main picture area as specified and then outputs a resultant, whereas outputs the auxiliary video data without performing color space conversion as well as the limited range check/conversion process.

Clause 17 The transmitter according to clause 1, wherein

data in the main video area and data in the auxiliary video area each include three channels of 8-bit data per pixel, the transmission data generation section allocates bits of two 8-bit data as the additional information to bits other than a most significant bit (MSB) of each of the three channels of 8-bit data in the auxiliary video area, respectively, and sets an inversion value, which is a logical inversion of a value of a secondarily significant bit, into the MSB, and the transmission data transmitting section performs clipping on data in the main video area as well as data in the auxiliary video area and then transmits the data.

Clause 18 The transmitter according to clause 14, wherein

the information data included in the additional information is subjected to error correction coding.

Clause 19 The transmitter according to clause 18, wherein

data in the main video area and data in the auxiliary video area each include three channels of 8-bit data per pixel, the error correction coding is error correction coding by a triple modular redundancy method, and the transmission data generation section allocates common 8-bit data as the three channels of 8-bit data in the auxiliary video area.

Clause 20 The transmitter according to clause 14, wherein
the information data included in the additional information is data of information relating to a picture to be superimposed on a picture described by the picture data allocated to the main video area.
Clause 21 The transmitter according to clause 14, wherein
the information data included in the additional information is data of information relating to subtitles to be superimposed on a picture based on picture data allocated to the main video area.
Clause 22 The transmitter according to clause 14, wherein
the picture data includes left-eye picture data and right-eye picture data for displaying a stereoscopic picture, and information data included in the additional information is shooting - related data relating to a shooting procedure to obtain the left-picture data and the right-picture data.
Clause 23 A transmitting method comprising steps of:

generating transmission data having a format of video field period as a unit including a horizontal blanking period, a vertical blanking period and an active video period which are separated by vertical synchronization signals, the active video period including a main video area and an auxiliary video area; and
transmitting, in a differential signal format, the transmission data to an external device through a transmission path and through a plurality of channels,
wherein in the step of generating transmission data, picture data is allocated to the main video area, and additional information relating to the picture data allocated to the main video area is allocated to the auxiliary video area.

Clause 24 A receiver comprising:

a transmission data receiving section receiving transmission data in a differential signal format from an external device through a transmission path and through a plurality of channels, the transmission data having a format of video field period as a unit including a horizontal blanking period, a vertical blanking period and an active video period which are separated by vertical synchronization signals, the active video period including a main video area where picture data is allocated and an auxiliary video area where additional information relating to the picture data allocated to the main video area is allocated, and
a data extracting section extracting and obtaining the picture data from the main video area of the transmission data received by the transmission data receiving section, and extracting and obtaining the additional information from the auxiliary video area of the transmission data received by the transmission data receiving section.

Clause 25 The receiver according to clause 24, wherein
the picture data includes left-eye picture data and right-eye picture data for displaying a stereoscopic picture,
the additional information includes shooting-related data relating to a shooting procedure to obtain the left-eye picture data and the right-eye picture data, and
the receiver further includes a picture data correcting section correcting the left-eye picture data and the right-eye picture data obtained in the data extracting section based on the shooting-related data obtained in the data extracting section.
Clause 26 The receiver according to clause 25, wherein
the picture data correcting section estimates depth information with use of the shooting-related data, and corrects the left-eye picture data and the right-eye picture data based on the depth information and information of a screen size.
Clause 27 The receiver according to clause 24, wherein
the picture data includes left-eye picture data and right-eye picture data for displaying a stereoscopic picture,
the receiver further includes a picture shift section performing shift adjustment which allows a left-eye picture described by the left-eye picture data and a right-eye picture described by the right-eye picture data to be shifted in a horizontal direction, and
the additional information includes necessary pixel data accompanying the shift adjustment in the picture shift section.
Clause 28 The receiver according to clause 24, wherein the additional information includes second picture data and specification information, the receiver further comprising:

a plurality of buffers;
a picture data writing section writing the second picture data into a specified position in a specified one of the buffers based on the specification information; and
a data superimposing section superimposing the picture data extracted and obtained from the main video area of the transmission data and the second picture data written in the plurality of buffers at a predetermined ratio.

Clause 29 A receiving method comprising steps of:

receiving transmission in a differential signal format from an external device through a transmission path and through a plurality of channels, the transmission data having a format of video field period as a unit including a horizontal blanking period, a vertical blanking period and an active video period which are separated by vertical synchronization signals, the active video period including a main video area where picture data is allocated and an auxiliary video area where additional information relating to the picture data allocated to the main video area is allocated, and

extracting and obtaining the picture data from the main video area of the transmission data received in the step of receiving transmission data, and extracting and obtaining the additional information from the auxiliary video area of the transmission data received in the step of receiving transmission data.

**Claims**

1. A transmitter comprising:

a transmission data generation section generating transmission data having a format of video field period as a unit including a horizontal blanking period, a vertical blanking period and an active video period which are separated by vertical synchronization signals, the active video period including a main video area and an auxiliary video area; and

a transmission data transmitting section (81) transmitting, in a differential signal format, the transmission data generated in the transmission data generation section to an external device (202) through a transmission path (300) and through a plurality of channels,

wherein the transmission data generation section allocates picture data to the main video area and allocates, to the auxiliary video area, additional information relating to the picture data allocated to the main video area.

2. The transmitter according to claim 1, further comprising an information obtaining section obtaining information from the external device (202) through the transmission path (300), the information relating to the additional information to be allocated to the auxiliary video area,

wherein the transmission data generation section allocates the additional information to the auxiliary video area based on the information obtained by the information obtaining section.

3. The transmitter according to claim 2, wherein

the information relating to the additional information obtained by the information obtaining section represents presence or absence of a function of effectively utilizing the additional information, and

the transmission data generation section allocates the additional information to the auxiliary video area in the case where the information obtained by the information obtaining section indicates the presence of the function of utilizing the additional information.

4. The transmitter according to clam 1, wherein

the picture data is stereoscopic picture data for displaying a stereoscopic picture and

the stereoscopic picture data includes left-eye picture data and right-eye picture data.

5. The transmitter according to claim 1, further comprising an information transmitting section transmitting information to the external device (202) through the transmission path (300), the information relating to the additional information.

6. The transmitter according to claim 5, wherein

the information transmitting section transmits the information relating to the additional information to the external device through the transmission path by inserting the information into a blanking period of the transmission data.

7. The transmitter according to claim 1, wherein

a sync pattern with a fixed value is provided in a leading part of the additional information allocated to the auxiliary video area and

the additional information allocated to the auxiliary video area includes one or both of information data and second picture data.

8. The transmitter according to claim 1, wherein

data in the main video area and data in the auxiliary video area each include three channels of 8-bit data per pixel, and the transmission data transmitting section (81) performs color space conversion or clipping on the data in the main video area and then transmits a resultant, whereas transmits the data in the auxiliary video area without performing color space conversion or clipping.

9. The transmitter according to claim 8, wherein
once the transmission data is provided from the transmission data generation section, the transmission data transmitting section (81) specifies the picture area and the auxiliary video area, specifies a color space type employed in the main picture areas of transmission data generated in the transmission data generation section and of video data to be outputted to the transmission path, and specifies whether the video data in the main picture area outputted to the transmission path is full range data or limited range data, and thereby performs color space conversion and a limited range check/conversion process on the video data in the main picture area as specified and then outputs a resultant, whereas outputs the auxiliary video data without performing color space conversion as well as the limited range check/conversion process.

10. The transmitter according to claim 1, wherein
data in the main video area and data in the auxiliary video area each include three channels of 8-bit data per pixel, the transmission data generation section allocates bits of two 8-bit data as the additional information to bits other than a most significant bit (MSB) of each of the three channels of 8-bit data in the auxiliary video area, respectively, and sets an inversion value, which is a logical inversion of a value of a secondarily significant bit, into the MSB, and the transmission data transmitting section performs clipping on data in the main video area as well as data in the auxiliary video area and then transmits the data.

11. The transmitter according to claim 7, wherein
the information data included in the additional information is subjected to error correction coding, data in the main video area and data in the auxiliary video area each include three channels of 8-bit data per pixel, the error correction coding is error correction coding by a triple modular redundancy method, and the transmission data generation section allocates common 8-bit data as the three channels of 8-bit data in the auxiliary video area.

12. A transmitting method comprising steps of:

generating transmission data having a format of video field period as a unit including a horizontal blanking period, a vertical blanking period and an active video period which are separated by vertical synchronization signals, the active video period including a main video area and an auxiliary video area; and transmitting, in a differential signal format, the transmission data to an external device through a transmission path and through a plurality of channels, wherein in the step of generating transmission data, picture data is allocated to the main video area, and additional information relating to the picture data allocated to the main video area is allocated to the auxiliary video area.

13. A receiver comprising:

a transmission data receiving section receiving transmission data in a differential signal format from an external device through a transmission path and through a plurality of channels, the transmission data having a format of video field period as a unit including a horizontal blanking period, a vertical blanking period and an active video period which are separated by vertical synchronization signals, the active video period including a main video area where picture data is allocated and an auxiliary video area where additional information relating to the picture data allocated to the main video area is allocated, and a data extracting section extracting and obtaining the picture data from the main video area of the transmission data received by the transmission data receiving section, and extracting and obtaining the additional information from the auxiliary video area of the transmission data received by the transmission data receiving section.

14. The receiver according to claim 13, wherein
the picture data includes left-eye picture data and right-eye picture data for displaying a stereoscopic picture, the additional information includes shooting-related data relating to a shooting procedure to obtain the left-eye picture data and the right-eye picture data, and the receiver further includes a picture data correcting section correcting the left-eye picture data and the right-eye picture data obtained in the data extracting section based on the shooting-related data obtained in the data extracting section.

15. A receiving method comprising steps of:

receiving transmission in a differential signal format from an external device through a transmission path and through a plurality of channels, the transmission data having a format of video field period as a unit including a horizontal blanking period, a vertical blanking period and an active video period which are separated by vertical synchronization signals, the active video period including a main video area where picture data is allocated and an auxiliary video area where additional information relating to the picture data allocated to the main video area is allocated, an
extracting and obtaining the picture data from the main video area of the transmission data received in the step of receiving transmission data, and extracting and obtaining the additional information from the auxiliary video area of the transmission data received in the step of receiving transmission data.

100

DISC PLAYER

HDMI
Tx

102

101

300

201

200

TELEVISION RECEIVER

HDMI
Rx

202

FIG. 1

EP 2 306 746 A2

FIG. 2

EP 2 306 746 A2

200: TELEVISION RECEIVER (SINK DEVICE)

FIG. 3

FIG. 4

FIG. 5

TMDS TRANSMISSION DATA(1920x1080)

FIG. 6

EP 2 306 746 A2

HDMI PIN ASSIGNMENT (TYPE A)

| PIN | Signal Assignment | PIN | Signal Assignment |
|---|---|---|---|
| 1 | TMDS Data2+ | 2 | TMDS Data2 Shield |
| 3 | TMDS Data2– | 4 | TMDS Data1+ |
| 5 | TMDS Data1 Shield | 6 | TMDS Data1– |
| 7 | TMDS Data0+ | 8 | TMDS Data0 Shield |
| 9 | TMDS Data0– | 10 | TMDS Clock+ |
| 11 | TMDS Clock Shield | 12 | TMDS Clock– |
| 13 | CEC | 14 | Reserved (N.C. on device)/Ether+ |
| 15 | SCL | 16 | SDA |
| 17 | DDC/CEC Ground | 18 | +5V Power |
| 19 | Hot Plug Detect/Ether- | | |

FIG. 7

EP 2 306 746 A2

3D Video Format
(Frame packing)

FIG. 8

EP 2 306 746 A2

3D Video Format
(Frame packing for interlaced format)

FIG. 9

FIG. 10

EP 2 306 746 A2

FIG. 11A

| | P #0 | P #1 | P #2 | ... |
|---|---|---|---|---|
| | 0x00 | 0xFF | $X_0$ | ... |
| Line #0 | 0x00 | 0xFF | $X_1$ | ... |
| | 0x00 | 0xFF | $X_2$ | ... |

Active Space1

FIG. 11B

| | P #0 | P #1 | P #2 | ... |
|---|---|---|---|---|
| | $X_{3*(V0*H-2)}$ | $X_{3*(V0*H-1)}$ | $X_{3*(V0*H)}$ | ... |
| Line #V0 | $X_{3*(V0*H-2)+1}$ | $X_{3*(V0*H-1)+1}$ | $X_{3*(V0*H)+1}$ | ... |
| | $X_{3*(V0*H-2)+2}$ | $X_{3*(V0*H-1)+2}$ | $X_{3*(V0*H)+2}$ | ... |

Active Space2

FIG. 11C

| | P #0 | P #1 | P #2 | ... |
|---|---|---|---|---|
| | $X_{3*((V0+V1)*H-2)}$ | $X_{3*((V0+V1)*H-1)}$ | $X_{3*((V0+V1)*H)}$ | ... |
| Line #V0+V1 | $X_{3*((V0+V1)*H-2)+1}$ | $X_{3*((V0+V1)*H-1)+1}$ | $X_{3*((V0+V1)*H)+1}$ | ... |
| | $X_{3*((V0+V1)*H-2)+2}$ | $X_{3*((V0+V1)*H-1)+2}$ | $X_{3*((V0+V1)*H)+2}$ | ... |

Active Space3

SIZE EXAMPLE OF EACH FRAME OF ACTIVE SPACE
(3D Structure: Frame Packing)

| Format | Progressive / Interlace | Hactive | TOTAL OF Vact_space | Size (KB) |
|--------|-------------------------|---------|---------------------|-----------|
| 1080p  | Progressive             | 1920    | 45                  | 259       |
| 1080i  | Interlace               | 1920    | 68                  | 392       |
| 720p   | Progressive             | 1280    | 30                  | 115       |

FIG. 12

DATA OF ACTIVE SPACE NOT USED FOR TRANSMISSION OF ADDITIONAL INFORMATION

Active Space   Line #0

| TMDS Channel | Pixel 0 | Pixel 1 | Pixel 2 | Pixel 3 | Pixel 4 | Pixel 5 | .... |
|---|---|---|---|---|---|---|---|
| 0 | C0 | C0 | C0 | C0 | C0 | C0 | .... |
| 1 | C1 | C1 | C1 | C1 | C1 | C1 | .... |
| 2 | C2 | C2 | C2 | C2 | C2 | C2 | .... |

(a)

Active Space   Line #1  AND LATER

| | Pixel 0 | Pixel 1 | Pixel 2 | Pixel 3 | Pixel 4 | Pixel 5 | .... |
|---|---|---|---|---|---|---|---|
| 0 | C0 | C0 | C0 | C0 | C0 | C0 | .... |
| 1 | C1 | C1 | C1 | C1 | C1 | C1 | .... |
| 2 | C2 | C2 | C2 | C2 | C2 | C2 | .... |

(b)

C0, C1, C2 ARE ARBITRARY CONSTANTS

FIG. 13

EP 2 306 746 A2

DATA OF ACTIVE SPACE USED FOR TRANSMISSION OF ADDITIONAL INFORMATION

X: 8bit
H: Hactive

Active Space #0  Line #0

TMDS Channel

(a)

| | Pixel 0 | Pixel 1 | Pixel 2 | Pixel 3 | Pixel 4 | Pixel 5 | |
|---|---|---|---|---|---|---|---|
| 0 | 0xA5 | 0x96 | $X_0$ | $X_3$ | $X_6$ | $X_9$ | .... |
| 1 | 0xA5 | 0x96 | $X_1$ | $X_4$ | $X_7$ | $X_{10}$ | .... |
| 2 | 0xA5 | 0x96 | $X_2$ | $X_5$ | $X_8$ | $X_{11}$ | .... |

Sync Pattern ——ADDITIONAL INFORMATION——

Active Space #0  Line #1

(b)

| | Pixel 0 | Pixel 1 | Pixel 2 | Pixel 3 | Pixel 4 | Pixel 5 | |
|---|---|---|---|---|---|---|---|
| 0 | $X_{3(H-2)}$ | $X_{3(H-1)}$ | $X_{3H}$ | $X_{3(H+1)}$ | $X_{3(H+2)}$ | $X_{3(H+3)}$ | .... |
| 1 | $X_{3(H-2)+1}$ | $X_{3(H-1)+1}$ | $X_{3H+1}$ | $X_{3(H+1)+1}$ | $X_{3(H+2)+1}$ | $X_{3(H+3)+1}$ | .... |
| 2 | $X_{3(H-2)+2}$ | $X_{3(H-1)+2}$ | $X_{3H+2}$ | $X_{3(H+1)+2}$ | $X_{3(H+2)+2}$ | $X_{3(H+3)+2}$ | .... |

——ADDITIONAL INFORMATION——

FIG. 14

EP 2 306 746 A2

DATA LAYOUT(INFORMATION DATA+PICTURE DATA)

| DATA CONTENT | DATA SIZE | DATA TYPE | DESCRIPTION |
|---|---|---|---|
| (SPACE) | ARBITRARY | PICTURE DATA | FILLED WITH SINGLE COLOR |
| Sync Pattern | FIXED LENGTH (2pixel) | FIXED VALUE | SYNC PATTERN WITH FIXED VALUE (VALUE IS DEFINED BY SPECIFICATION) |
| INFORMATION AREA HEADER | FIXED LENGTH | INFORMATION DATA | INCLUDING INFORMATION OF AREA SIZE, NUMBER OF INTERNAL BLOCKS |
| INFORMATION BLOCK 1 | ARBITRARY | INFORMATION DATA | |
| . . . | | | |
| INFORMATION BLOCK N | ARBITRARY | INFORMATION DATA | INCLUDING INFORMATION OF AREA SIZE, NUMBER OF INTERNAL BLOCKS |
| PICTURE AREA HEADER | FIXED LENGTH | INFORMATION DATA | |
| PICTURE BLOCK 1 | ARBITRARY | PICTURE DATA | |
| . . . | | | |
| PICTURE BLOCK N | ARBITRARY | PICTURE DATA | |
| (End Pattern) | FIXED LENGTH | FIXED VALUE | MAY BE REMOVED |
| (SPACE) | ARBITRARY | PICTURE DATA | FILLED WITH SINGLE COLOR |

FIG. 15

EP 2 306 746 A2

DATA LAYOUT(INFORMATION DATA)

| DATA CONTENT | DATA SIZE | DATA TYPE | DESCRIPTION |
|---|---|---|---|
| (SPACE) | ARBITRARY | PICTURE DATA | FILLED WITH SINGLE COLOR |
| Sync Pattern | FIXED LENGTH (2pixel) | FIXED VALUE | SYNC PATTERN WITH FIXED VALUE |
| INFORMATION AREA HEADER | FIXED LENGTH | INFORMATION DATA | INCLUDING INFORMATION OF AREA SIZE, NUMBER OF INTERNAL BLOCKS |
| INFORMATION BLOCK 1 | ARBITRARY | INFORMATION DATA | |
| . . . | | | |
| INFORMATION BLOCK N | ARBITRARY | INFORMATION DATA | |
| End Pattern | FIXED LENGTH | FIXED VALUE | |
| (SPACE) | ARBITRARY | PICTURE DATA | FILLED WITH SINGLE COLOR |

FIG. 16

DATA LAYOUT(PICTURE DATA)

| DATA CONTENT | DATA SIZE | DATA TYPE | DESCRIPTION |
|---|---|---|---|
| (SPACE) | ARBITRARY | PICTURE DATA | FILLED WITH SINGLE COLOR |
| Sync Pattern | FIXED LENGTH (2pixel) | FIXED VALUE | SYNC PATTERN WITH FIXED VALUE |
| PICTURE AREA HEADER | FIXED LENGTH | INFORMATION DATA | INCLUDING INFORMATION OF AREA SIZE, NUMBER OF INTERNAL BLOCKS |
| PICTURE BLOCK 1 | ARBITRARY | PICTURE DATA | |
| . . . | | | |
| PICTURE BLOCK N | ARBITRARY | PICTURE DATA | |
| (End Pattern) | FIXED LENGTH | FIXED VALUE | MAY BE REMOVED |
| (SPACE) | ARBITRARY | PICTURE DATA | FILLED WITH SINGLE COLOR |

FIG. 17

HDMI Vendor Specific InfoFrame (FOR 3D TRANSMISSION)

| Byte# | 7 | 6 | 5 | 4 | 3 | 2 | 1 | 0 |
|---|---|---|---|---|---|---|---|---|
| 0 | Checksum | | | | | | | |
| 1 | 24bit IEEE Registration Identifier (0x000C03)<br>(least significant byte first) | | | | | | | |
| 2 | | | | | | | | |
| 3 | | | | | | | | |
| 4 | HDMI_Video_Format | | | Reserved (0) | Reserved (0) | Reserved (0) | Reserved (0) | Reserved (0) |
| 5 | 3D_Structure | | | | 3D_Meta _present | 3D_OptData _present | Reserved (0) | Reserved (0) |
| (6) | 3D_Ext_Data | | | Reserved (0) | | | | |
| (7) | 3D_Metadata_type | | 3D_Metadata_Length (=N) | | | | | |
| (8) | 3D_Metadata_1 | | | | | | | |
| | ... | | | | | | | |
| (7+N) | 3D_Metadata_N | | | | | | | |
| (8+N) | OptDataFmt | | OptData_SkipLines | | | | | |
| ... | Reserved (0) | | | | | | | |

FIG. 18

CONFIGURATION EXAMPLE OF INFORMATION AREA HEADER

| DATA CONTENT | DATA SIZE | DATA TYPE | DESCRIPTION |
|---|---|---|---|
| Sync Pattern | 2 byte | FIXED VALUE | SYNC PATTERN INDICATING START OF INFORMATION AREA (VALUE IS DEFINED BY SPECIFICATION) |
| NUMBER OF INFORMATION BLOCKS | 1 byte | INFORMATION DATA | NUMBER OF INFORMATION BLOCKS INCLUDED IN FRAME |
| DATA LENGTH | 2 byte | INFORMATION DATA | DATA SIZE OF INFORMATION BLOCK INCLUDED IN FRAME (NOT INCLUDING NUMBER OF PIXELS, SIZE OF INFORMATION AREA HEADER) |

FIG. 19

CONFIGURATION EXAMPLE OF INFORMATION BLOCK

| DATA CONTENT | DATA SIZE | DATA TYPE | DESCRIPTION |
|---|---|---|---|
| DATA ID | 1 byte | FIXED VALUE | DATA ID INDICATING DATA TYPE INCLUDED IN INFORMATION BLOCK |
| DATA LENGTH | 2 byte | INFORMATION DATA | DATA SIZE (NUMBER OF PIXELS) OF ESSENTIAL PART (payload) OF DATA OF INFORMATION BLOCK |
| Payload | 「DATA LENGTH」 | INFORMATION DATA | ESSENTIAL PART OF DATA OF INFORMATION BLOCK |
| CRC | 2 byte | INFORMATION DATA | VALUE OF CRC (CYCLIC REDUNDANCY CHECK) WITH RESPECT TO ALL OF DATA ID, DATA LENGTH AND PAYLOAD |

FIG. 20

EP 2 306 746 A2

CONFIGURATION EXAMPLE OF PICTURE AREA HEADER

| DATA CONTENT | DATA SIZE | DATA TYPE | DESCRIPTION |
|---|---|---|---|
| Sync Pattern | 2 byte | FIXED VALUE | SYNC PATTERN INDICATING START OF PICTURE AREA(VALUE IS DEFINED BY SPECIFICATION) |
| NUMBER OF PICTURE BLOCKS | 1 byte | INFORMATION DATA | NUMBER OF PICTURE BLOCKS INCLUDED IN FRAME |
| DATA LENGTH | 4 byte | INFORMATION DATA | DATA SIZE OF PICTURE BLOCK INCLUDED IN FRAME(NOT INCLUDING SIZE OF PICTURE AREA HEADER) |

FIG. 21

EP 2 306 746 A2

CONFIGURATION EXAMPLE OF PICTURE BLOCK

| DATA CONTENT | DATA SIZE | DATA TYPE | DESCRIPTION |
|---|---|---|---|
| PICTURE ID | 1 byte | FIXED VALUE | ID INDICATING PICTURE FORMAT<br>0:SAME FORMAT AS THAT OF 3D PICTURE |
| NUMBER OF HORIZONTAL PIXELS | 2 byte | INFORMATION DATA | NUMBER OF PIXELS IN HORIZONTAL DIRECTION OF PICTURE |
| NUMBER OF VERTICAL PIXELS | 2 byte | INFORMATION DATA | NUMBER OF PIXELS IN VERTICAL DIRECTION OF PICTURE |
| PICTURE DATA | 「NUMBER OF HORIZONTAL PIXELS」× 「NUMBER OF VERTICAL PIXELS」 | PICTURE DATA | ESSENTIAL PART OF PICTURE DATA |

FIG. 22

VIDEO COLOR COMPONENT RANGES DEFINED BY HDMI SPECIFICATION

| Color Component | Component Bit Depth | for Full range | | for Limited range | | |
|---|---|---|---|---|---|---|
| | | Black level | Nominal Peak (White level) | Black level | Nominal Peak (White level) | Valid Range |
| R / G / B | 8 | 0 | 255 | 16 | 235 | 1 to 254 |
| R / G / B | 10 | 0 | 1023 | 64 | 940 | 4 to 1019 |
| R / G / B | 12 | 0 | 4095 | 256 | 3760 | 16 to 4079 |
| R / G / B | 16 | 0 | 65535 | 4096 | 60160 | 256 to 65279 |

| Color Component | Component Bit Depth | for Full range | | for Limited range | | |
|---|---|---|---|---|---|---|
| | | Black level | Nominal Peak (White level) | Black level | Nominal Peak (White level) | Valid Range |
| Y | 8 | 0 | 255 | 16 | 235 | 1 to 254 |
| $C_B$ / $C_R$ | | 128 | 0 and 255 | 128 | 16 and 240 | |
| Y | 10 | 0 | 1023 | 64 | 940 | 4 to 1019 |
| $C_B$ / $C_R$ | | 512 | 0 and 1023 | 512 | 64 and 960 | |
| Y | 12 | 0 | 4095 | 256 | 3760 | 16 to 4079 |
| $C_B$ / $C_R$ | | 2048 | 0 and 4095 | 2048 | 256 and 3840 | |
| Y | 16 | 0 | 65535 | 4096 | 60160 | 256 to 65279 |
| $C_B$ / $C_R$ | | 32768 | 0 and 65535 | 32768 | 4096 and 61440 | |

FIG. 23

DATA STORING METHOD IN CASE OF LIMITED RANGE

| 7 | 6 | 5 | 4 | 3 | 2 | 1 | 0 |
|---|---|---|---|---|---|---|---|
| 1 | 0 | . | . | . | . | . | . |
| 0 | 1 | . | . | . | . | . | . |

BIT 7 AND BIT 6 ARE INVERTED WITH RESPECT TO EACH OTHER
BIT 7=NOT BIT 6

FIG. 24

DATA STORING METHOD IN CASE OF LIMITED RANGE

|        | 7   | 6  | 5  | 4  | 3  | 2  | 1  | 0 |
|--------|-----|----|----|----|----|----|----|---|
| TMDS 0 | ! A7 | A7 | A6 | A5 | B7 | B6 | B5 | p |
| TMDS 1 | ! A4 | A4 | A3 | A2 | B4 | B3 | B2 | p |
| TMDS 2 | ! A1 | A1 | A0 | Ap | B1 | B0 | Bp | p |

BIT 7: INVERSION VALUE OF BIT 6
BIT 6, 5, 4: STORE DATA OF BYTE A
  Ap: PARITY BIT OF BITS A7-A6 OF BYTE A
BIT 3, 2, 1: STORE DATA OF BYTE B
  Bp: PARITY BIT OF BITS B7-B0 OFBYTE B
BIT 0: PARITY BIT FOR BITS 7-1 OF 8 BIT OF EACH TMDS

FIG. 25

TRIPLE MODULAR REDUNDANCY METHOD

• CODING BY MAJORITY DECISION LOGIC

— ENCODING ON TRANSMISSION SIDE

• $Xn[i]=Xn0[i]=Xn1[i]=Xn2[i]$

• $n=0 \dots N \qquad i=0 \dots 7$

— DECODING ON RECEPTION SIDE

• $Xn[i] = (Xn0[i] \text{ AND } Xn1[i]) \text{ OR } (Xn1[i] \text{ AND } Xn2[i]) \text{ OR } (Xn0[i] \text{ AND } Xn2[i])$

• $n=0 \dots N \qquad i=0 \dots 7$

※ AND, OR ARE BIT OPERATION

FIG. 26

CONFIGURATION OF INFORMATION BLOCK IN CASE WHERE
TRIPLE MODULAR REDUNDANCY METHOD IS PERFORMED

| TMDS Channel | 0 | | | | | | | | 1 | | | | | | | | 2 | | | | | | | |
|---|---|---|---|---|---|---|---|---|---|---|---|---|---|---|---|---|---|---|---|---|---|---|---|---|
| 3*Byte / Bit # | 7 | 6 | 5 | 4 | 3 | 2 | 1 | 0 | 7 | 6 | 5 | 4 | 3 | 2 | 1 | 0 | 7 | 6 | 5 | 4 | 3 | 2 | 1 | 0 |
| IBm0 | IB0 | | | | | | | | IB0 | | | | | | | | IB0 | | | | | | | |
| IBm1 | IB1 | | | | | | | | IB1 | | | | | | | | IB1 | | | | | | | |
| | | | | | | | | | | | | | | | | | | | | | | | | |

FIG. 27

TRANSMISSION EXAMPLE OF 3D PICTURE + ADDITIONAL PICTURE

100

200

DeMultiplex

DISC

VIDEO
STREAM

decode

3D PICTURE
L+R

INFORMATION
OF
SUBTITLES
MENU

RENDER

SUBTITLES·
MENU
PICTURE

SUPERIMPOSE
PICTURE

3D PICTURE
(WITH SUBTITLES·
MENU)
L+R

HDMI

3D
PICTURE
L+R

3D
PICTURE
DISPLAY

FIG. 28

TRANSMISSION EXAMPLE OF 3D PICTURE + ADDITIONAL PICTURE

FIG. 29

FIG. 30

FIG. 31

DEPTH INFORMATION

REFERENCE PLANE
(SCREEN SURFACE)

CAMERA POSITION

FIG. 32

FIG. 33

DIRECTION COORDINATES

HEIGHT OF PICTURE
H[DOT]

WIDTH OF PICTURE
W[DOT]

FIG. 34

FIG. 35

FIG. 36

FIG. 37

ST1 —⌐ INITIALIZATION

ST2 —⌐ MODELING

ST3 —⌐ SETTING VIEWPOINT·
LIGHT SOURCE

ST4 —⌐ RENDERING

ST5 —⌐ PICTURE OUTPUT

FIG. 38

SCREEN SIZE

SCREEN

VIEW
ANGLE 1

VIEW ANGLE 2

VIEW ANGLE

SIGHT
DISTANCE

VIEWER

DISTANCE BETWEEN BOTH EYES

FIG. 39

SHIFT DISPLAY

(a)

BLACK PICTURE

(b)

FIG. 40

RELATIONSHIP BETWEEN ACTIVE SPACE AND PICTURE PLANE

FIG. 41

EP 2 306 746 A2

OPERATION OF TRANSMISSION
AND PICTURE PLANE

FIG. 42

CONFIGURATION EXAMPLE OF PAYLOAD INFORMATION OF INFORMATION BLOCK

| Byte / Bit # | 7 | 6 | 5 | 4 | 3 | 2 | 1 | 0 |
|---|---|---|---|---|---|---|---|---|
| IB$_0$ | Resv. | Number of Picture Plane-1 | | | Resv. | | | |
| IB$_1$ | Alpha Blending value of Picture Plane #0 | | | | | | | |
| | | | | | | | | |
| IB$_{NP+1}$ | Picture Descriptor Count_H | | | | | | | |
| IB$_{NP+2}$ | Picture Descriptor Count_L | | | | | | | |
| IB$_{NP+3}$ | Picture Descriptor #0 | | | | | | | |
| | | | | | | | | |
| IB$_{NP+3+(PC-1)*12}$ | Picture Descriptor #PC | | | | | | | |
| | | | | | | | | |

FIG. 43

EP 2 306 746 A2

CONFIGURATION EXAMPLE OF PICTURE DESCRIPTOR

| Byte / Bit # | 7 | 6 | 5 | 4 | 3 | 2 | 1 | 0 |
|---|---|---|---|---|---|---|---|---|
| PD0 | Operation | | | Operand | | | | |
| PD1 | Picture Buffer Pointer H | | | | | | | |
| PD2 | Picture Buffer Pointer L | | | | | | | |
| PD3 | Picture Width H (Pixel) | | | | | | | |
| PD4 | Picture Width L (Pixel) | | | | | | | |
| PD5 | Picture Height H (Pixel) | | | | | | | |
| PD6 | Picture Height L (Pixel) | | | | | | | |
| PD7 | Resv. | Picture Plane #. | | | Resv. | Active Video Area #. | | |
| PD8 | Active Video Horizontal position H | | | | | | | |
| PD9 | Active Video Horizontal position L | | | | | | | |
| PD10 | Active Video Vertical position H | | | | | | | |
| PD11 | Active Video Vertical position L | | | | | | | |

FIG. 44

EP 2 306 746 A2

FIG. 45

Operation

| | Operation | Operand | FUNCTION |
|---|---|---|---|
| 0x0 | NOP | - | NO OPERATION |
| 0x1 | Clear Picture Plane | - | CLEAR PLANE |
| 0x2 | Clear Active Video Area | - | CLEAR ACTIVE VIDEO AREA |
| 0x3 | Put Picture Horizontally N+1 | N | ALIGN NUMBER N OF PICTURE IN HORIZONTAL DIRECTION |
| 0x4 | Put Picture Vertically N+1 | N | ALIGN NUMBER N OF PICTURE IN VERTICAL DIRECTION |
| 0x5 | Put Picture Magnification N+1 | N | MAGNIFY PICTURE BY N TIMES |
| 0x6 | Reserved | Reserved | — |
| 0x7 | Reserved | Reserved | — |

FIG. 46

Picture Descriptor : NOP

| Byte / Bit # | 7 | 6 | 5 | 4 | 3 | 2 | 1 | 0 |
|---|---|---|---|---|---|---|---|---|
| PD$_0$ | 0x0 | | | Resv. | | | | |
| PD$_1$ | Resv. | | | | | | | |
| PD$_2$ | Resv. | | | | | | | |
| PD$_3$ | Resv. | | | | | | | |
| PD$_4$ | Resv. | | | | | | | |
| PD$_5$ | Resv. | | | | | | | |
| PD$_6$ | Resv. | | | | | | | |
| PD$_7$ | Resv. | Resv. | | Resv. | | Resv. | | |
| PD$_8$ | Resv. | | | | | | | |
| PD$_9$ | Resv. | | | | | | | |
| PD$_{10}$ | Resv. | | | | | | | |
| PD$_{11}$ | Resv. | | | | | | | |

FIG. 47

EP 2 306 746 A2

Picture Descriptor:Clear Picture Plane

| Byte / Bit # | 7 | 6 | 5 | 4 | 3 | 2 | 1 | 0 |
|---|---|---|---|---|---|---|---|---|
| PD$_0$ | 0x1 | | | Resv. | | | | |
| PD$_1$ | Resv. | | | | | | | |
| PD$_2$ | Resv. | | | | | | | |
| PD$_3$ | Resv. | | | | | | | |
| PD$_4$ | Resv. | | | | | | | |
| PD$_5$ | Resv. | | | | | | | |
| PD$_6$ | Resv. | | | | | | | |
| PD$_7$ | Resv. | Picture Plane #. | | | Resv. | Resv. | | |
| PD$_8$ | Resv. | | | | | | | |
| PD$_9$ | Resv. | | | | | | | |
| PD$_{10}$ | Resv. | | | | | | | |
| PD$_{11}$ | Resv. | | | | | | | |

FIG. 48

EP 2 306 746 A2

Picture Descriptor:Clear Active Video Area

| Byte / Bit # | 7 | 6 | 5 | 4 | 3 | 2 | 1 | 0 |
|---|---|---|---|---|---|---|---|---|
| PD0 | 0x2 | | | Resv. | | | | |
| PD1 | Resv. | | | | | | | |
| PD2 | Resv. | | | | | | | |
| PD3 | Resv. | | | | | | | |
| PD4 | Resv. | | | | | | | |
| PD5 | Resv. | | | | | | | |
| PD6 | Resv. | | | | | | | |
| PD7 | Resv. | Picture Plane #. | | | Resv. | Active Video Area #. | | |
| PD8 | Resv. | | | | | | | |
| PD9 | Resv. | | | | | | | |
| PD10 | Resv. | | | | | | | |
| PD11 | Resv. | | | | | | | |

FIG. 49

EP 2 306 746 A2

Picture Descriptor: Put Picture Horizontally N+1

| Byte / Bit # | 7 | 6 | 5 | 4 | 3 | 2 | 1 | 0 |
|---|---|---|---|---|---|---|---|---|
| PD0 | 0x3 | | | N | | | | |
| PD1 | Picture Buffer Pointer H | | | | | | | |
| PD2 | Picture Buffer Pointer L | | | | | | | |
| PD3 | Picture Width H (Pixel) | | | | | | | |
| PD4 | Picture Width L (Pixel) | | | | | | | |
| PD5 | Picture Height H (Pixel) | | | | | | | |
| PD6 | Picture Height L (Pixel) | | | | | | | |
| PD7 | Resv. | Picture Plane #. | | | Resv. | Active Video Area #. | | |
| PD8 | Active Video Horizontal position H | | | | | | | |
| PD9 | Active Video Horizontal position L | | | | | | | |
| PD10 | Active Video Vertical position H | | | | | | | |
| PD11 | Active Video Vertical position L | | | | | | | |

FIG. 50

EP 2 306 746 A2

Operation(Put Picture Horizontally N+1)

Picture Descriptor

Active space

Picture Buffer Pointer

PICTURE DATA

Picture Plane #m

Active Video Area #n

Active Video Area #n+1

Active Video Horizontal Position

Active Video Vertical Position

N=1

Picture Height

Picture Width

FIG. 51

Picture Descriptor: Put Picture Vertically N+1

| Byte / Bit # | 7 | 6 | 5 | 4 | 3 | 2 | 1 | 0 |
|---|---|---|---|---|---|---|---|---|
| PD0 | | 0x4 | | | | N | | |
| PD1 | Picture Buffer Pointer H | | | | | | | |
| PD2 | Picture Buffer Pointer L | | | | | | | |
| PD3 | Picture Width H (Pixel) | | | | | | | |
| PD4 | Picture Width L (Pixel) | | | | | | | |
| PD5 | Picture Height H (Pixel) | | | | | | | |
| PD6 | Picture Height L (Pixel) | | | | | | | |
| PD7 | Resv. | Picture Plane #. | | | Resv. | Active Video Area #. | | |
| PD8 | Active Video Horizontal position H | | | | | | | |
| PD9 | Active Video Horizontal position L | | | | | | | |
| PD10 | Active Video Vertical position H | | | | | | | |
| PD11 | Active Video Vertical position L | | | | | | | |

FIG. 52

EP 2 306 746 A2

Operation (Put Picture Vertically N+1)

Picture Plane #m

Active Video Area #n

Active Video Area #n+1

Active Video Horizontal Position

Picture Height

N=2

Picture Width

Active Video Vertical Position

Picture Descriptor

Picture Buffer Pointer

PICTURE DATA

Active space

FIG. 53

82

Picture Descriptor: Put Picture Magnification N+1

| Byte / Bit # | 7 | 6 | 5 | 4 | 3 | 2 | 1 | 0 |
|---|---|---|---|---|---|---|---|---|
| PD0 | 0x5 | | | N | | | | |
| PD1 | Picture Buffer Pointer H | | | | | | | |
| PD2 | Picture Buffer Pointer L | | | | | | | |
| PD3 | Picture Width H (Pixel) | | | | | | | |
| PD4 | Picture Width L (Pixel) | | | | | | | |
| PD5 | Picture Height H (Pixel) | | | | | | | |
| PD6 | Picture Height L (Pixel) | | | | | | | |
| PD7 | Resv. | Picture Plane #. | | | Resv. | Active Video Area #. | | |
| PD8 | Active Video Horizontal position H | | | | | | | |
| PD9 | Active Video Horizontal position L | | | | | | | |
| PD10 | Active Video Vertical position H | | | | | | | |
| PD11 | Active Video Vertical position L | | | | | | | |

FIG. 54

EP 2 306 746 A2

Operation (Put Picture Magnification N+1)

Picture Plane #m

Active Video Area #n

Picture Descriptor

Active space

Picture Buffer Pointer

PICTURE DATA

Active Video Area #n+1

Active Video Horizontal Position

Active Video Vertical Position

N=1

Picture Height

Picture Width

FIG. 55

EP 2 306 746 A2

EDID DATA CONFIGURATION OF HDMI

| | | |
|---|---|---|
| E-EDID1.3<br>Basic Structure | 00h | |
| Preferred timing | | |
| 2nd timing | | BASIC BLOCK |
| Monitor NAME | | |
| Monitor Range Limits | 7Fh | |
| Short Video Descriptor | 80h | |
| Short Audio Descriptor | | |
| Speaker Allocation | | |
| Vender Specific | | EXTENSION BLOCK |
| 3rd timing | | |
| 4th timing | | |
| ⋮ | FFh | |

FIG. 56

DATA CONFIGURATION EXAMPLE OF VENDER SPECIFIC AREA

| Byte# | 7 | 6 | 5 | 4 | 3 | 2 | 1 | 0 |
|---|---|---|---|---|---|---|---|---|
| 0 | Vendor-specific tag code (=3) | | | | Length (=N) | | | |
| 1 | 24-bit IEEE Registration Identifier (0x000C03) (least significant byte first) | | | | | | | |
| 2 | | | | | | | | |
| 3 | | | | | | | | |
| 4 | A | | | | B | | | |
| 5 | C | | | | D | | | |
| 6 | Support s _AI | DC_ 48bit | DC_ 36bit | DC_ 30bit | DC_ Y444 | Rsvd (0) | Rsvd (0) | DVI_ Dual |
| 7 | Max_TMDS_Clock | | | | | | | |
| 8 | Latency _ Fields_ Present | I_Laten cy_ Fields_ Present | OptData _FLG | Rsvd (0) | Rsvd (0) | Rsvd (0) | Rsvd (0) | Rsvd (0) |
| 9 | Video_Latency | | | | | | | |
| 10 | Audio_Latency | | | | | | | |
| 11 | Interlaced_Video_Latency | | | | | | | |
| 12 | Iterlaced_Audio_Latency | | | | | | | |
| ⋮ | | | | | | | | |
| n | Reserved (0) | | Coding1 | Coding0 | Reserved (0) | | Type1 | Type0 |
| n+1 | Reserved (0) | | | | Number of Picture Plane | | | |
| n+2 ..N | Reserved (0) | | | | | | | |

FIG. 57

SIGNAL TRANSMITTED TO HDMI

Vact_video

Vact_space

Vact_video

Hactive

Hblank

Vblank

Vactive

Active video

L

Active space

Active video

R

PICTURE DATA ON FRAME MEMORY

Hblank

Hactive

L

ADDITIONAL INFORMATION

R

Vactive

FIG. 58

**EP 2 306 746 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009226538 A